Europäisches Patentamt

European Patent Office

Office européen des brevets

(11) Publication number: 0 318 164
A2

# EUROPEAN PATENT APPLICATION

(21) Application number: 88310232.9

(51) Int. Cl.⁴: **B29D 11/00 , G02C 7/02**

(22) Date of filing: **31.10.88**

Claims 12, 18, 21, 22, 25, 30, 31, 37, 40, 44, 47, 49, 54, 58 to 62, 67. 68 and 72 are deemed to be abandoned due to non-payment of the claims fees (Rule 31 (2) EPC).

(30) Priority: **29.10.87 US 113965**
**29.10.87 US 114312**
**29.10.87 US 114364**

(43) Date of publication of application:
**31.05.89 Bulletin 89/22**

(84) Designated Contracting States:
**DE FR GB**

(71) Applicant: **TECHNA VISION, INC.**
**11489 Woodside Avenue**
**Santee California 92017(US)**

(72) Inventor: **Kachel, Theodore V.**
**3 Hampton Road**
**Purchase New York 10577(US)**
Inventor: **Rydeen, Clarence F.**
**25333 Poderio Drive**
**Ramona California 92065(US)**
Inventor: **Millar, Robert W.**
**1122 Diamond Street**
**San Diego California 92109(US)**
Inventor: **Szuberla, Casimar**
**11091 Morning Creek Drive N.**
**San Diego California 92128(US)**
Inventor: **Dawson, Ralph C.**
**3101 Azahar Street**
**Carlsbad California 92008(US)**
Inventor: **Griffith, Robert L.**
**749 Marcos Vista Lane**
**Vista California 92083(US)**
Inventor: **Weitzel, William H.**
**8948 Lakeview Road**
**Lakeside California 92040(US)**
Inventor: **Congleton, James T.**
**5060 Ducos Place**
**San Diego California 92124(US)**
Inventor: **Benz, John A.**
**12710 Lakeshore Drive**
**Lakeside California 92040(US)**
Inventor: **Duncan, Calvin P.**
**1537 Sweetwater Lane**
**Spring·Valley California 92077(US)**

EP 0 318 164 A2

Xerox Copy Centre

(74) Representative: **Williams, Trevor John et al**
**J.A. KEMP & CO. 14 South Square Gray's Inn**
**London WC1R 5EU(GB)**

(54) **Lens forming system.**

(57) An apparatus and method for making spectacle lenses, and lenses which can be produced thereby with particular front and back coatings. The apparatus provides a clean, efficient, and relatively automated means by which the lenses can be cast from a polymer and provided with suitable front and/or back abrasion resistant coatings, if desired.

FIG. 1.

## Lens forming System

### Field of the Invention:

This invention relates to an apparatus for casting a finished spectacle lens of a specified ophthalmic lens prescription, and particularly, relates to such an apparatus which is compact, being able to fit into a relatively small space such as a room in a doctor's office.

### Background Discussion:

The majority of spectacle lenses are made from a polymeric resin material which on heat curing goes from a liquid to a solid state. The lens is formed by selecting two mold elements and assembling them in a gasket which holds them in the desired spaced-apart relationship. The ophthalmic surfaces of the molds are generally parallel to each other and the center of the mold surfaces through which the optical axis of the molds passes are aligned with each other so that the optical axes coincide. The liquid polymeric resin material is placed between the two ophthalmic surfaces of the molds and allowed to harden, whereupon the molds and gaskets are disassembled.

One problem with this procedure is that it is very difficult to cast a finished spectacle lens of a specified ophthalmic lens prescription. The conventional practice is to make semi-finished lenses on a large scale using mass production manufacturing methods. The optometrist who is prescribing the spectacle lenses for a patient then orders the desired lens prescriptions from a central laboratory which has a large inventory of semi-finished lenses. The central laboratory grinds the lens to the prescription ordered by the optometrist.

Recently, large chains of ophthalmic stores have set up centers where patients can have their prescriptions filled within a few hours or at the most overnight. These large chains are having an adverse impact on small optometrists who generally prescribe from about ten to twenty pairs of glasses a day. These small optometrists must order the lenses from a central laboratory which may take several weeks to supply the lenses. The smaller optometrists would like to have the capability of making lenses within a few hours or at the longest overnight, but they do not have the equipment or the space available to manufacture lenses at their place of business. The present invention is designed to satisfy this need of small optometrists who would like to have the capability of manufacturing lenses at their business locations rather than ordering from a central laboratory.

### SUMMARY OF THE INVENTION

The present invention is an apparatus for casting finished spectacle lenses of a specified ophthalmic lens prescription. It is capable of fitting into a relatively small space, for example, a room having dimensions of from about 10 to 14 feet in width to about 10 to 14 feet in depth and a standard 8 foot ceiling. This apparatus provides a cast lens which does not need to be ground, provided the prescription comes within the range of molds provided with the apparatus. Up to about twenty-four pairs of glasses, or forty-eight lenses, can be made by this apparatus within a 24 hour period or even shorter. Not only single vision, but bifocals may be made using this apparatus, and the lenses may be clear or tinted, and their surfaces will be scratch resistant. This apparatus, in effect, is a miniature factory and provides a computerized, integrated manufacturing system for the optometrist office. Inventory of raw materials, work in process, process control, inventory control, remote order entry, project management, scrap materials, etc. may all be accounted for in the course of making lenses so that the minimum amount of operator skill is required. This enables the optometrist to employ a relatively low level skilled technician to make the lenses with minimum supervision.

There are several features of this invention which contribute to the above-noted advantages, no single one of which is solely responsible for these desirable attributes. Without limiting the scope of this invention, as expressed by the claims, its more prominent features will now be briefly discussed. After considering this discussion, and particularly after reading the section of this application entitled DETAILED DESCRIPTION OF THE PREFERRED EMBODIMENT, one will understand how the features of this invention provide a compact, easy to operate lens casting apparatus.

One feature of the present invention is the use of a selected gasket with selected moulds that enable the molds to be inserted into the gasket by a mold alignment and assembly fixture which will properly align the molds within the gaskets. In order to cast a finished spectacle lens the front and back molds must be spaced apart a predetermined distance as called for by each individual prescription. Moreover, the front and back molds must be aligned with each other and properly oriented with respect to each other in reference to an index. Instead of relying on the operator to properly align the molds within the gasket, this is done by means which insert an identified pair of mold elements into a selected gasket to form an assembly of the gasket and mold elements.

The second feature of this invention is that several different types of gaskets are used depending on the prescription to be filled. Approximately eighteen different size gaskets are used and these different gaskets will provide eighteen different spaces between the front and back mold elements. All gaskets of the same size are stacked together in "Dixie cup" like fashion for easy access by the operator. Each stack of gaskets of the same size will have a signal means associated with it that is turned on by the apparatus to indicate to the operator that a gasket from this group should be used with the prescription being filled. This minimizes operator error in selecting the gaskets. The computer also performs a check to verify correct gasket selection.

The third feature of this invention is the use of a storage unit for the mold elements which carries several hundred molds. The prescription will be inputted into the apparatus, either remotely or by the operator. The computer then identifies which mold elements in the storage unit should be used to fill the prescription being processed. Preferably the mold storage unit will have means for advancing individual mold elements to a delivery station. The delivery station has a plurality of mold docks aligned in a row with each dock having a signal element that is activated to indicate to the operator that the desired mold is at the dock and that this mold is the proper one to be used to fill the prescription being processed. Each individual mold is preferably stored in an individual package which protects the mold from damage as the mold is moved within the mold storage unit as different molds are forwarded to the delivery station.

The fourth feature of this invention is the use of a coater which applies a release agent to the mold elements prior to assembling the mold elements in the gasket. This coater has a carriage which moves between a forward home position where the coating material is applied to the ophthalmic surface of the mold and heated to dry this material and a rear position where the coated ophthalmic surfaces of the molds are subjected to ultraviolet radiation. The carriage has mounted thereon a plurality of vacuum chucks which hold the molds and spin when the coating is applied to the ophthalmic surface of the mold. This spinning is desired to uniformly coat the ophthalmic surface. A removable tray is employed that is carried by the carriage and through which the chucks extend. This tray will catch any coating that flies off the surface of the mold while it is spinning.

The fifth feature of this invention is the use of machine readable markings, on the gaskets and/or molds, to identify the gasket and mold elements being employed in processing any given prescription. These machine readable markings may simply be a bar code which is read by a conventional wand type reader that will take the information gathered when the operator scans the bar codes and forwards it to the computer controlling the operation of the apparatus. This bar code on the gasket is used to identify the particular job or prescription being filled. The computer keeps track of the lens being made by reference to the machine readable marking on the gasket and/or mold.

The sixth feature of this invention is the use of special molds and gaskets to facilitate assembly of the molds in the gaskets and alignment and orientation of the molds with respect to each other. The gasket is of the type generally described in U. S. Patent No. 4,693,446 assigned to the assignee of this application, but has been modified so that the mold elements are held firmly in position within the gasket as opposed to using clamps to hold the gaskets. These gaskets are generally annular members which have an annular shoulder on the inside of the gasket on which the two mold elements rest. Adjacent this should are two annular recesses, one on each side of the shoulder, with a ramp section leading up to each recess. This ramp section is deformable. A mold element is inserted through each open end of the gasket, depressing the ramp section and snapping into the recess when it is adjacent the shoulder. The ramp springs back into its normal position to hold the mold element in position. Thus, the mold elements are spaced apart and held at the desired distance away from each other during filling where the liquid polymeric material is injected through a port on the side of the gasket. There are two ports employed, and they are each disposed within protrusions extending outwardly from the side of the gasket. These two protrusions are 180 degrees offset with respect to each other and they are used to orient the gasket in a start position so that each gasket is seated in exactly the same start position within the apparatus. The mold elements have a generally dish-like configuration with the ophthalmic surface having a curvature meeting the requirements of a lens prescription and a generally flat perimeter surrounding the ophthalmic surface. These molds are characterized by having a pair of index members disposed on the rim, each index member lying on the same line but 180 degrees opposite the other.

The seventh feature of this invention is the processing center which includes the mold alignment and assembly fixture, the resin storage and dispensing unit, and the curing ovens. The mold alignment and assembly fixture is adapted to automatically assemble the selected molds within the selected gasket for filling a particular prescription, orient the molds relative to one another, and then forward the assembly of gasket and mold elements to the resin storage and dispensing unit. The resin storage and dispensing unit includes a refrigerator which stores a supply of different colored resins which include a catalyst. The resin is preferably the standard polymeric material allyl diglycol carbonate, commonly designated as CR39. This resin is partially precured and includes the catalyst. Consequently, it must be maintained at a temperature below 16 degrees fahrenheit. Within the refrigerator is a portion of the dispensing unit, with the dispensing head being located outside the refrigerator.

The eighth feature of this invention is the use of a cannister to hold the resin which has a unique entry code thereon which is machine readable and an empty indicator. The computer examines the entry code and will place a hold on the operation of the apparatus if a cannister is used which is not correctly encoded. This is an important feature to prevent resin being used which does not have the proper formulation. A holder is used to hold six cannisters and has tubes loading from the cannisters and passing through to a dispenser head, and connected separately to six nozzles. Depending on the prescription, pressure is applied to one of the cannisters to force resin from this cannister through the tube to one nozzle in the dispensing head. The dispensing head is rotatably mounted to move a selected one of the nozzles into alignment with the fill port in the gasket, whereupon the assembly of gasket and molds is tilted to insert the nozzle into the fill port. Tilting is desirable to avoid air bubbles being trapped in the resin. A 15 degree tilt is adequate. Simultaneously, while resin is being injected through the fill port into the space between the mold elements, a vacuum is applied to the other port of the gasket. This vacuum is used to sense when the space between the molds is filled with resin. When the proper amount of resin has been dispensed to fill the space between the molds, a signal is generated to discontinue the dispensing of resin. The gasket assembly is then moved to an accumulator station and then placed in an oven and heat cured.

Embodiments of the invention are further described below. These embodiments relate to the making of ophthalmic lenses without grinding. After curing, these lenses are trimmed to fit essentially any desired frame. The apparatus illustrated in the preferred embodiment requires minimal operator interaction and employs a personal computer for control of the operations of the apparatus and for information storage and retrival.

The present invention further provides a gasket which can retain two molds therein in spaced apart, seated positions, without the need for external spring clips or similar means to apply pressure continuously during curing. Such gasket also provides suitable means whereby resin can be readily introduced into the cavity between molds seated therein, in a manner which readily lends itself to automation. A mold is also provided for use in a gasket such as the foregoing type, particularly when a prescription calls for a high cylinder. In such case, this mold is designed such that the useful optical surface area of a cast lens produced using it, is not unduly reduced by the presence of such high cylinder, and without upstanding surfaces against which shrinking resin can readily grip to hinder separation of the mold and cast lens. The present invention also provides a form assembly apparatus which avoids tedious and often messy, manual assembly of the gasket and molds, and which can automatically and accurately adjust relative angular rotation of the front and back molds and fill the assembled form with resin, all with minimal operator intervention.

The gasket then, has a resilient body with two opposed open ends, preferably with an inside surface of substantially circular radial cross-section along its axis, and two inside annular slots, spaced apart by an annular, compressible inwardly expanding lip. By the lip being "compressible", is meant that it is sufficiently compressible at the temperature at which the resin is to be cured, so as to allow the molds to move toward one another under the urging force applied by the gasket body, a sufficient distance to compensate for the resin shrinkage. Inlet and outlet conduits communicate between positions on the outside of the body, and respective inlet and outlet openings in the inside surface between the slots. With the foregoing construction, the molds can be retained in position in their corresponding slots, and resin injected through one conduit and into the resulting cavity, while air is allowed to leave through the other (preferably assisted by a vacuum applied thereto). To facilitate automated filling of the foregoing mold, preferably the inlet and outlet conduits communicate with inlet and outlet ports of the outside of the body, which are disposed in respective, axially facing ends of two radially opposed, axially extending shoulders.

Molds which are preferably used in the above gasket, are generally circular in shape with an annular flange. One mold in particular, is configured to have a high cylinder molding surface (that is, the surface

5

which will define a surface of a spectacle lens), while maintaining a high useful molding surface area, and discouraging resin from adhering thereto as a result of resin shrinkage during curing.

The form assembly apparatus has first and second mold retainers, which can releasably retain respective molds, as well as a gasket holder which can releasably retain a gasket therein. One of the first mold retainer and gasket holder (preferably the latter) is reciprocable with respect to the other when the two are axially aligned, such that the first mold retainer can insert the first mold retained thereon into its seated position in the gasket to produce a subassembly. One of the second mold retainer and a subassembly so produced is also reciprocable with respect to the other when they are axially aligned, such that a second mold retained on the second mold retainer, can be inserted into its seated position in the gasket to produce the assembled form. A carriage is connected in order to align the first mold retainer with the second gasket molder, and align the subassembly so produced with a second molder retainer.

Preferably the apparatus additionally comprises an indexer which can establish an initial relative rotational angle of the molds, and rotate one with respect to the other to adjust such angle, prior to complete assembly of the form. Further preferably, the apparatus includes a form filling station at which the assembled form can be filled with resin in a manner which assists in removal of air from the form cavity.

A method of filling an assembled form, such as the type described above, is also provided which includes simultaneously injecting the resin at the resin injecting port, and applying a vacuum at the vacuum injection port, to facilitate air removal from the form.

The present invention additionally provides a spin coater suitable for spin coating a spectacle lens in a relatively convenient, efficient manner with relatively little operator intervention. The spin coater uses a drawer mounted within a housing, and slidable between distinct front and rear chambers thereof. The drawer carries at least one, and preferably a plurality, of spin coater chucks of the present invention rotatably mounted thereon. This arrangement allows molds to be seated on the chucks when the drawer is in the front position, and spin coated, and allows them to be exposed to actinic light when the drawer is in the rear position. In order to control the exposure time of molds to the actinic light, while avoiding on/off cycling the actinic light source each time the drawer is moved between the front and rear position, a shutter is disposed between the actinic light fixture and the rear position of the drawer. The shutter is preferably operated by slidable movement of the drawer.

The spin coater chuck of the present invention is arranged to center the mold within a seat on the chuck defined by a ledge and adjacent lip, thus obviating the need for inaccurate centering by eye. Of course, although the mold is disposed centrally on the seat, this does not necessarily mean that the mold is centered about an axis of rotation of a chuck, although this will typically be the case, as in some cases it may be desirable to spin coat the mold by spinning it in an off-centered position about an axis of rotation of the chuck. To retail the mold in the seated position on the chuck, a lengthwise resilient vacuum conduit, preferably in the form of a bellows, is provided. This conduit has an open end which can sealingly engage against a seated spectacle lens molds and urge it toward the ledge so a to inhibit unseating of the mold during spinning the chuck. This resilient conduit is preferably in the form of a bellows.

The present invention also provides a method for preparing a spectacle lens having a first surface, typically the front surface, with a coating which is relatively highly abrasion resistant, and a second surface which also has a abrasion resistent coating but with a degree of abrasion resistance substantially sell than that of the first surface, such that the second surface remains "tintable" while the first surface is not. By the word "tintable" used throughout this application in reference to a lens coating, is meant that the coating can be tinted by exposure to an aqueous solution containing 5% (by weight) in total of one or more azo anthraquinone water soluble pigments such that the solution will produce a red, green, blue or grey tint, in combination with 0.2% (by weight) of a surfactant, for ten minutes at 200 F, such that there is at least a decrease of 5% in total visible light transmission through the coated lens.

The coated lens is produced by the method of the present invention in such a manner that both front and back coatings have a high degree of adhesion to the lens. This preferably is accomplished by using coating compositions with different "solids" content (i.e., the concentration of the polymerizeable compound in the composition is different) for the front and back molds, and only partially polymerizing the coatings. The coatings are polymerized sufficiently such that they do not dissolve in lens resin while the resin is being cured, but not overly polymerized, such that the coatings can be partially absorbed on the resin and cross-linked therewith, during resin curing. Over polymerization would result in poor adhesion of the final coating (that is, after post-curing step) to the cured lens resin. By "poor adhesion" is meant the resulting coating would have an adhesion of less than or equal to Class 1B as determined by American Society of Testing Materials ("ATSM") adhesion tape test D 3359-83, Method B. Resin is then introduced to the form and cured, followed by separation of the resulting lens from the form, additional polymerization of the coatings, and by tinting if desired.

A spectacle lens produced by such a method is also disclosed. The coatings of such a lens will be "partially absorbed" on the cured lens resin and cross-linked therewith, unlike coatings which may be applied after the lens resin has cured and would typically only be absorbed on the surface of such cured lens resin.

## BRIEF DESCRIPTION OF THE DRAWINGS

The drawings, wherein like numerals indicate like parts, depicts this invention, in which:

FIG. 1 is a perspective view of the lens casting apparatus of this invention.

FIG. 2 is a plan view, with sections broken away, of the mold package with a mold contained therein.

FIG. 3 is a cross-sectional view taken along line 3-3 of Fig. 2.

FIG. 4 is a perspective view of the mold coater.

FIG. 5 is a perspective view of a disposable tray used with the hold coater.

FIG. 6 is a perspective view showing a mold being placed on the vacuum chuck of the mold coater.

FIG. 7 is a cross-sectional view taken along line 7-7 of Fig. 9.

FIG. 8 is a side elevational view of the tray shown in Fig. 5, with sections broken away.

FIG. 9 is a cross-sectional view showing the tray placed in the mold coater.

FIG. 10 is a cross-sectional view of an unloaded gasket used to hold molds.

FIG. 11 is a cross-sectional view showing the gasket of Fig. 10 loaded with both the front and back molds.

FIG. 12 is a perspective view of the mold assembly and alignment fixture.

FIG. 13 is a perspective view of the resin dispenser head.

FIG. 14 is a perspective view of the resin storage and dispensing unit.

FIG. 15 is a side elevational view, partially in section, showing a canister used to hold resin.

FIG. 16 is a perspective view of the canisters in position and the resin storage and dispensing unit.

FIG. 17 is a process flow diagram.

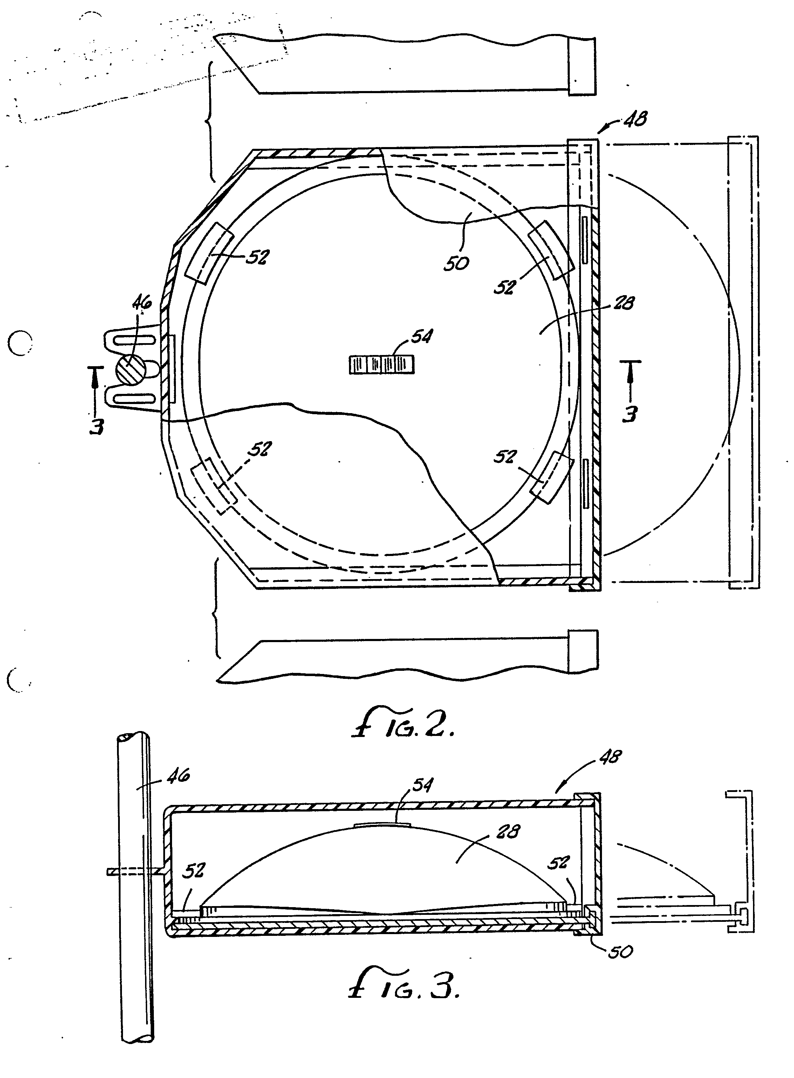

Figure 2A is a perspective, exploded view showing a gasket of the present invention with two mating molds ready for insertion and subsequent seating therein;

Figure 3A is a cross-section through the gasket of Figure 2A, prior to seating of the molds;

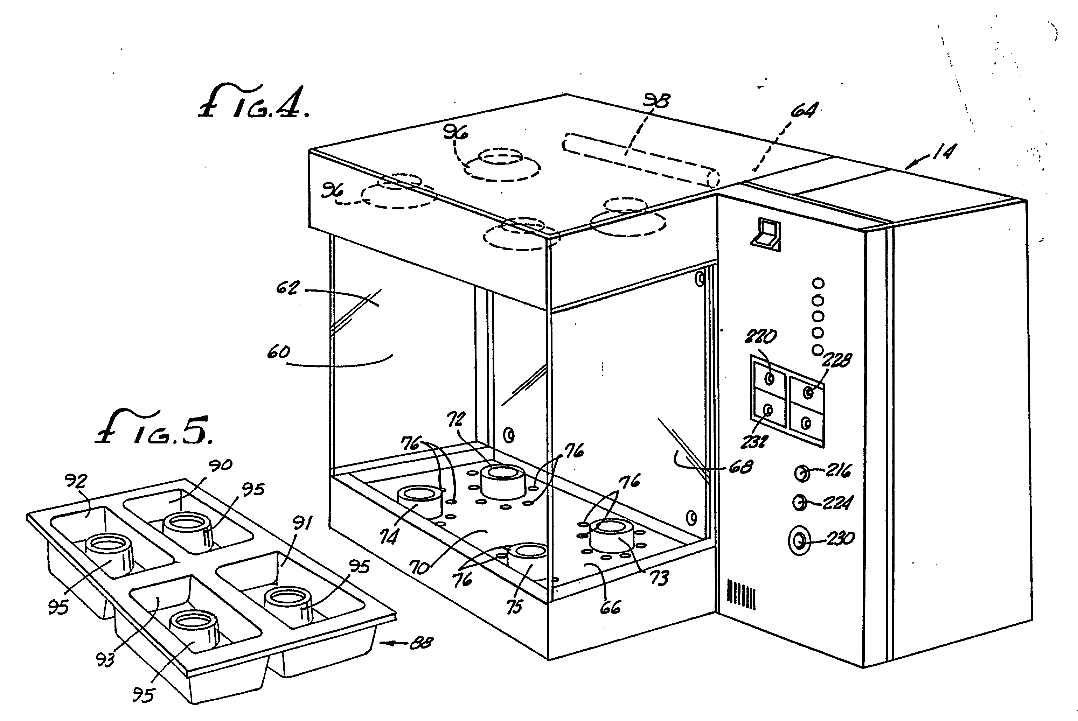

Figure 4A is a view similar to Figure 3A, except with the molds seated therein;

Figure 4AA is for enlarged cross-section of a portion of the gasket of Figures 3A and 4A;

Figure 5A is a plan view of a back mold of the present invention;

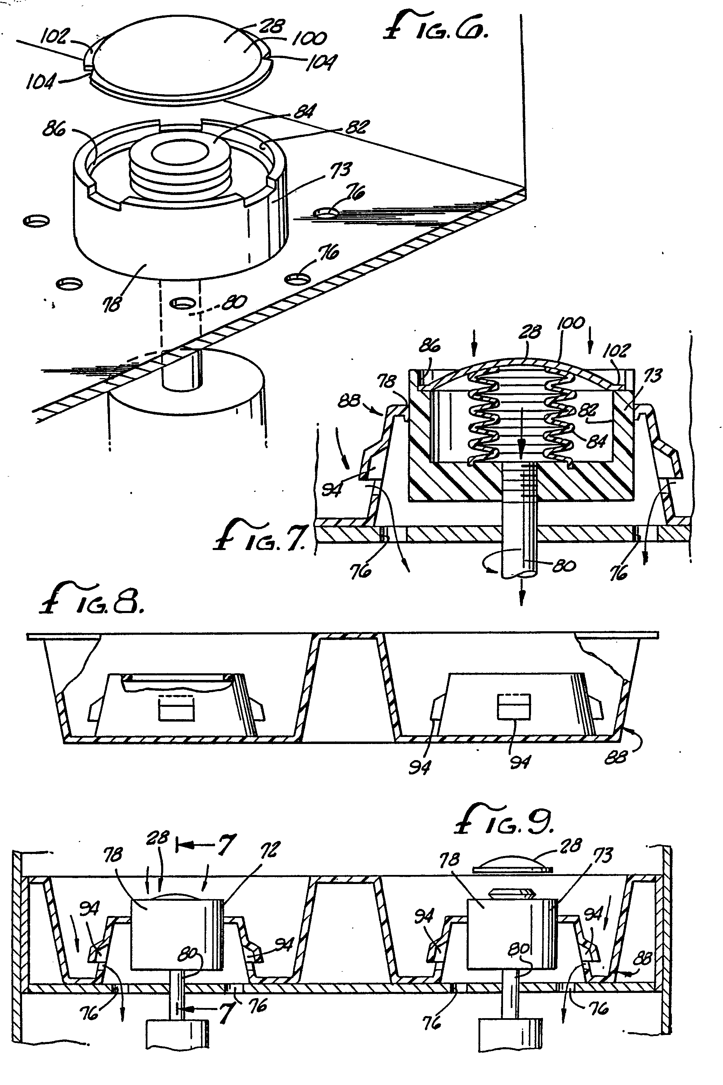

Figure 6A is a cross-section along the line 6-6 of Figure 5A;

Figure 7A is a cross-section along the line 7-7 of Figure 6A;

Figures 7AA, 7AB and 7AC are views similar to Figures 5A, 6A and 7A, respectively, except of a lenticular back mold of the present invention;

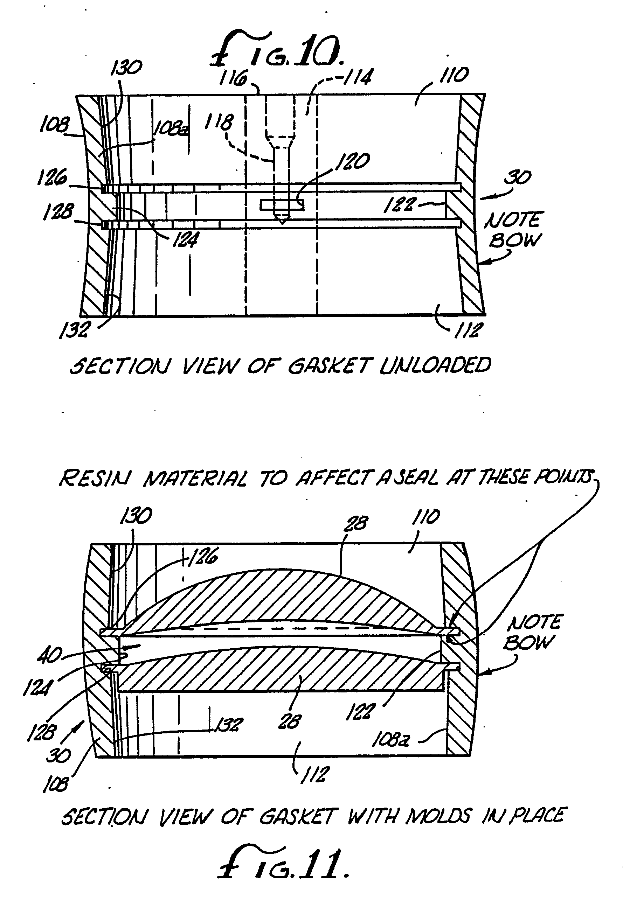

Figure 8A is a perspective view of a spectacle lens form assembly apparatus of the present invention;

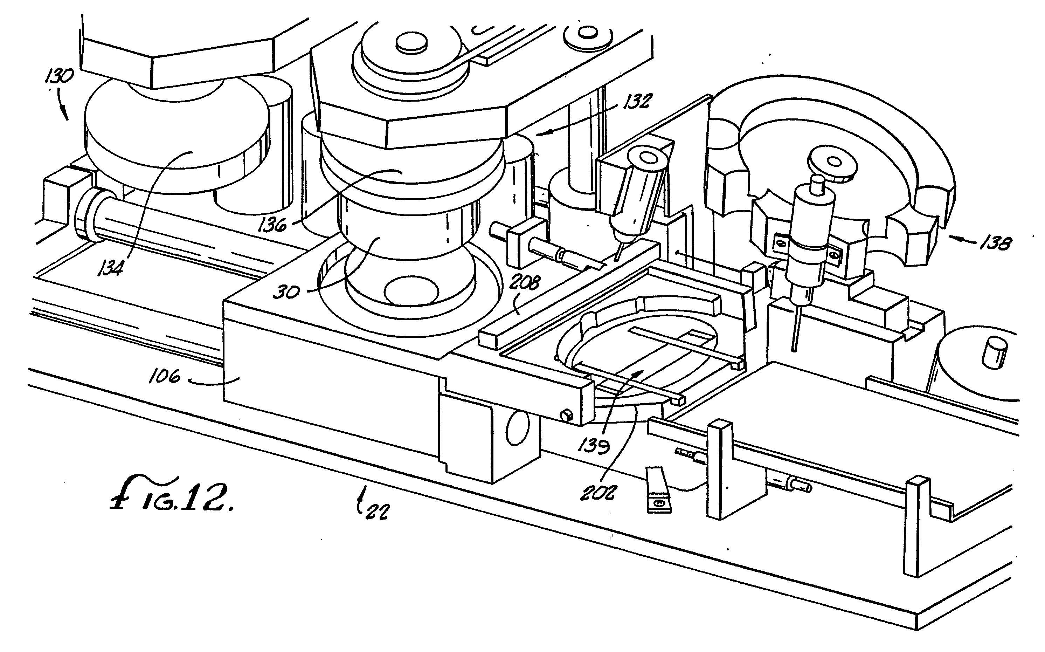

Figures 9A and 10A are cross-sections along the line 9-9 of Figure 8A, showing the components in different operative position;

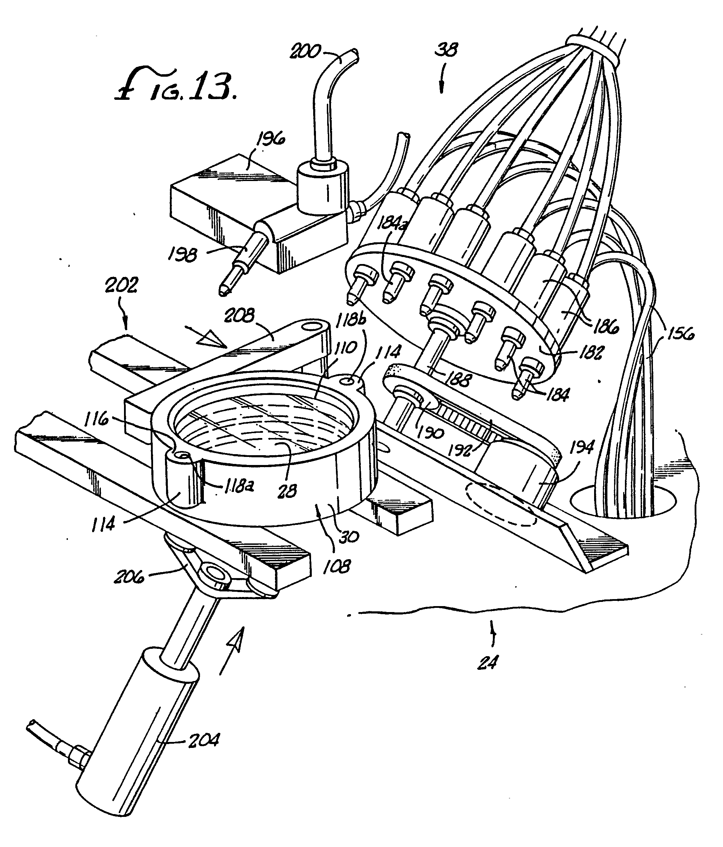

Figures 11A-12A are cross-sections along the line 11-11 of Figure 8A, showing components of the apparatus in different operative positions;

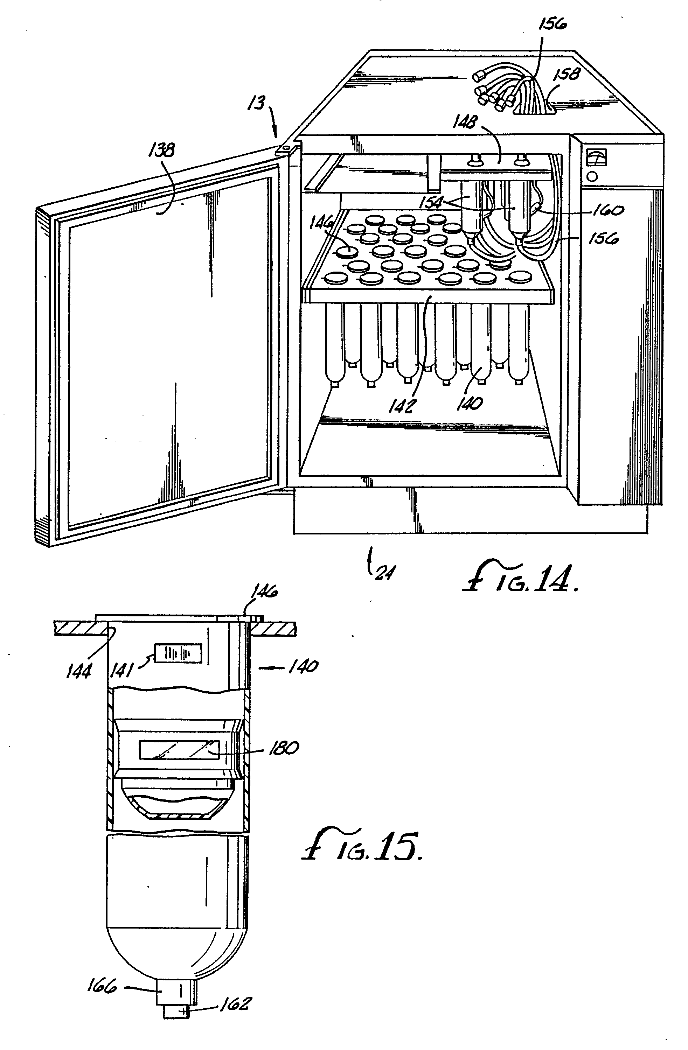

Figure 13A is another cross-section showing components of the apparatus in different operative positions;

Figure 14A is an elevation view of a portion of the apparatus of Figure 8A;

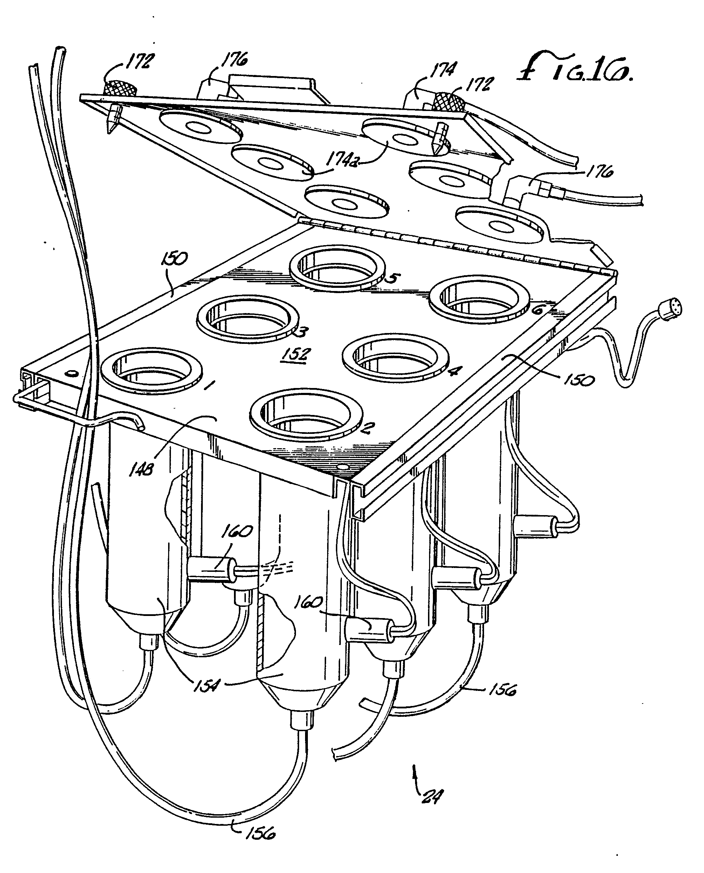

Figure 15A is a cross-section of a portion of Figure 14A.

Figure 16A is a plan view of a portion of the apparatus of Figure 8A;

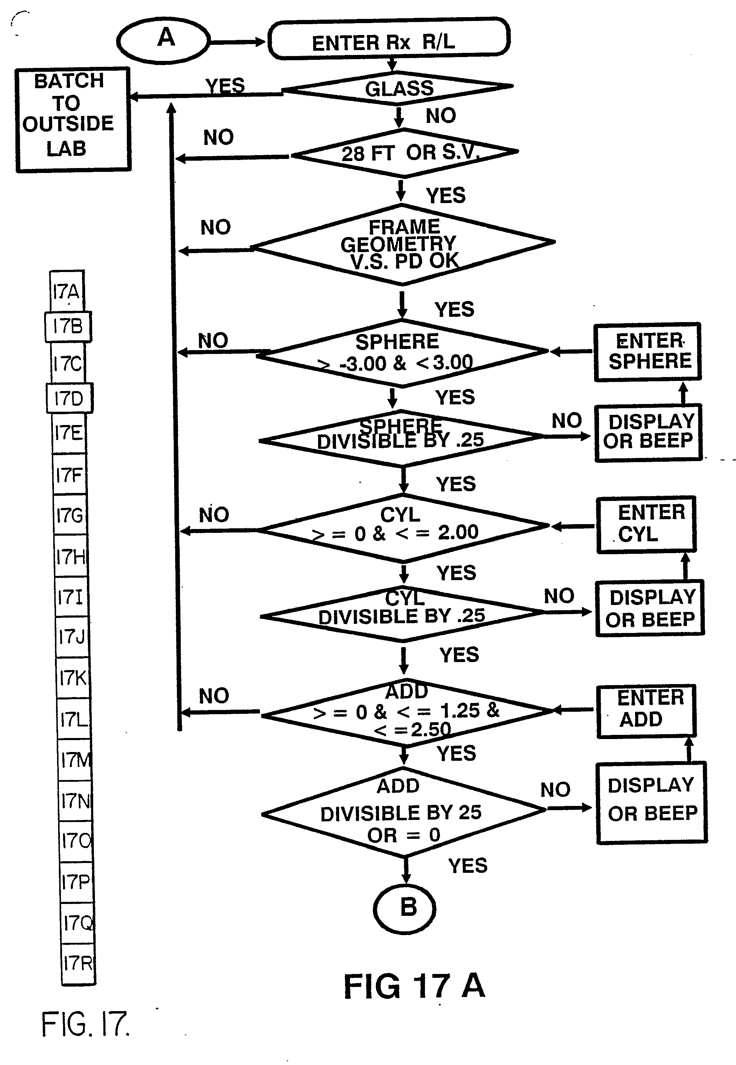

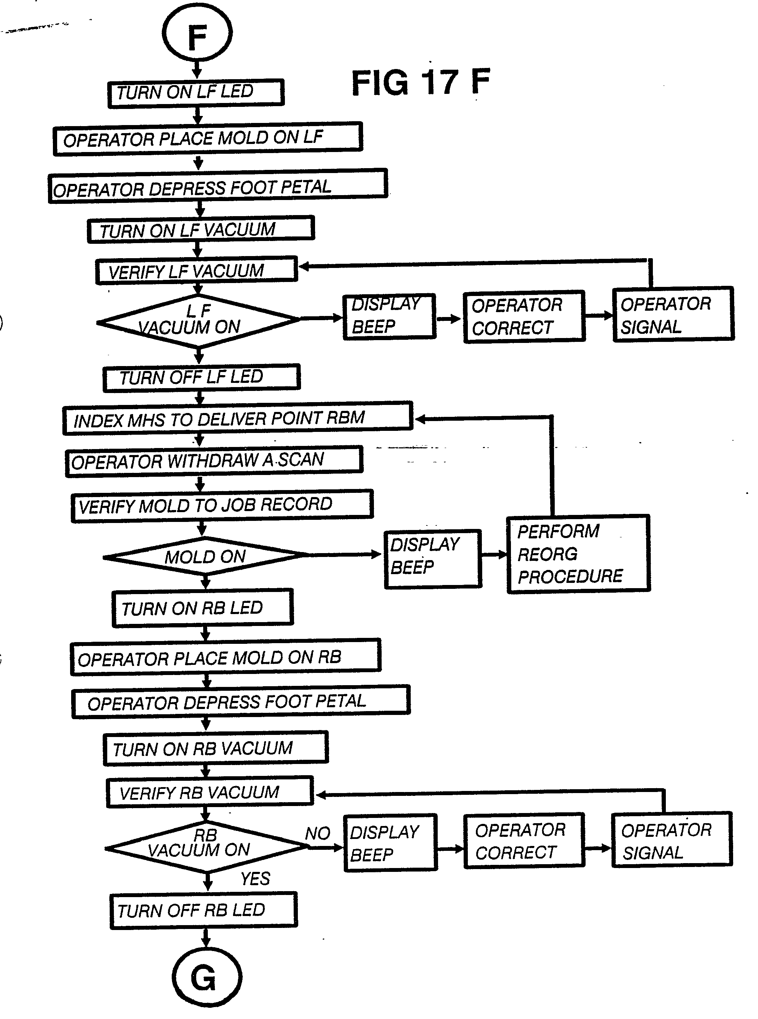

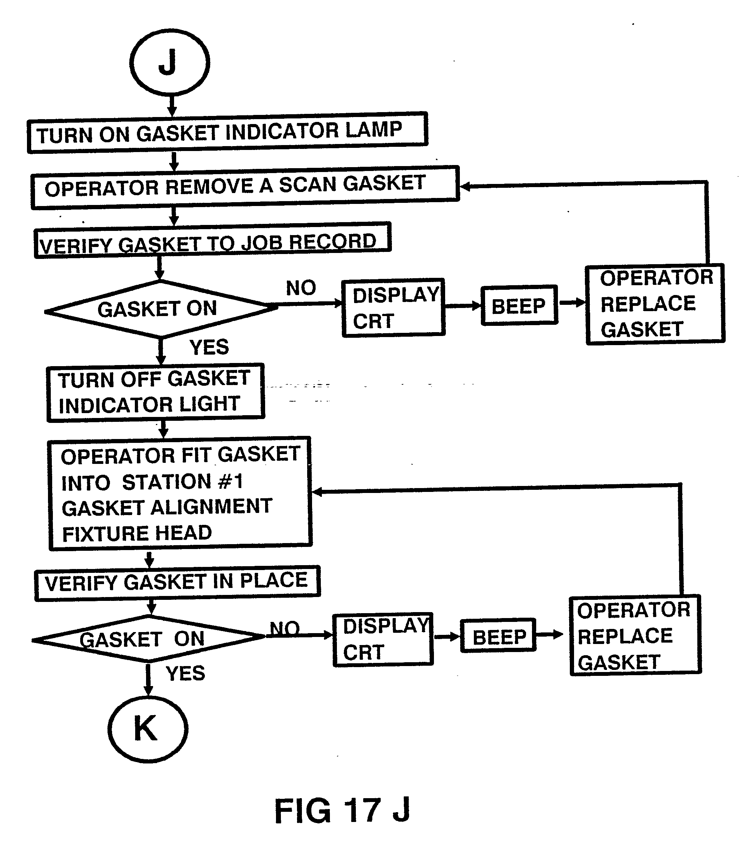

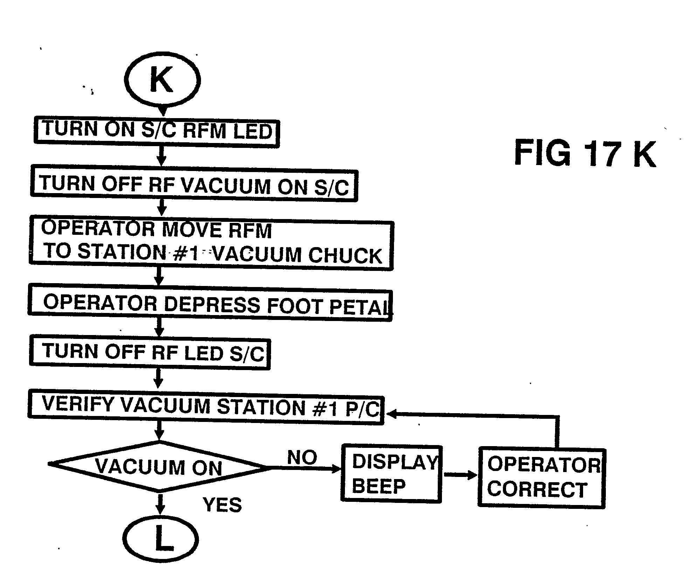

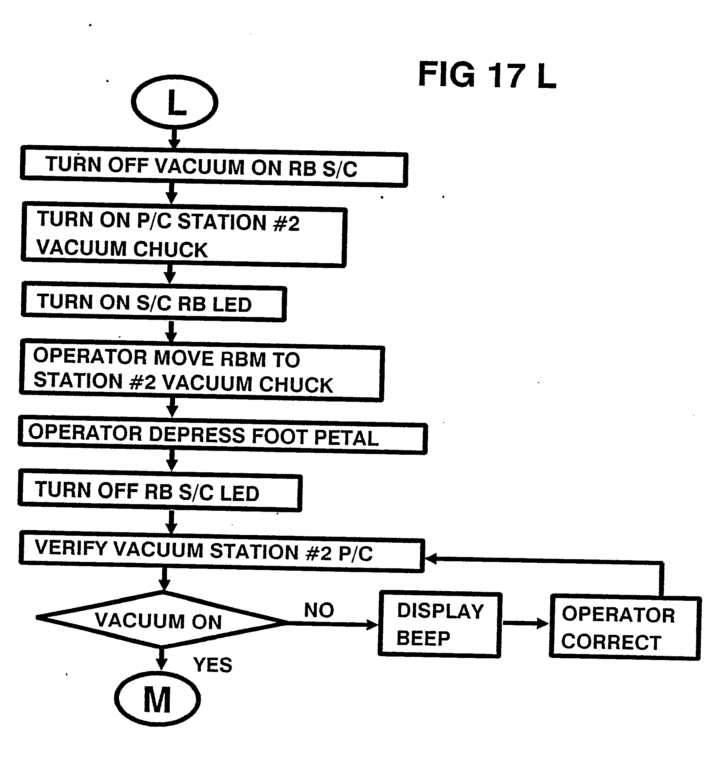

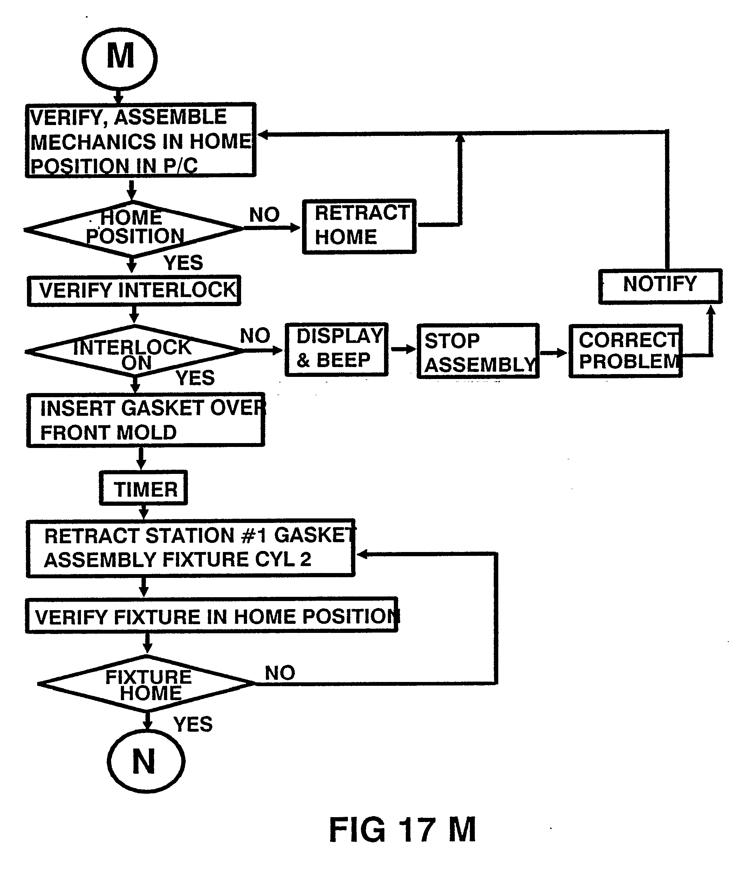

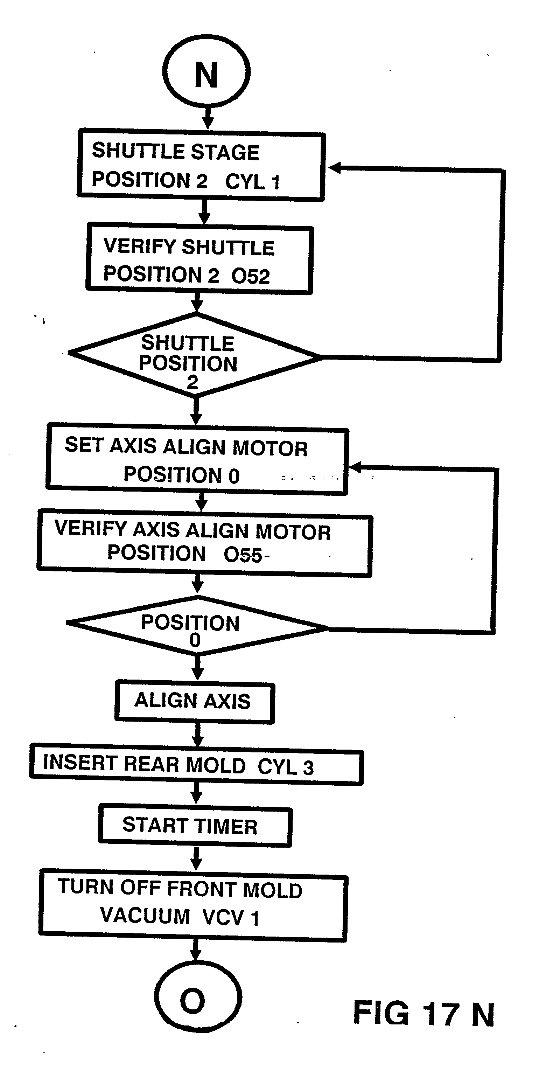

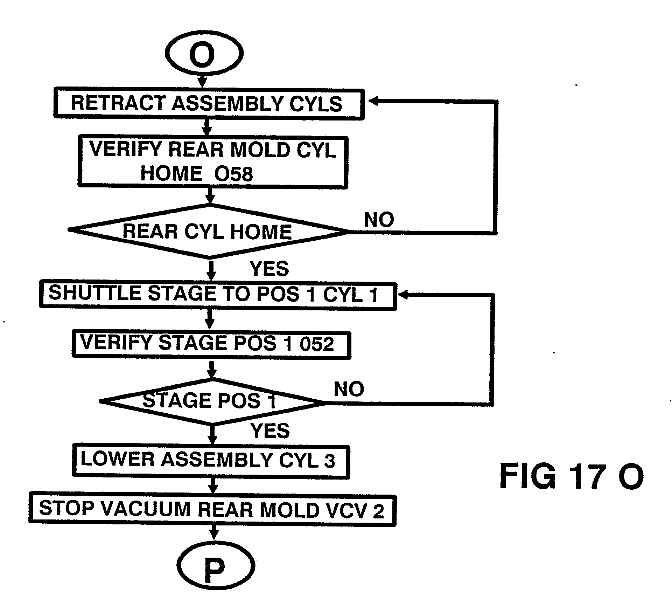

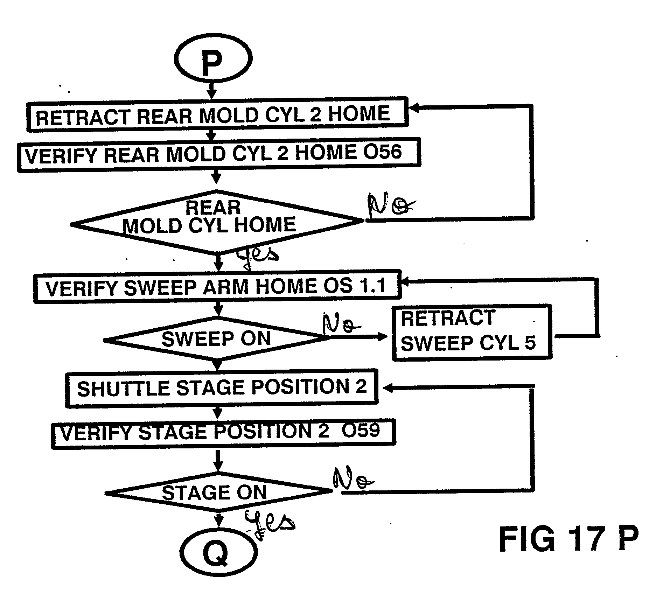

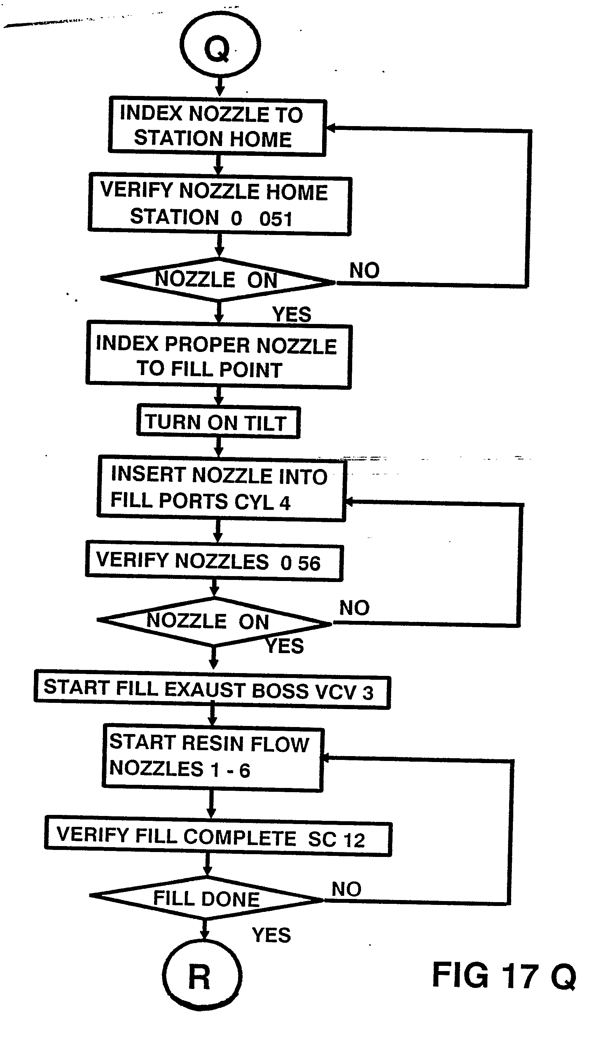

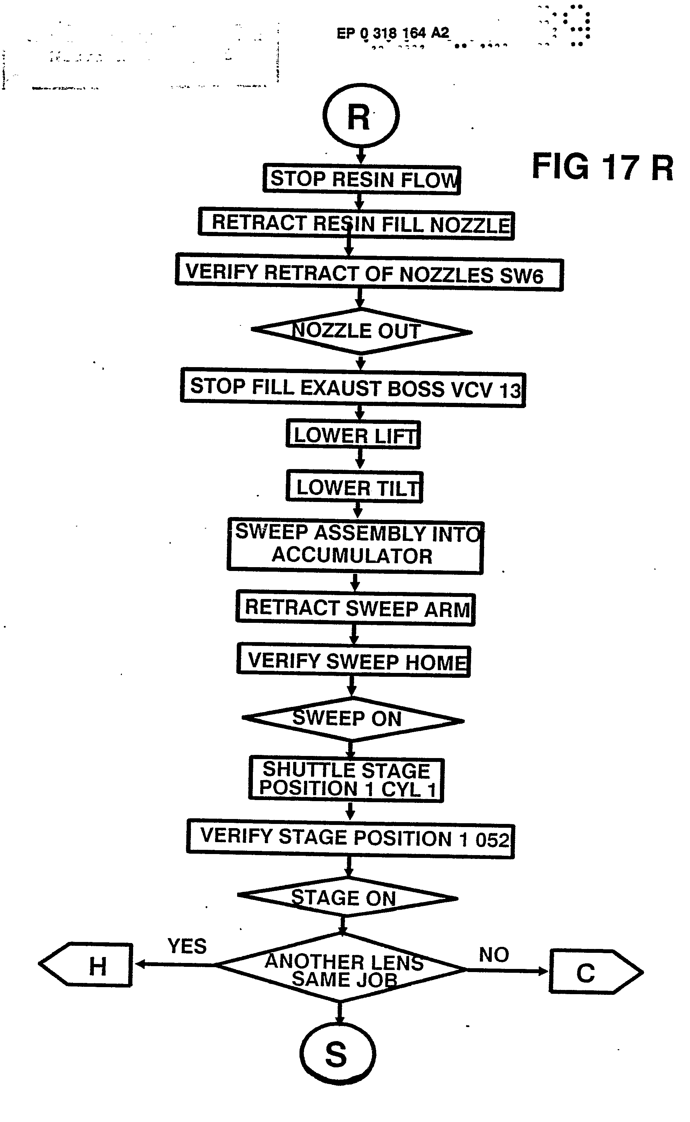

Figure 17A is a cross-section of the view of Figure 16A; and

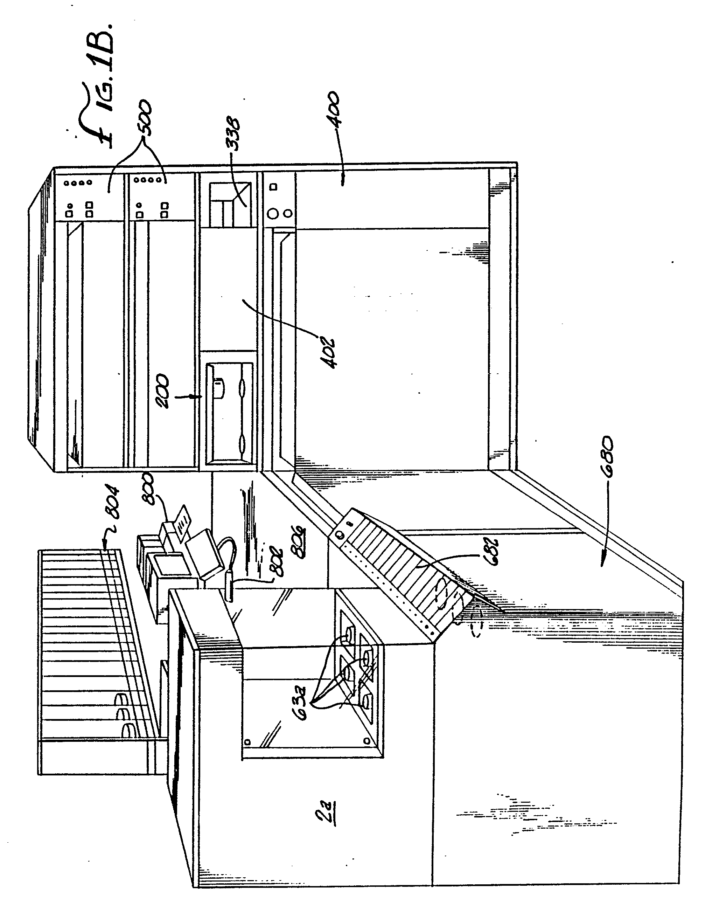

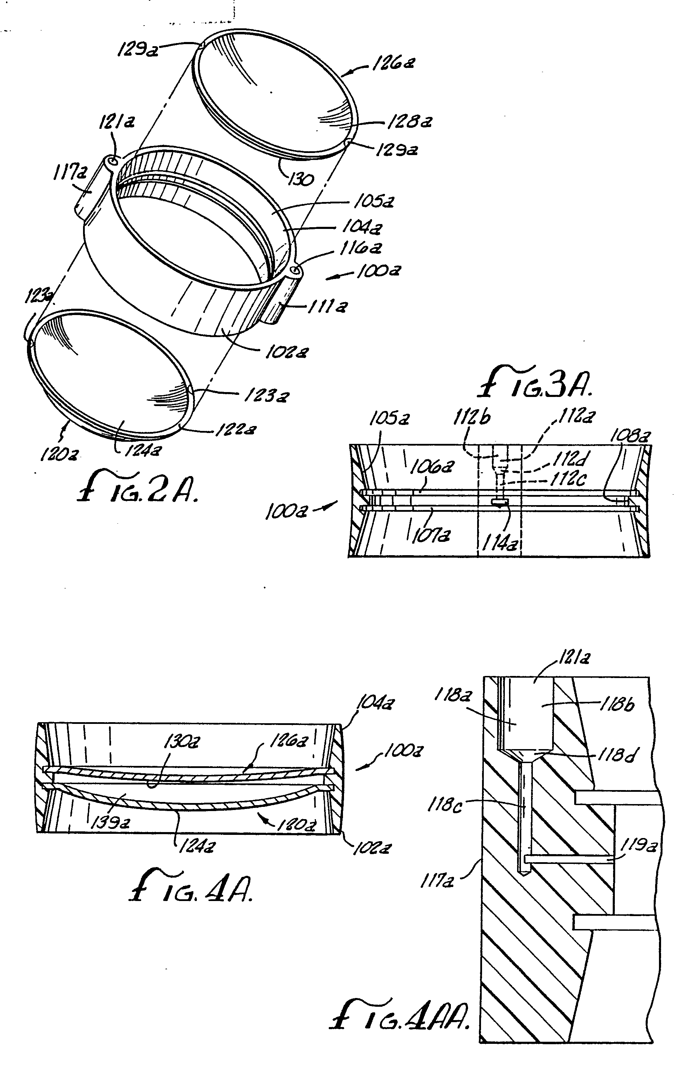

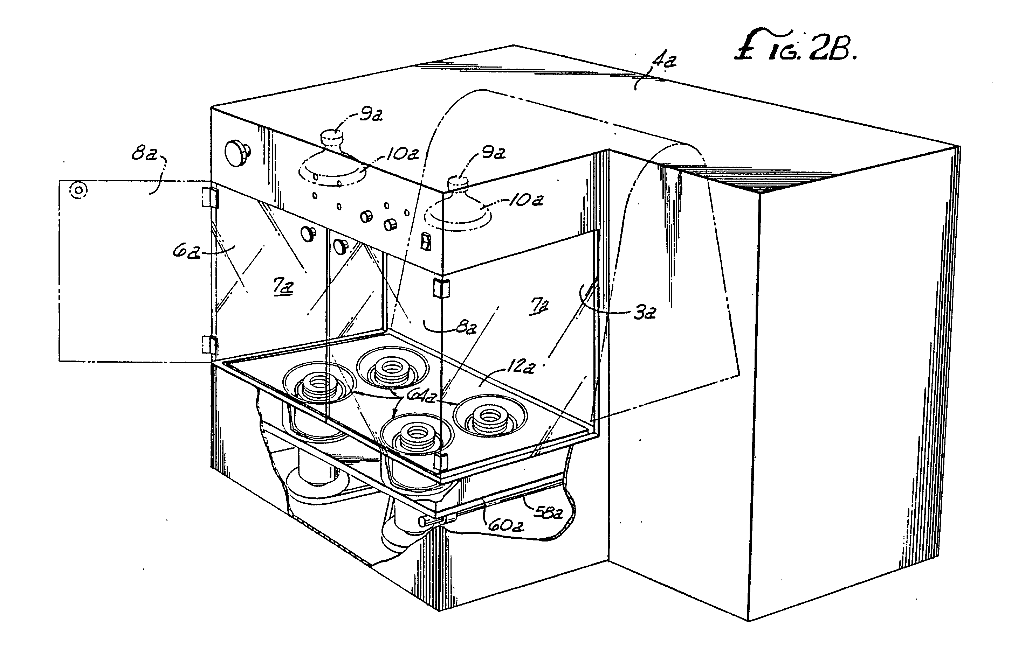

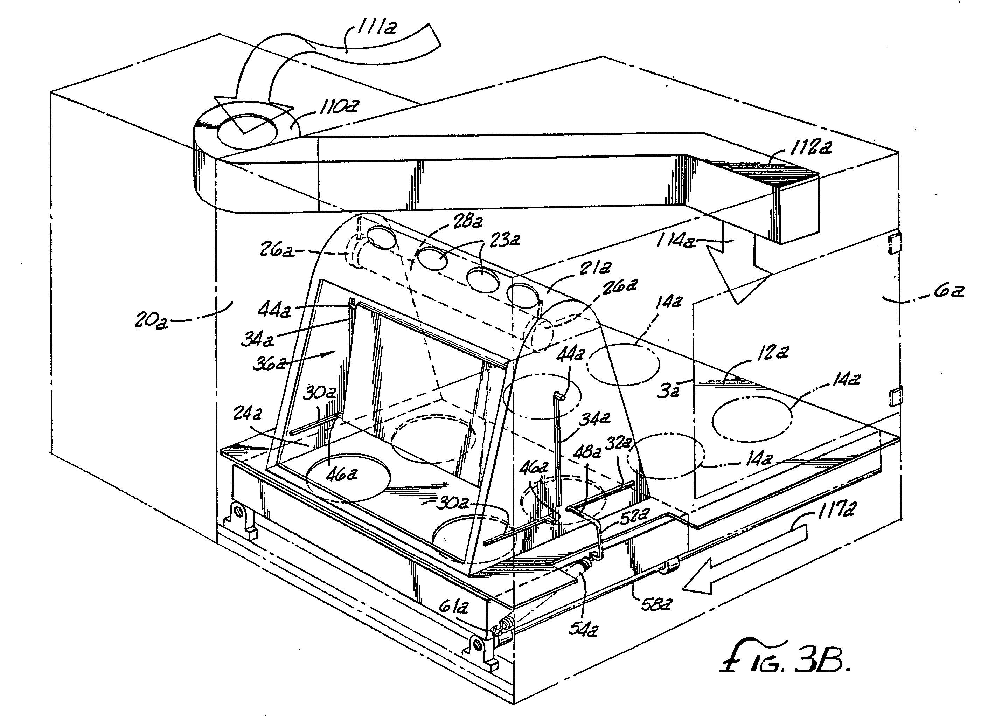

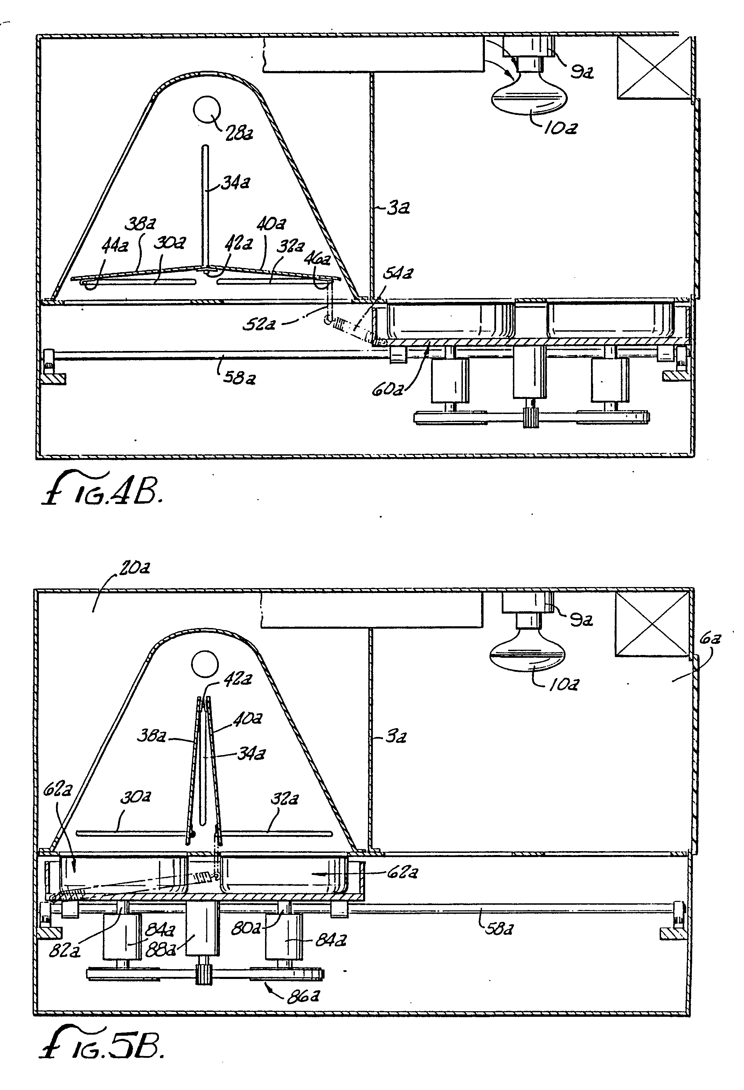

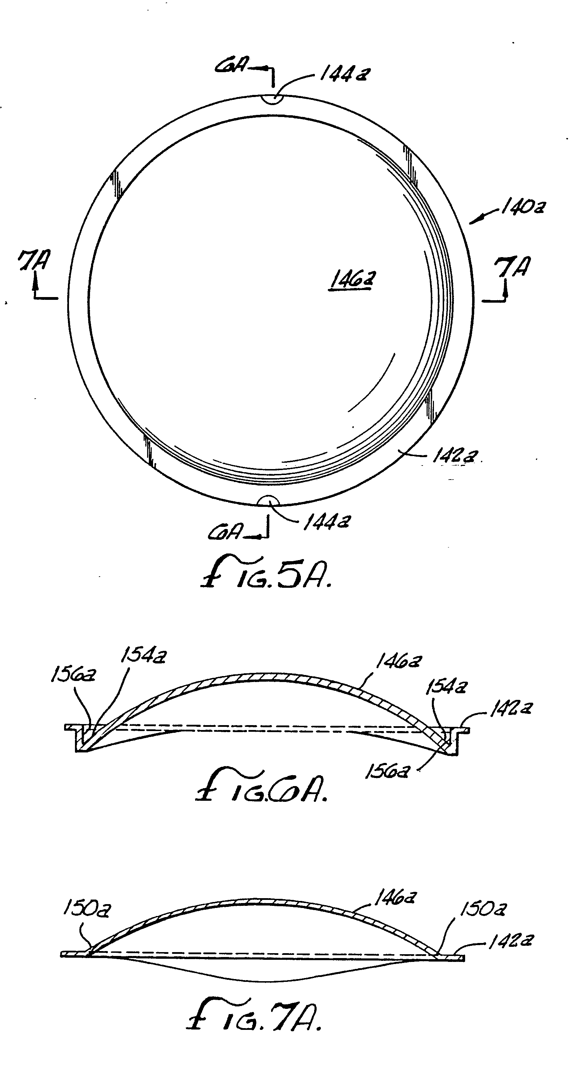

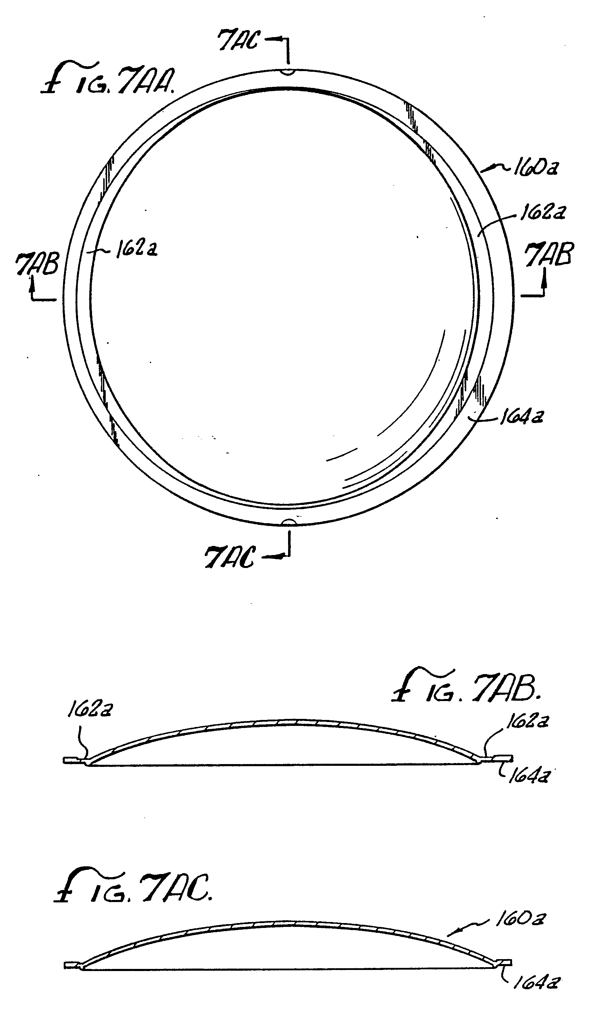

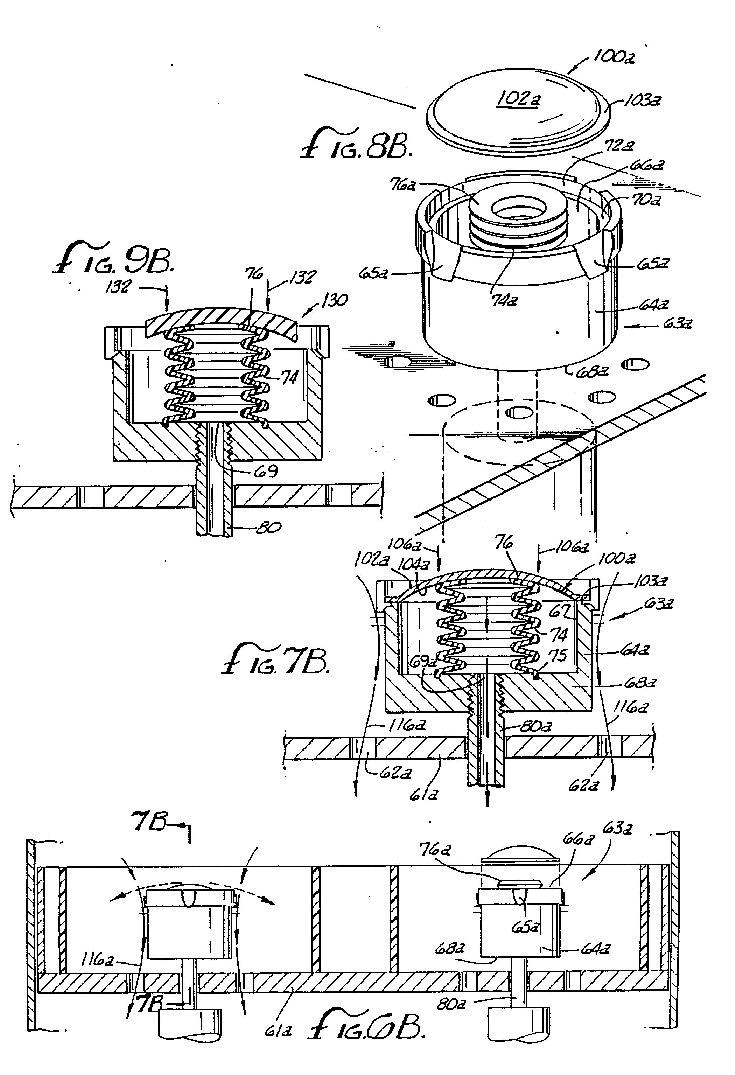

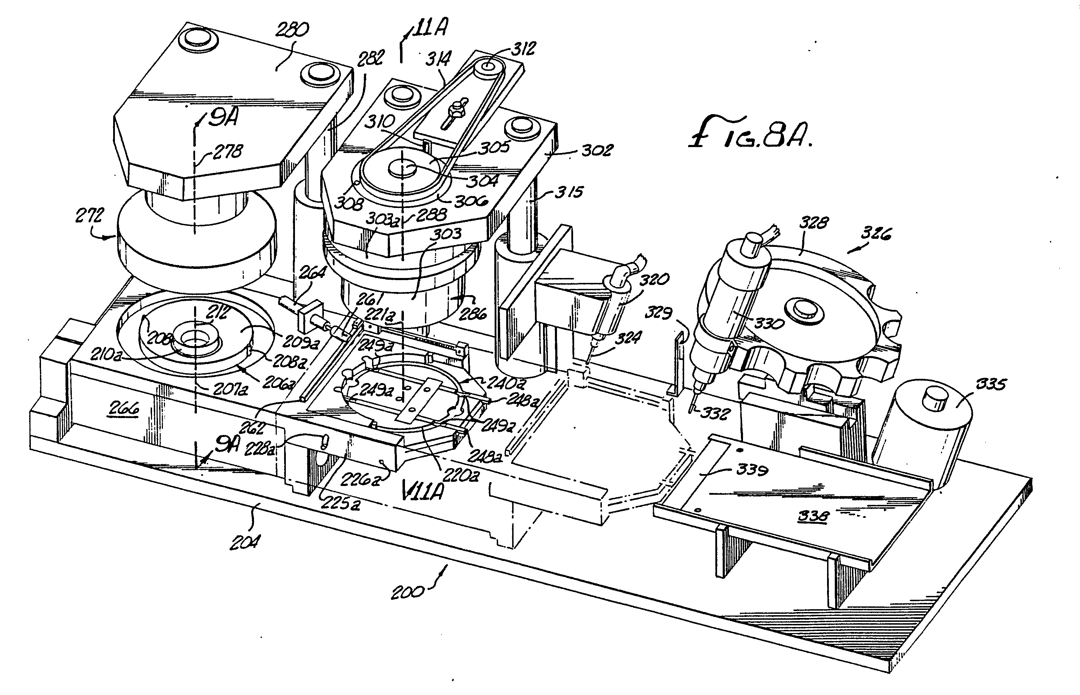

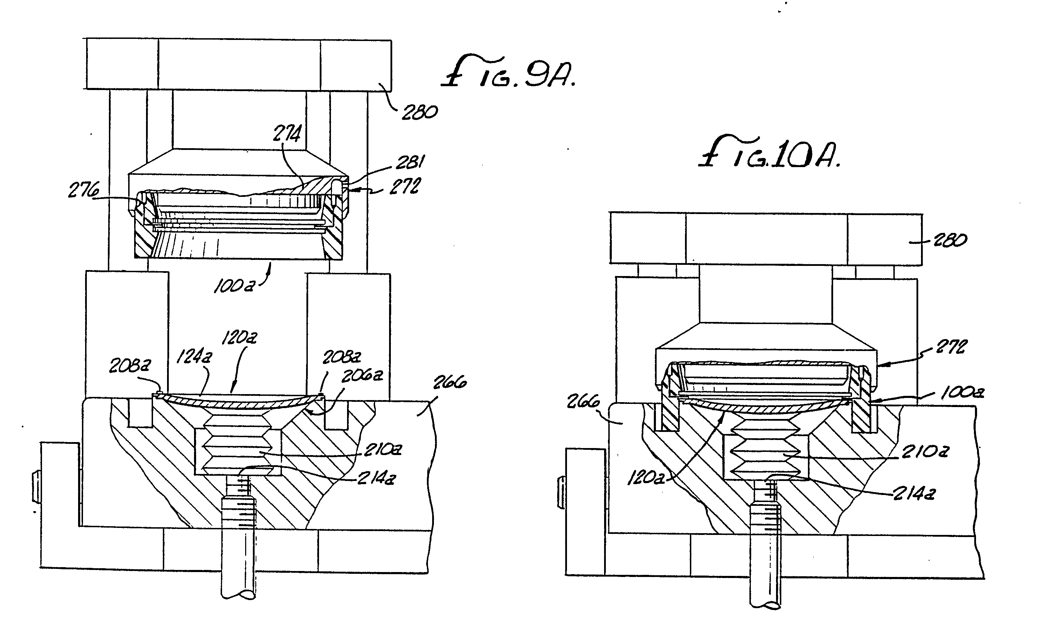

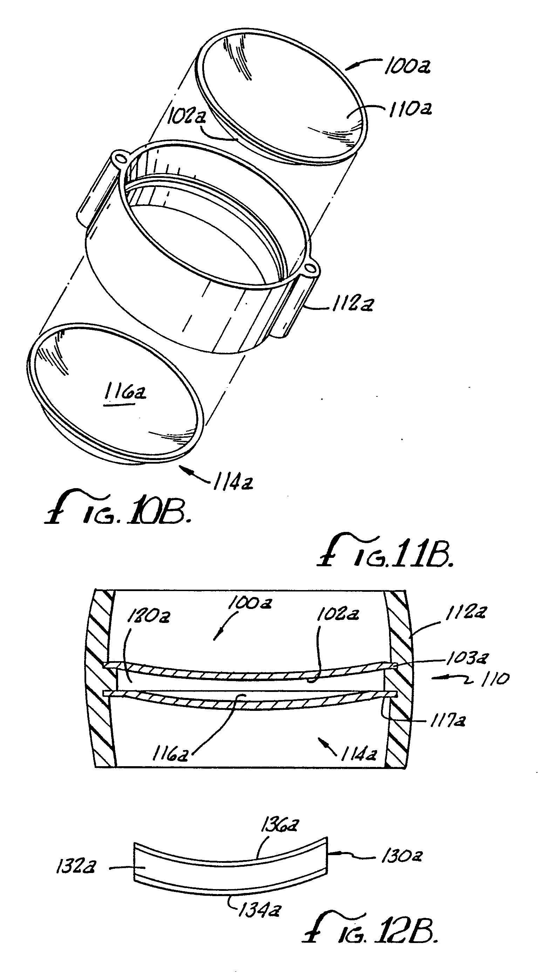

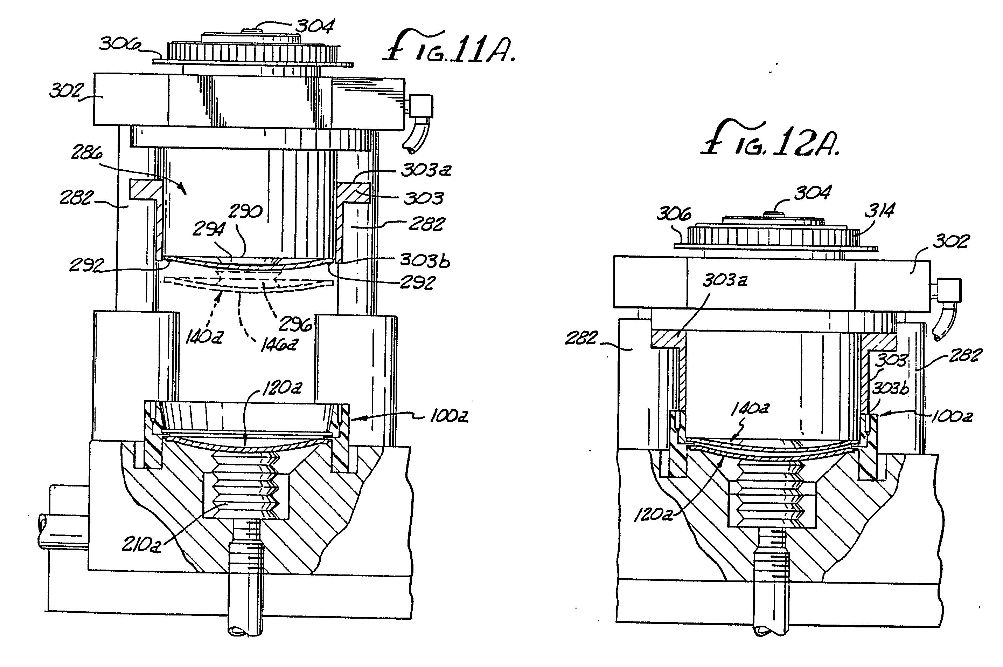

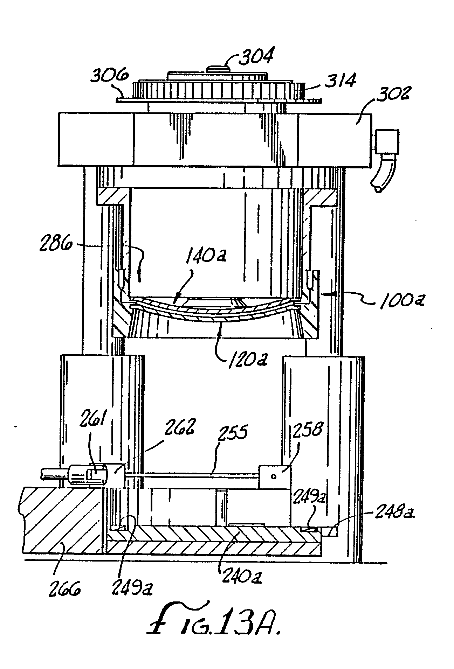

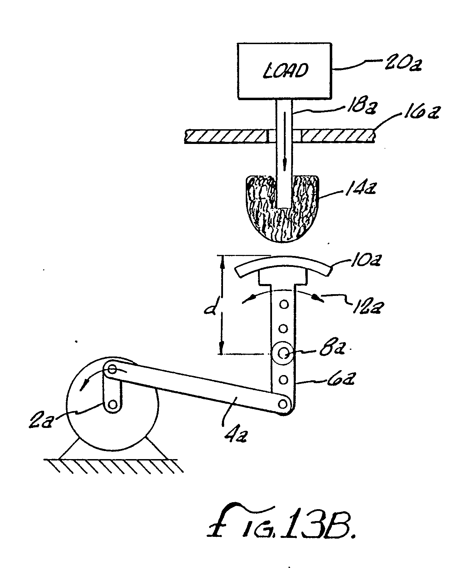

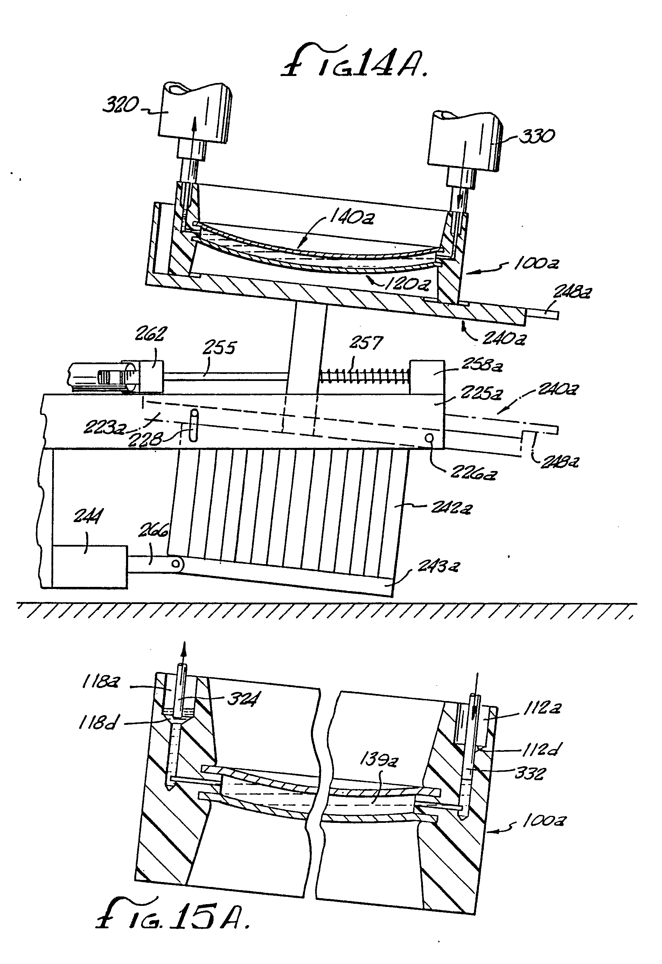

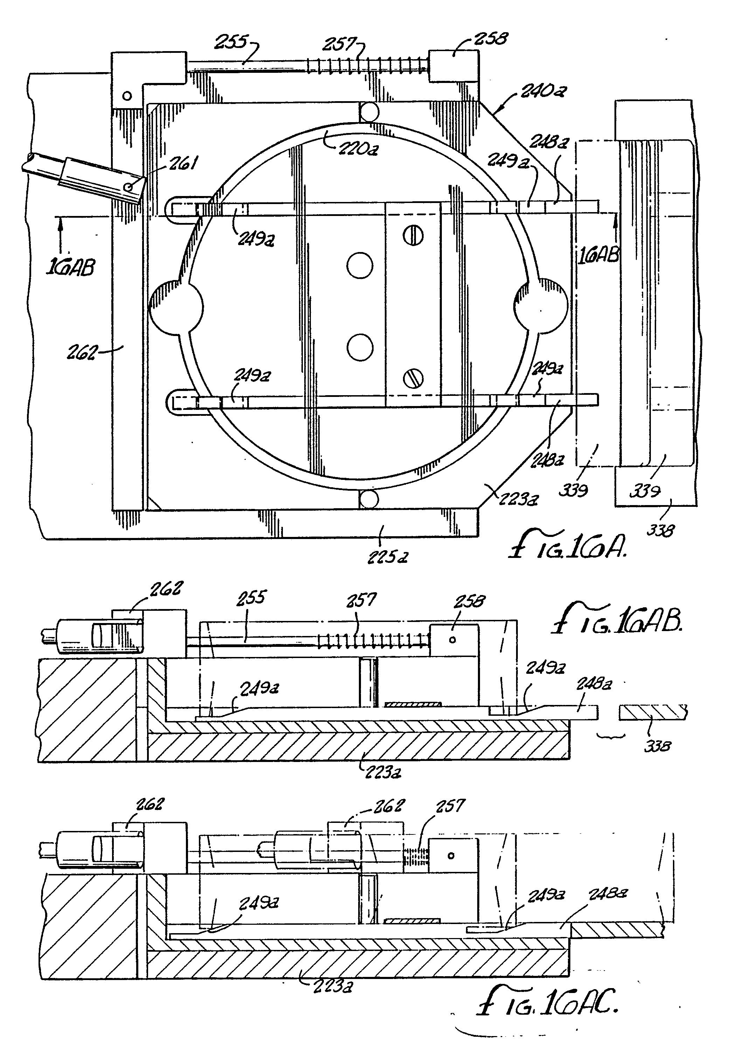

Figure 18A is a view similar to Figure 17A showing components of the apparatus in different operative positions.

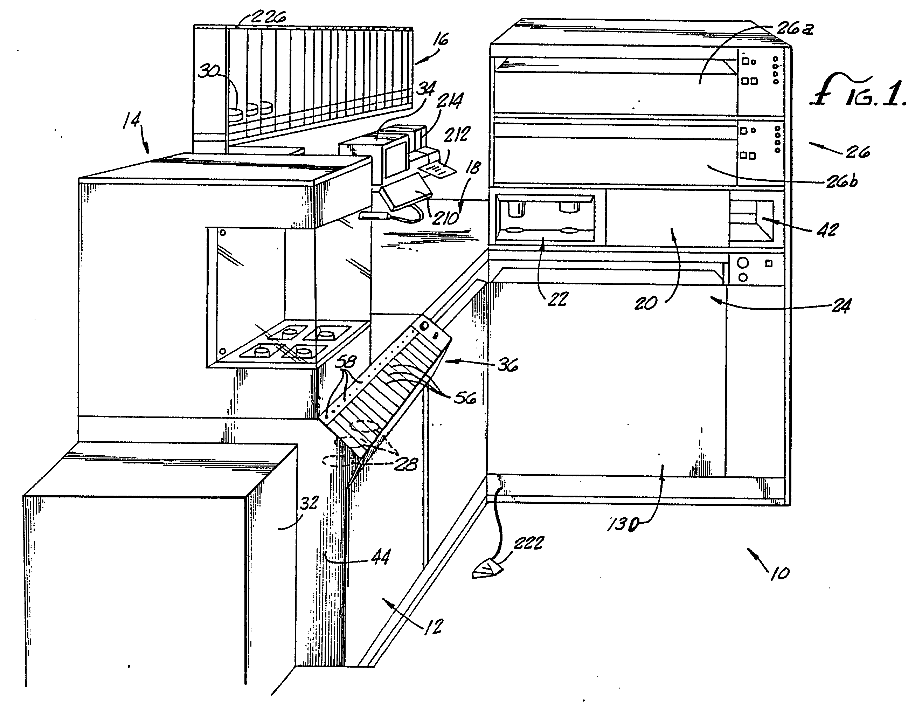

FIG. 1B is a perspective view of a spectacle lens assembly workstation which utilizes components of the present invention as integral parts thereof;

FIG. 2B is a perspective, partially cut away view of a spin coater of the present invention viewed toward a front thereof, with a drawer of the spin coater being in a front position;

FIG.3B is a view similar to FIG. 2B, but viewed toward a rear of the spin coater, and showing the drawing in a rear position;

FIG. 4B is a cross-section of the spin coater showing the drawer in the front position;

FIG. 5B is a view similar to FIG. 4B, but showing the drawer in the rear position;

FIG. 6B is a cross-section of a portion of the drawer of the spin coater, showing two spin coater chucks of the present invention, both with and without a spectacle lens mold seated thereon;

FIG. 7B is a cross-section along the lines 7-7 of FIG. 6B;

FIG. 8B is a perspective view of a spin coater chuck of the type shown in FIG. 6B, with a spectacle lens mold in position for mounting thereon;

FIG. 9B is a view similar to FIG. 7B but showing a spectacle lens seated on the spin coater chuck; and

FIG. 10B is a perspective view of a gasket and two molds in position to be assembled into a lens form, used to make a lens of the present invention;

FIG. 11B is a cross-section through a form assembled from the gasket and molds shown in FIG. 10B;

FIG. 12B is a cross-section through a lens of the present invention as produced from the form shown in FIG. 10B; and

FIG. 13B is a diagrammatic view of an apparatus which is not itself part of the present invention, but was used to ascertain the abrasion resistance ratings of coated spectacle lens of the present invention.


## DESCRIPTION OF EMBODIMENTS OF THE INVENTION


### I. General Description

As illustrated in Fig. 1, the lens casting apparatus 10 of this invention includes a mold storage unit 12, a mold coater 14, an array of racks 16 for holding different size gaskets, a work bench 18, and a processing center 20 including a mold assembly and alignment fixture 22, a resin storage and dispensing unit 24, and a dual chamber oven 26. The lens casting apparatus 10 is compact requiring only approximately 44 square feet of floor space. Thus it can fit conveniently within a room having dimensions of 10 feet in width and 10 feet in depth.

The various components of this apparatus are positioned with respect to one another so that the operator can conveniently retrieve molds 12 from the storage unit 28, place these molds in the coater 14, retrieve the desired gasket from one of the racks 16, place the gasket 30 and molds in the mold assembly and alignment fixture 22, and then retrieve the filled assembly of gaskets and molds, and place them in the ovens 26. The mold coater 14 sits on top of the mold storage unit 12 for ease of access and the work bench 18, being between the mold storage unit 12 and processing center 20, provides a convenient place for the operator to disassemble the assembly of gasket and molds. A computer 32 is mounted on the side of the mold storage unit 12 and the control center for the computer is located above the work bench 18, permitting the operator to make necessary entries or observe the screen of the monitor 34 of the computer for instructions or other information. The apparatus 10, preferably, has a generally L-shape configuration with the workbench 18, mold storage unit 12, and mold coater 14 along one leg of the L and the processing center 20 along the other leg of the L. In general the operator will be standing in front of the work bench 18 and will reach to one side to remove a mold 28 from the delivery station 36˙of the mold storage unit 12 and take this mold and place it in the mold coater 14. With the mold 28 in the mold coater 14 a release agent is applied to the mold's ophthalmic surface, for example, by simply using a plastic bottle to squeeze a small amount of release agent onto the ophthalmic surface and then allowed to harden. The coated pair of molds are then placed by the operator into the mold assembly and alignment fixture 22 along with the gasket 30 for the prescription being processed. The mold assembly and alignment fixture 22 then assembles and orientates the molds within a selected gasket which is then moved to the dispensing head 28 (Fig. 13) of the resin storage and dispensing unit where the correct amount of resin is injected into the space 40 (Fig. 11) between the molds 28. The assembly of gasket 30 and molds 28, with the resin, is then delivered to an accumulator station 42 in the processing center 20. The operator removes the filled assembly of gasket 30 and molds 28 from the accumulator station 42 and places it in one of the oven chambers 26a or 26b. After curing overnight, the operator removes the ˙filled and cured assembly from an oven. disassembles the assembly discarding the used gasket 30, and returns the molds to the mold storage unit 12.

## II. Mold Storage Unit

As best illustrated in Figs. 1, 2 and 3, the mold storage unit 12 includes a box-like housing which holds approximately 600 different molds. The mold storage unit 12 is a modification of a semi-automatic printed circuit board assembly system sold by Royonic Corporation of West Germany. This system employes an endless belt (not shown) carrying parallel rods 46 (Figs. 2 and 3) on which are mounted boxes that have the ability to tilt about the rod similar to the seat of a ferris wheel. In place of the conventional voxes, a special mold package 48 is mounted on the rod containing either a front or a back mold 28. Each mold package 48 has a lid 50 which is slidable outwardly and carries on it the mold 28. The mold 28 is seated and held in position by individual tabs 52 carried on the lid 50. Thus, the operator will pull the lid 50 outwardly which presents the mold 28 to the operator. Each mold 28 carries on it a marking, such as a bar code 54, which identifies and distinguishes this mold 28 from all other molds contained in the mold storage unit 12. If a mold 28 is damaged and needs to be replaced, the replacement mold is delivered within the mold package 48 which is then inserted by simply slipping the package over the rod 46.

The delivery station includes a series of aligned compartments or mold docks 56 and there is a light 58 above each individual dock. As will be explained in greater detail below, one of these lights 58 is turned on to indicate to the operator which mold 28 is to be utilized in processing the prescription being filled by the apparatus 10.

## III. Mold Coater

As best illustrated in Figs. 4 through 9, the mold coater 14 includes a chamber 60 having a forward section 62 and a rear section 64. A carriage 66 is mounted in the forward section 62 and adapted to move reciprocally between the forward and rear sections. A wall 68 extends between the two sections 62 and 64, but its lower end is raised above the carriage 66 to permit the carriage to move under this wall as it moves between the forward and rear sections. The carriage 66 has a floor 70 having four rotatable vacuum chucks 72, 73, 74 and 75 mounted in the floor 70 in each quandrant of the floor. Surrounding each of these chucks are a series of holes 76 which allow air to be drawn through the floor.

Each chuck 72-75 includes a spindle 78 mounted on a shaft 80 for rotation. The shaft 80 is hollow and is connected to a vacuum source. Each chuck 72-75 has a recess 82 therein which receives a suction cup 84 comprising a rubber accordian-like structure. This suction cup 84 is an alignment with the hollow shaft and the spindle 78 has an annular offset ledge 86 at the mouth of the chuck which receives a mold 28 placed on a chuck. The mold 28 is seated so that the non-ophthalmic surface of the mold abuts the suction cup 84. A removable tray 88 is placed on the carriage 66 and over the spindles 78 of the chuck. The tray 88 has four sections 90, 91, 92 and 93 in it which are indented and include hollow, raised, centrally positioned, cone-like structures 92. The individual spindles 78 extend through these cone-like structures 92. The tray 88 is designed to collect any excess release material applied to the ophthalmic surface of the molds 28. Each of these cone-like structures 92 has a series of vents 94 in the sidewall thereof which permits air to be drawn through the vent in the cone structure and downwardly through the holes 76 in the floor 70. Thus, any vapors generated are sucked downwardly through the floor of the mold coater 14 and exhausted.

In the forward section 62 of the mold coater 14 located above the chucks 72-75 in the top of the coater are four infrared heating lamps 96 which are turned on after the release material has been applied to the ophthalmic surface of the mold 28. These lamps 96 are maintained on a sufficient period of time to dry the release material. The rear section 64 includes an ultraviolet light 98 which is mounted in the top of the coater. The wall 68 separating the two sections, and all the walls of the rear section, are opaque, so that the ultraviolet light is not transmitted beyond the second section 64. This protects the operator form unnecessary exposure to ultraviolet radiation.

When the molds have been coated and dried in the forward section 62, the drive mechanism (not shown) of the carriage 66 is actuated to move it from the forward section, underneath the divider wall 68, into the rear section 64. The carriage 66 remains in the rear section 64 a sufficient period of time to allow the ultraviolet light, turned on upon movement of the carriage into this section, to partially cure the release material. When this curing is accomplished, which usually takes no more than about 15 seconds, the carriage 66 is returned to the forward section 62. The molds 28, are then removed from the forward section 62 and placed in the processing center 20. Two molds 28 and one gasket 30 are assembled in the processing center 20 before a second pair of molds and gasket are placed in the processing center. Four molds 28 are coated for each prescription of spectacles, two molds for each lens of the spectacles.

### IV. Molds

As best shown in Fig. 6 the molds 28 used in the lens casting apparatus have a generally dish-like configuration with a central body 100 with a surface having a curvature in accordance with an ophthalmic prescription and a generally flat rim 102 surrounding this surface. Although glass molds may be used as shown in Fig. 11, preferably the molds 28 are formed by an electroforming process wherein a metal base is coated through an ion exchange process with a metal that is applied uniformly over the ophthalmic surface to give it a smooth, high gloss finish. These molds 28 may be single vision or multifocal. Two molds are employed, one for the front surface and one for the back of the lens being formed. The front surface will include any multifocal element. Each mold has an optical center with the orientation axis passing through this center and generally at a right angle to the plane of the mold as defined by the rim 102.

In accordance with one feature of this invention, each mold has associated with it an indexing element such as a pair of notches 104. The notches 104 are diametrically opposed and lie along a line which passes through the optical center of the mold 28. In most cases the optical center and geometric center will be identical. The notches 104 engage aligned pins (not shown) in the mold assembly and alignment fixture 22.

### V. Gaskets

As shown in Figs. 10, 11 and 13, the gaskets 30 employed each include a generally annular body member 108 formed by injection molding of a PVC or PVA polymer. The body member 108 has a cylindrical wall 108a with two opposed open annular ends 110 and 112 and two protrusions 114 extending outwardly from the outside surface of the wall 108a. These protrusions 114 have a face section 116 which lies generally in the same plane as the open end 110. Each of these protrusions 114 are diametrically opposed to each other and each includes a channel 118 which extends between the face and an opening 120 in an annular shoulder 122 which runs along the inside surface of the cylindrical wall 108a. This should 122 has a flat front section 124 which is generally at 80 degrees with respect to the plane of the face section 116, and it is surrounded by recesses 126 and 128 which extend into the wall 108a. Each of these annular recesses 126 and 128 has a ramp section 130 and 132, respectively, leading to the mouth of the recesses 126 and 128.

The ramp sections 130 and 132 are adapted to deform when the mold 28 are inserted into the open mouths as illustrated in Fig. 11. When the mold 28 passes the lip of a ramp section, the rim 102 of the mold is lodged in its corresponding recess and the ramp section snaps back to clamp or hold the rim 102 firmly in its grip. Thus, when resin is injected into the channel 118 extending into the space 40 between the two molds 28 to fill the space, the molds remain stationary relative to each other. The different sizes of the gaskets 30 are determined by the width of the front section 124 of the should 122, which determines the distance between the two molds 28. Different prescriptions require different spacings.

### VI. Processing Center

As shown in Figs. 1, 12, 13, 14 and 16, the processing center 20 includes the mold assembly and alignment fixture 22, the resin storage and dispensing unit 24, the accumulator station 42, and the curing ovens 26. This processing center 20 with its alignment components is contained in a generally box-like housing structure. The resin storage and dispensing unit 24 includes a refrigerator 131 forming the base of the processing center 20. The mold assembly and alignment fixture 22 is centrally located about waist high for easy access by the operator. The ovens 26 are immediately above this fixture 22 but in easy reach of the operator.

### A. Mold Assembly and Alignment Fixture

The mold assembly and alignment fixture is specially designed to function in the apparatus 10 and is described in detail in a separate U.S. patent application, incorporated herein and made part of this application, and entitled, "Lens Forming Apparatus", Lyon & Lyon Docket No. 180/281, by Kachel et al., filed the same date as this application, and assigned to the same assignee as this application.

As illustrated in Fig. 12, the mold assembly and alignment fixture 22 includes two sections 130 and 132. The first section 130 includes a mandrel 134 driven by an air cylinder (not shown) which, when activated, will move in a downward direction. The gasket 30 is placed on the mandrel 134 and the front mold 28 is placed on a moveable shuttle 106 which moves beneath the mandrel 134. The shuttle 106 includes a vacuum chuck (not shown) for holding the front mold 28 in position. This vacuum chuck has pins (not shown) thereon which interact with the notches 104 on the mold 28 to correctly position the mold relative to the gasket 30. There are also two pins which are inserted into the channels 118 of the gasket 30 upon the gasket being manually placed on the mandrel 134.

The second section 132 also includes a mandrel 136 having an air cylinder (not shown). The mandrel 136 has a vacuum chuck (not shown) for holding a back mold. The cylinder is adapted to move the vacuum chuck downwardly to force the back mold into the gasket after the gasket with the front mold inserted in its underside is moved by the shuttle 106 into alignment with the mandrel. Upon assembling the molds 28 and gasket 30, the assembly is moved to a fill pocket 139.

## B. Resin Storage and Dispensing Unit

The resin storage and dispensing unit 24 as shown in Figs. 13, 14, 15 and 16 includes the refrigerator 131 and the dispensing head 38. The refrigerator 131 has a normally closed door 138 which is locked and has an alarm which is activated when the temperature of the refrigerator exceeds 0 degrees Fahrenheit. Individual cannisters 140 containing resin are stored in the interior of the refrigerator 131 by means of a rack 142 which has holes 144 therein corresponding to the diameter of the cannisters. The cannisters 140 bear a label 141 carrying a bar code which is scanned prior to loading to check against using resin which is unsuitable. The cannisters 140 are dropped into these individual holes 144 with the upper lip section 146 of the cannister serving as a stop. Each cannister 140 contains resin, said resin being either clear or tinted with one of five different colors or shades such as pink, gray, brown, amber, and peach.

The resin dispenser, as best shown in Fig. 16, includes a tray 148 mounted in the refrigerator 131 on tracks 150 which enable it to be pulled outwardly when the refrigerator door 138 is opened to fill the tray with cannisters 140 from the rack 142. This tray 148 includes a base section 152 of a generally rectangular configuration having two rows of three holes each therein. Extending downwardly from each of these holes are metal sleeve elements 154 and at the bottom of each sleeve is a sensor 160. At the end of each sleeve element is a tube 156. Each tube 156 is connected to the dispensing head 28 located adjacent the fixture 22. There is an opening 158 in the top of the refrigerator through which these tubes 156 extend. This opening 158 is sealed so that the minimum of heat transfer occurs at this point. The tubes 156 are sufficiently long to enable the tray 148 to be moved in and out without placing unnecessary tension on the tubes.

Individual cannisters 140 are placed in the individual sleeves 154, with a plug 162 in the cannister being unscrewed and the end of the tube 156 being screwed in place of the plug 162. Each cannister 140 has two principal components; a generally cylindrical tubular wall element 164 terminating in a conical outlet end section 166 and a plunger element 168 which rests on top of the resin contained in the tubular element. When pressure is applied to the plunger element 168 the resin is forced out the outlet end section 166 and through a tube 156 to the dispensing head 38.

The tray 148 includes a lid 170 hingedly mounted to the rear of the base 152. A pair of screw-type connectors 172 are used to hold the lid 170 securely in place when it is closed and are unscrewed to permit the lid to be opened as shown in Fig. 16. This lid 170 includes six pressure ports 174, each including a seal 174a, that surrounds the openings in the base section and seals these openings when the lid 170 is closed. Each pressure port has an elbow 176 extending outwardly from the top of the lid, and each elbow has a pressure line 178 connected to it including a valve (not shown). When the valve is opened, pressure is applied through the elbow and pressure port against the plunger 168 to force resin from the outlet end section 166 through the tube 156 to the dispensing head 38. Thus, the apparatus 10 has the capability of dispensing at least six different colored resins selectively.

As will be noted by reference to Fig. 15, the plunger element 168 has a ferrous metal strip 180 embedded in it. When the plunger element 168 is moved to a position so that the metal strip 180 is adjacent to a sensor 160, the sensor then provides a signal indicated that this cannister 140 needs replacement.

The dispensing head 38, as best shown in Fig. 13, includes a disk-like plate 182 having six different tubular-type nozzles 184 extending outwardly from the bottom face of the plate. Opposite each tube and mounted on the other side of the plate are six solenoid valves 186, with individual tubes 156 connected to each of these valves. When a valve 186 is opened and pressure is applied to the cannister 140 in communication with this valve through a tube 156, resin will flow through the valve and out the nozzle 184.

11

Closing the valve 186 will immediately discontinue the flow of resin from the nozzle 184.

Centrally located and extending outward from the plate is a drive shaft 188 which is connected by a sprocket 190 and drive belt 192 to a motor 194 mounted to the housing. Adjacent the dispensing head 38 is a vacuum device 196 including a nozzle 198 connected to a vacuum line 200. This nozzle 198 is adapted to fit into the channel 118 in the gasket 30 when the gasket is tilted to move into the resin fill position.

As the assembly of molds 28 and gasket 30 moves from the fixture 22 it rests on a tiltable platform 202. Beneath this platform 202 is an air cylinder 204 which has the piston 206 of the cylinder connected to the base of the platform 202. The platform 202 is mounted so that it tilts from a ready position to the gasket fill position. When the assembly of molds 28 and gasket 30 is in the ready position it is aligned so that the two channels 118a and 118b are in registration with, respectively, the nozzle 198, and one of the nozzles 184 of the dispensing head 38. Depending upon which resin is to be used, the motor 194 is actuated to bring the desired resin nozzle 184 to the fill position. Thus when the cylinder 204 is actuated to move the platform 202 from the ready to the fill position, both nozzles 198 and 184 will be inserted simultaneously into the channels 118a and 118b. The solenoid valve 186 for the resin nozzle 184 in the channel 118b is opened, permitting resin to flow through the tube 156 under pressure into the space 40 between the molds 28. Simultaneously, vacuum is applied to the other nozzle 198. When the resin approaches the nozzle 198 a pressure change occurs which is detected to provide a signal to discontinue feeding resin. As soon as the correct amount of resin has been dispensed, the solenoid valve 186 is again closed to discontinue the supply of resin and the vacuum is terminated. The platform 202 is then moved from the fill position to the ready position by drawing in the piston 206.

A sweeper 208 is used to then move the filled assembly of molds 28 and gasket 30 from the platform 202 to the accumulator station 42. Upon being actuated the sweeper 208 strikes the assembly of molds 28 and gasket 30 to push the assembly from the fill pocket 139 into the accumulator station 42. With the filled assembly in the accumulator station 42, the operator may now place this assembly in the oven 26.

## C. Ovens

As shown in Fig. 1, a double oven 26 is used so that both large and small batches of lenses may be processed within a 24 hour period. This double oven consists of two oven chambers 26a and 26b. Each chamber is preprogrammed to go through a predetermined heating and cooling cycle that provides for curing of the resin at the proper temperatures to provide a quality lens. These ovens are stacked one upon the other and are located immediately above the mold assembly and alignment fixture 22 to provide ease of access for the operator. Each oven 26 has a light emitting diode (LED) that is turned on to indicate when the oven is operating.

## VII. Operation

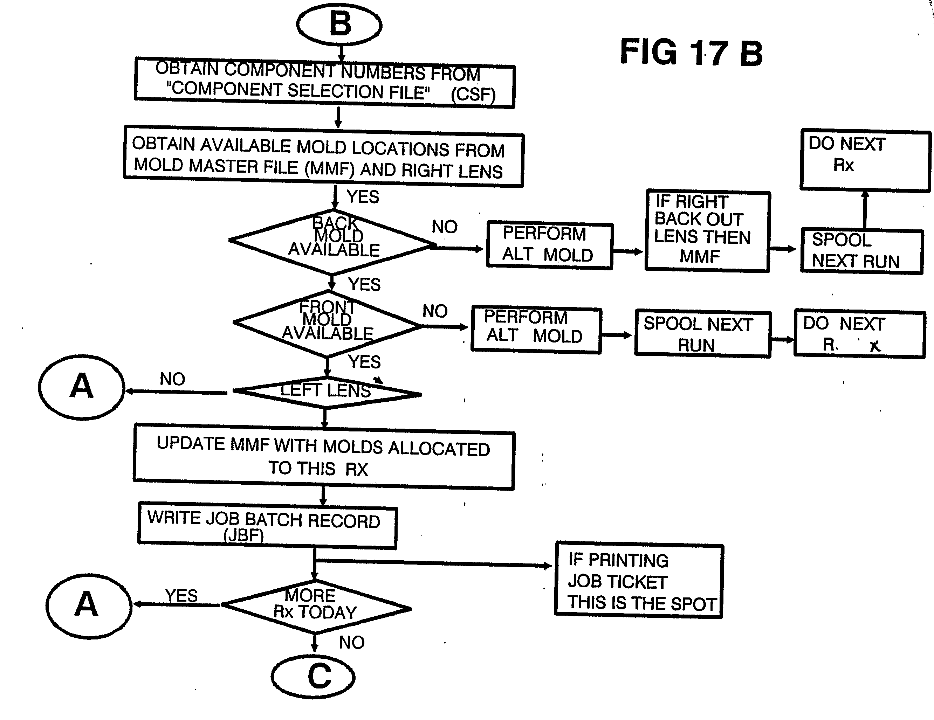

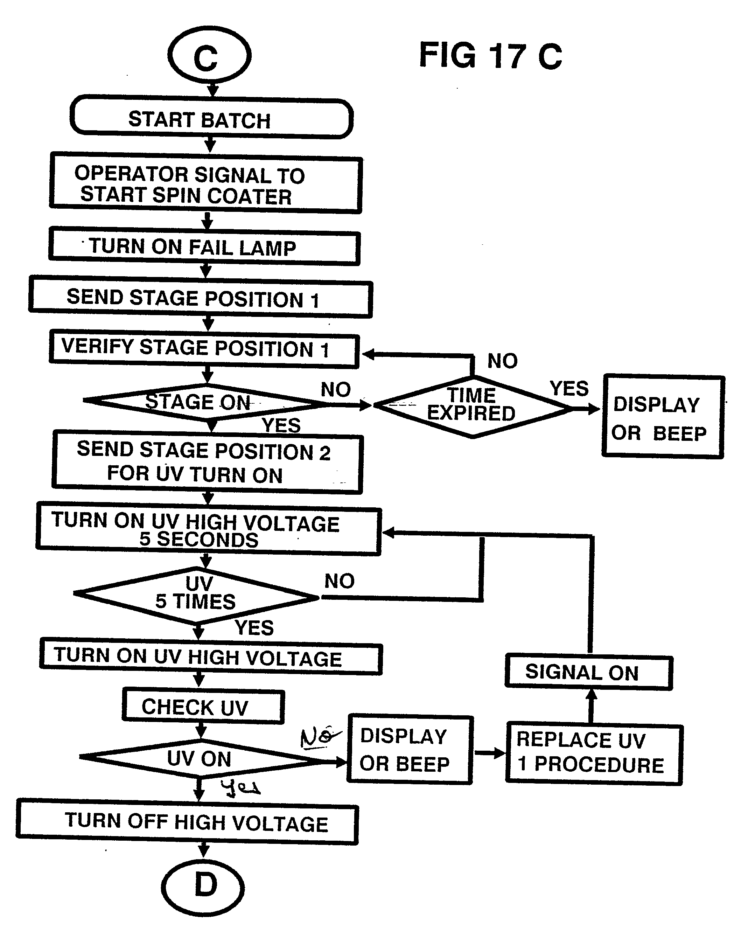

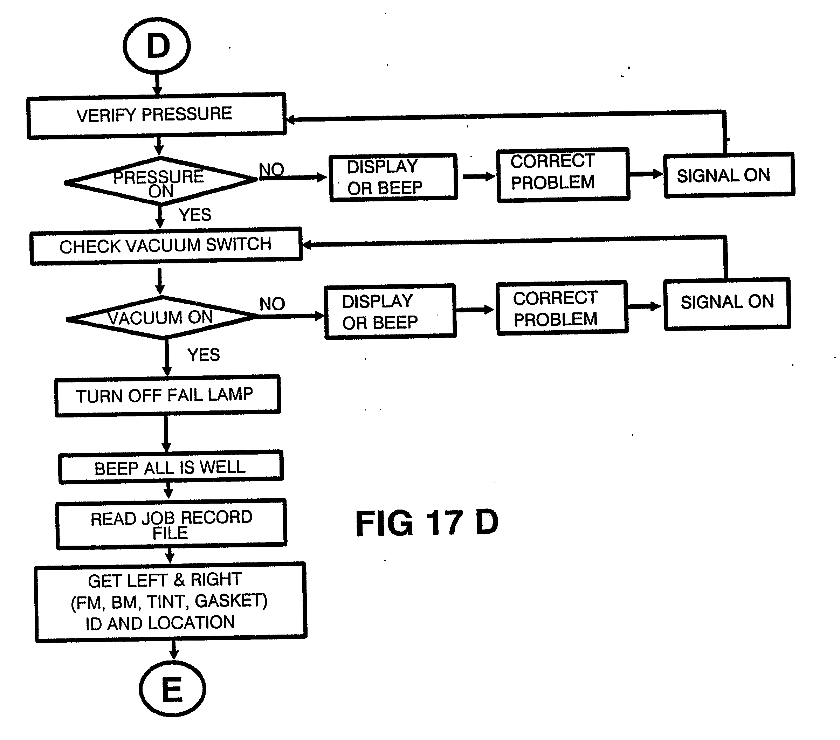

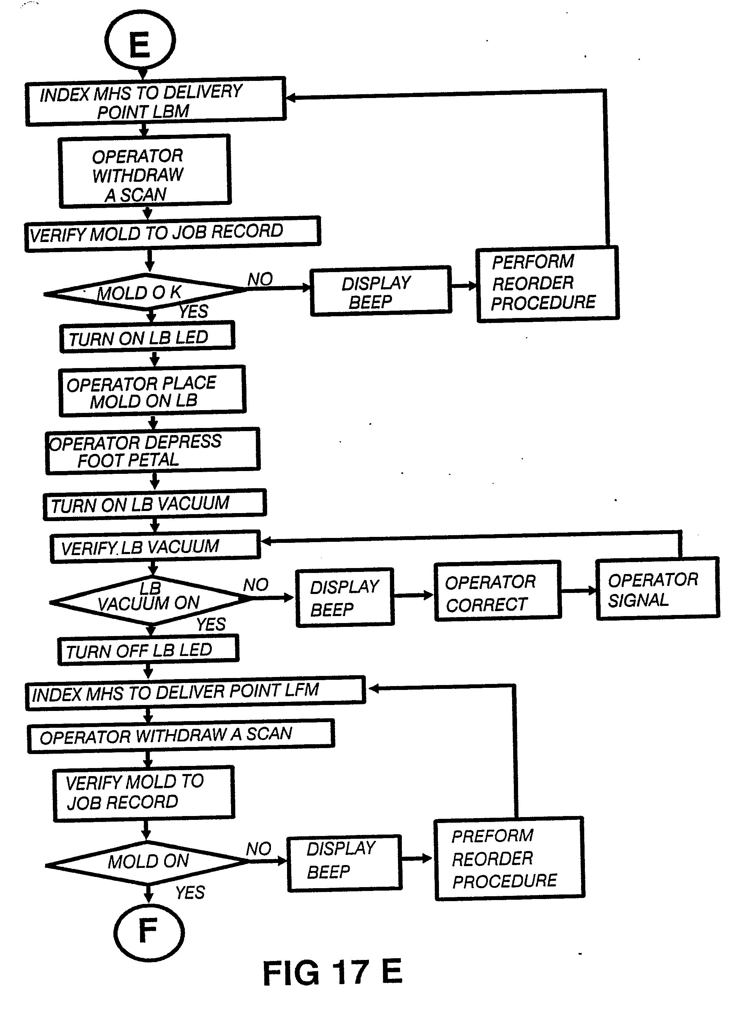

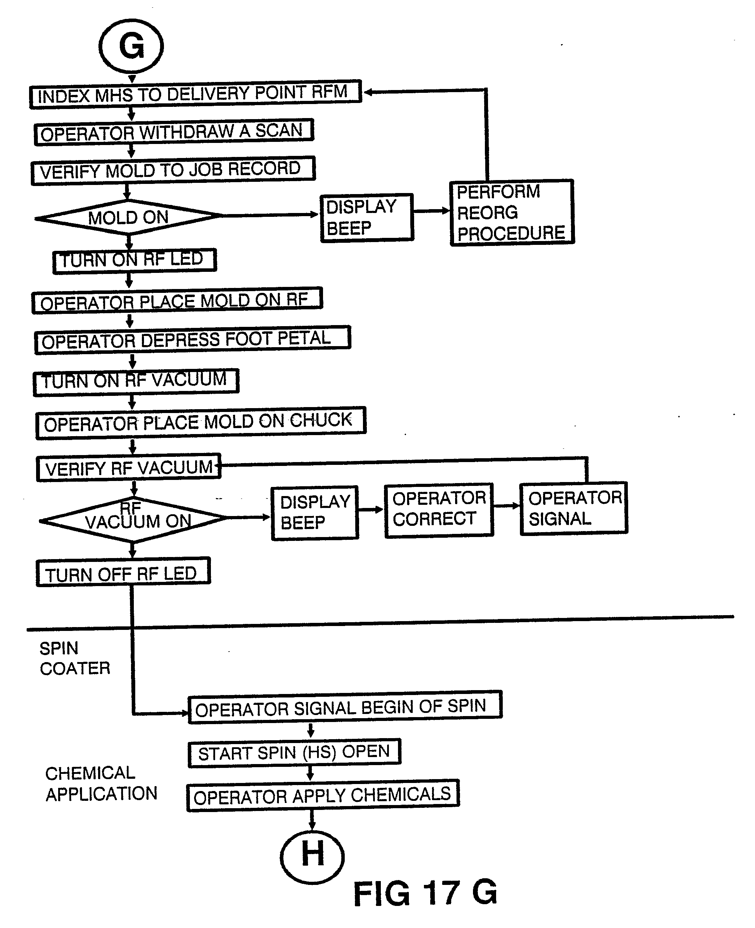

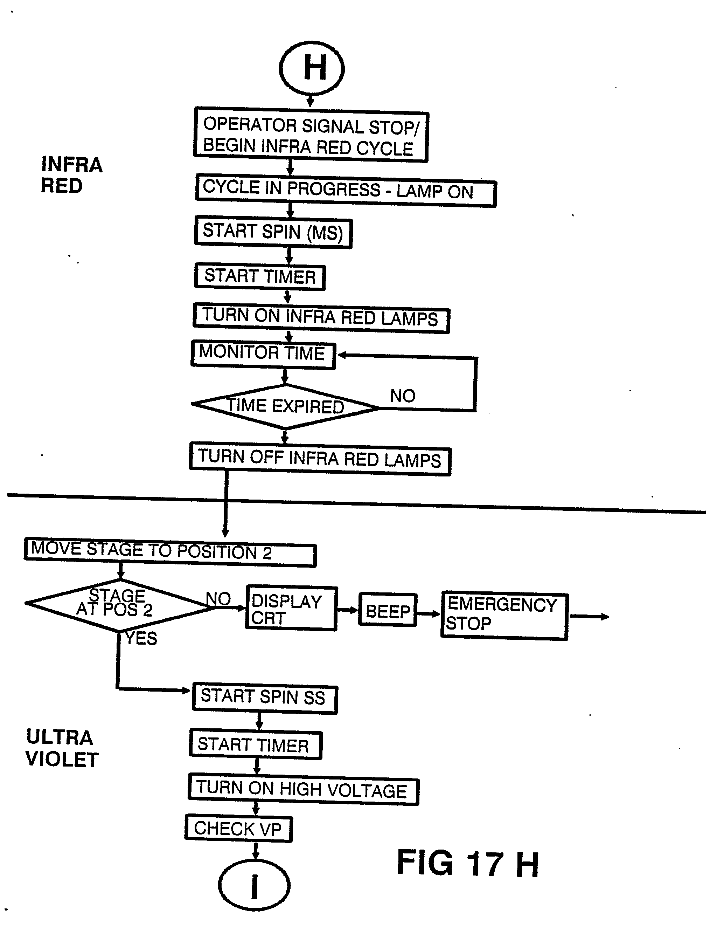

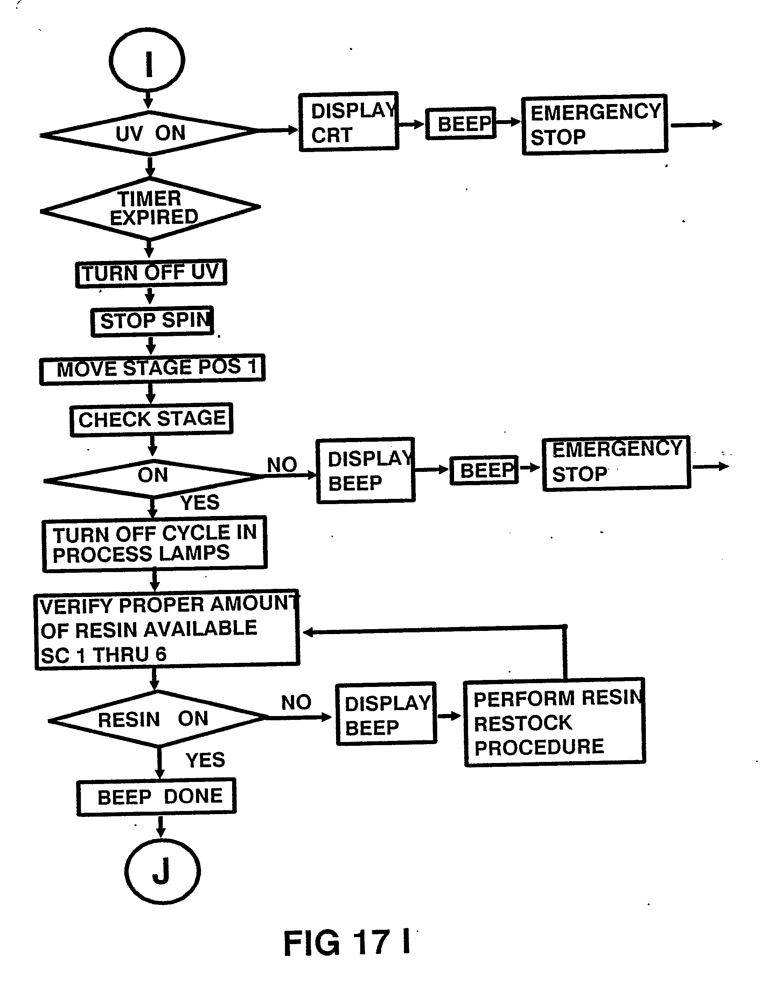

The operation of the lens casting apparatus 10 of this invention is controlled by the computer 32, which is a standard IBM type personal computer employing an 8086 microprocessor chip. The control functions are initiated by manual or automatic switching functions provided by conventional sensors occurring throughout the operation of the apparatus 10, with the computer 32 providing control signals to sequence the operations of the apparatus 10 generally in accordance with the flow diagram illustrated in Fig. 17. The source code for the computer 32 is set forth in Appendix A attached to this application and incorporated herein by reference.

Referring to Fig. 17, the description for the job order is entered into the computer (Fig. 1) either through remote order entry, for example, at the optometrist's office, which is electronically connected to the computer, or by the operator using a keyboard 210 to enter the order. If the job order calls for glass lenses or, if the prescription does not come within the range of molds contained within the mold storage unit 12, the computer 32 prevents further operation of the apparatus 10 and displays on the monitor 34 that this job order must be sent to an outside laboratory. Next, the computer verifies that the prescription can be processed by the apparatus, and checks to see that it is, for example, a bifocal of the flat top 28 category or a single vision lens, that the pupiliary distance in frame geometry corresponds with the mold capability of the apparatus 10, that the sphere, cylinder, and add are also within the capability of the apparatus. If any of these parameters of the prescription cannot be satisfied by the apparatus 10, the computer 32 will reject the prescription and provide a visual indication on the monitor 34 that this prescription must be filled by an outside laboratory. Certain aspects of the prescription may not have been correctly entered. such as the sphere being divisible by .25 or the add not being divisible by .25. If such an operator error in entering the prescription occurred, the apparatus 10 is equipped with an alarm such as a beeper which will be turned on to provide an audio signal that the prescription entry needs correction. There is also provided a display of this condition on the monitor 34, enabling the operator to manually make the correct entry for the sphere, cylinder, or add by entering the correct information through the use of the keyboard 210. With the prescription data properly entered into the computer 32, it will obtain from its memory the necessary component numbers from an internal component selection file and also obtain information on available molds and locations of these molds in the storage unit from a mold master file within the memory of the computer.

In the flow chart, the right lens is illustrated as being processed first. The computer 32 checks to see that both a back mold 28 and a front mold 28 are available to make the right lens. If these molds are not available, it may be possible to fill the prescription using alternate molds for which the computer checks. If the alternate molds are unavailable, the computer 32 indicates that this prescription will have to be filled at a later time when the molds are available. This could occur if several prescriptions were being filled all on the same day using all of the available molds for that day's run. This will require that some prescriptions be filled the following day. The computer 32 then repeats the same process for the left lens.

Assuming that the necessary molds 28 are available to fill both the right and left lens for the prescription being processed, the mold master internal file of the computer 32 is then updated indicating what molds have been allocated to fill the particular prescription being processed. Next the computer 32 will write in its memory a job bath record to identify which molds are being used to fill the prescription being processed. Optionally, at this point a job ticket 212 (Fig. 1) is printed out by a printer 214. This job ticket 212 will be used to identify this specific prescription and the job ticket 212 will be placed in the work tray (not shown) which will hold the finished lenses and be carried to the section of the optometrist's laboratory to trim the edges of the lenses and place them in frames.

It is contemplated that all the prescriptions for a given day will be processed at the same time, for example, at the end of the day. These prescriptions will have been inputted either periodically throughout the day or at the end of the day. The computer 32 will remain in the prescription processing mode until the operator gives a manual input signal to the computer that no more prescriptions will be processed that day. At this point the operator will begin manufacture of lenses. Individual job orders will be processed sequentially in accordance with the most efficient utilization of molds and resin. For example, the computer 32 will have in its memory data indicating the level of resin in each canister. Prescriptions will be processed in an order which will minimize replacement of canisters while running a particular batch of prescriptions.

The operator now signals the computer 32 through the use of the keyboard 210 to start the batch run with the prescriptions being filled in the order established by the computer. The first instruction the operator provides is a signal to start the mold coater 14. Upon receipt of this signal, the computer 32 turns on a fail lamp 216 (Fig. 4) to indicate to the operator that the mold coater 14 is being checked to see that it is ready for operation. The operator does not place any molds 28 in the coater 14 until it has been checked out to see that it is operational. First there is a sensor (not shown) in the coater 14 which provides a signal indicating the carriage 66 is in the forward position. This is verified by the computer 32 through a timing subroutine which requires that the signal be received indicating that the carriage is in the forward position within a certain period of time. Otherwise, an audio signal is activated providing a continuous beep indicating that the carriage 66 is not in the forward position. With the carriage 66 in the forward position, the ultraviolet lamp 98 is activated. This is accomplished by turning the ultraviolet lamp 98 on for 5 second intervals five times at a high voltage level. When this is completed, the lamp 98 is turned on continuously at the high voltage level. A sensor is provided in the power input to the lamp 98 which indicates a voltage drop, signalling that the lamp 98 is drawing current and is operational. If the lamp 98 fails, an audio signal is turned on and the monitor 34 displays instructions that the lamp must be replaced. The operator will replace the defective lamp and then provide a manual input signal to the computer 32, which then recycles the test to see that the ultraviolet lamp 98 is operational. When this lamp 98 has been checked out and determined operational, the high voltage is turned off.

The next important verification that is conducted by the computer 32 is to determine that vacuum is applied to the various chucks of the mold coater 14 and vacuum lines in the processing center 20. This vacuum is sensed by sensors in the vacuum chucks in the coater 14 and vacuum heads of the processing center in the mold and gasket assembly fixture 22 and resin storage and dispensing unit 24. A similar verification is conducted for pressure.

If for any reason either pressure or vacuum is not present as required, an audio signal in the form of a continuous beep is activated and a display is depicted on the screen of the monitor 34. The monitor 34 will indicate to the operator where the problem occurs and the operator will now be required to fix the defect.

When this has been accomplished, the operator will signal the computer 32 through the keyboard 210 that the pressure or vacuum is corrected. The computer 32 then recycles through the verification program to again check that the correct pressure and vacuum are present in the apparatus 10 at the stations where needed. The audio signal in the form of a continuous beep for a predetermined time will indicate to the operator that all is well.

The computer 32 now reads the job record file to determine what front mold 28 and back mold 28 should be use, what tint and gasket should be used, place into memory the I. D. number of the molds as represented by the bar code 54, and the location of the molds in the storage unit 12. The computer 32 then actuates the drive mechanism of the mold storage unit 12 to deliver to the delivery station 36 at the appropriate dock 56 the front and back molds 28 to be used in filling the prescription for one of the lenses. The operator at this point removes the molds 28 from the docks 56 and scans the bar code 54 appearing on the molds using a conventional bar code reader (not shown) which is connected electronically to the input of the computer 32. This data is verified to insure that the correct mold has been delivered. If the wrong mold has been delivered to a dock 56, there will be displayed on the monitor an indication of this error and an audio signal will be activated. The operator is now called upon to follow a predetermined reorganization procedure. This procedure is required in the event that a mold was inadvertently placed in the wrong storage compartment within the mold storage unit. Once the operator has performed the procedure to correctly reorganize the molds within the storage unit 12, the mold storage indexing procedure is recycled to insure that the correct mold 28 is utilized.

Upon delivery the correct mold 28 to the mold delivery station 36, the LED 220 for the left back mold chuck is activated and a manually operated foot pedal is actuated to initiate the vacuum for the left back chuck. The operator now places the left back mold on the left back chuck 72. At this point the vacuum applied to the mold 28 is verified by a signal to the computer. If upon placement of the left back mold 28 on the left back chuck 72, no vacuum occurs, no signal will result and the computer will provide a visual display on the monitor 34 and turn on the audio alarm. The operator will correct this condition and again go through the verification process. This sometimes occurs if the operator places the mold on the wrong chuck.

With the mold 28 correctly placed on the left back mold chuck, the LED 220 is turned off and the storage unit 12 is indexed to deliver to the delivery station 36 the left front mold. The operator will again scan this mold 28 using the bar code reader. This same process is continued for both the left front mold and right back mold as indicated in the process flow chart.

With all four mold elements property placed in the spin coater, the operator is now ready to apply the release coating to the ophthalmic surfaces of the molds. First, however, the mold surface is washed with acetone. The operator, through a push button 230, signals to the computer to start the operation of the chucks 72-75. The computer will signal the drive system for the chucks which begin to spin. The operator, as the chucks are spinning, applies a small amount of the liquid release agent to the surfaces of the molds. On the front mold the release agent is formulated to enhance scratch resistance, and on the back mold it is formulated to enhance both mold release and tintability. After applying this liquid, the operator again signals the computer 32 through the push button 230 to begin the infrared heating cycle. At this point the computer 32 turns on the infrared lamps 96. The time is monitored by the computer 32 and, upon expiration of the predetermined time, the infrared lamps 96 are turned off. The purpose of the infrared lamps 96 is to remove the volatiles from the scratch resistant coating so that it forms a uniform, relatively dry, film covering the ophthalmic surface of the molds 28. This film is then cured with ultraviolet radiation to cross link the molecules. The time of UV curing is such that only partial cross linking is achieved.

At this stage in the operation, the computer 32 moves to the next sequence on expiration of the time cycle for the infrared lamps, signalling the drive system for the carriage 66 to move the carriage from the forward position into the ultra violet light section 64 of the mold coater 14. A sensor is provided to indicate to the computer 32 when the carriage 66 is in section 64. If the carriage 66 fails to move to the rear position, the computer 32 will display on the screen of the monitor 34 that an abort condition exists and the audio alarm will be activated and the apparatus 10 will be stopped. Assuming that the carriage 66 has been moved into the ultraviolet section 64 as indicated by the sensor, the chucks continue to rotate at approximately thirty revolutions per minute for a predetermined time. The computer activates an internal clock or timer which turns on the ultraviolet light 98 until the time cycle is completed. The ultraviolet light 98 is checked to verify it is operational. If the ultraviolet light 98 is inoperable, this condition is displayed on the monitor 34, the audio alarm is activated and the apparatus 10 is stopped. Assuming that the light 98 is functional, after the time period expires, the light 98 is turned off and the rotation of the chucks 72-75 is discontinued. The carriage drive is now signalled by the computer 32 to return the carriage 6 to the forward position and a sensor checks that this condition has occurred. If for some reason the carriage 66 fails to return to the forward position, the audio alarm is activated, a display is presented on the monitor 34, and the apparatus 10 is stopped. At this point a process lamp 224 is turned off, indicating to the operator that the coating on the molds has been properly cured.

The computer 32 now checks the resin level in each individual cannister 140 to see that resin is available. If there is an adequate supply of resin to fill the mold and gasket assembly being processed, the audio alarm is activated and a display is presented on the monitor 34. If this condition is present, the operator will restock the resin dispensing unit 24 in accordance with a preset procedure and the resin verification cycle will be repeated An audio signal such as a short sequence of three beeps will be activated by the computer indicating to the operator that the inappropriate quantities of resin are available. The computer now activates the LED 226 (Fig. 1) over the stack of gaskets 30 corresponding to the correct gasket to be used to process the lens being made. The operator will manually remove the gasket from the correct rack 16 and scan this gasket with the bar code reader. Upon scanning, the data is inputted to the computer which verifies that the correct gasket has been selected corresponding to the job record being processed. If the operator has selected the wrong gasket 30, the monitor 34 will display a visual signal to the operator and the audio alarm will be activated. This indicates to the operator that he must replace the reselect the proper gasket. Assuming the correct gasket has been selected, the gasket indicator LED 226 is turned off and there is a record created in the internal memory of the computer. This record is used to monitor the supply of gaskets available, allowing automatic reorder entry when additional gaskets have to be supplied.

The operator now places the gasket 30 onto the mandrel 134 of the mold assembly and alignment fixture 22. There is a sensor which indicates to the computer 32 that the gasket 30 is in place. If this condition is not present, again the audio alarm is activated and a visual signal is displayed on the monitor 34 indicating to the operator to replace the gasket 30 or remount it correctly. With the gasket in place, the computer 32 turns on the vacuum chuck of the shuttle 106. The computer 32 at this points turns on the LED 228 (Fig. 4) of the mold coater 14 indicating to the operator that this mold can now be removed and placed on the vacuum chuck of the mandrel 136. The computer 32 verifies through a sensor signal from the mold coater 14 that vacuum is applied to all four vacuum chucks. This will proviee a signal upon removal of the right front mold that there is vacuum on the chuck for the right front mold. If this condition is not present, there will be a display on the monitor and the audio alarm will be activated, indicating to the operator to follow a corrective procedure. Assuming that this condition prevails, i.e., that vacuum is applied to all four chucks and only the right front mold chuck is not pulling a vacuum because the right front mold has been removed. With this condition prevailing vacuum for the mold coater is turned off and the right front mold LED 232 of the mold coater 14 is turned off. When the operator places the mold on the first station of the mold assembly unit, the operator depressed the foot pedal 222 to engage the vacuum to hold the mold in position. If vacuum is not present, the audio alarm and the visual display appears on the monitor of the computer. If this condition is present, the operator will follow a corrective procedures to make certain that vacuum is established in the first station.

The computer at this point turns on the LED for the right back mold indicating to the operator that this mold should be removed and placed in the station of the mold assembly fixture. The operator removes the right back mold, placing it on the vacuum chuck of the mandrel 136 and activates the vacuum to hold the right back mold in position by depressing the foot pedal 222. Again the computer 32 verifies that the right back mold has been removed by checking the sensors on the vacuum chucks in the mold coater. At this point in the operation, the right front and right back mold chucks will not be pulling vacuum and the left front and left backs will. If this condition does not prevail, the audio alarm is activated and a visual signal is displayed on the monitor indicating to the operator to take corrective action. Assuming that the apparatus is operative, the right back mold LED 232 of the mold coater 14 is turned off. If the vacuum is not present as indicated by the sensors at this unit, the audio alarm is activated and a display on the monitor 34 occurs indicating to the operator to take corrective action.

The computer now verifies that the mandrels 134 and 136 are both in the home position. In other words, the gasket is on the mandrel 134 situated above the right front mold and the right back mold is held by the vacuum chuck of the mandrel 136 in a raised condition. If this condition at both mandrels 134 and 136 does not prevail, as indicated by the sensors, the computer will retract the mandrels at both stations to home position and the computer will recheck and verify this condition. An interlock system is also verified to make sure that no unwanted objects are present which would interfere with the assembly of the molds or the operator. With the interlock verification checked and the interlock system released, the right front mold is inserted into the gasked 30 by the computer activating the drive cylinder for the mandrel to force the right front mold into the bottom opening of the gasket 30 held on mandrel 134. If for any reason the interlock is inoperable, the audio alarm is activated, a display occurs on the monitor 34 and the apparatus 10

15

operations are stopped until the problem is corrected and the operator notifies the computer 32 by input through the keyboard 210. The computer 32 will then reverify that the mandrels 134 and 136 are in the home position.

The timer is activated when the front mold 28 is inserted into the gasket 30. At the end of the time cycle the mandrel is retracted, raising it to the position shown in Fig. 12. The computer 32 verifies that the mandrel 134 has been moved to the home position and if not, the cycle is repeated.

Upon successful return of the mandrel 134 to the home position, the shuttle 106 is activated by the computer 32 turning on its drive motor (not shown) to move the shuttle to the second position, bringing the assembly of the right front mold and gasket 30 to beneath the mandrel 136 immediately below the right back mold which is held by vacuum above the gasket 30. A sensor verifies that the shuttle 106 has been moved to the second position. Failure to sense this condition will cause the computer 32 to recycle the operation.

At this point the computer will actuate the rotary drive for the second mandrel 136 to set the axis alignment of the right back mold. A sensor checks for verification of proper alignment and, if this condition is not present, the axis alignment cycle will be repeated. With the axis alignment set, the drive cylinder (not shown) for the mandrel 136 is activated by opening a valve automatically under solenoid control by the computer 32. This will cause the mandrel to move downwardly, forcing the right back mold into the open upper mouth of the gasket 30. A time cycle is activated at this point which upon expiration of the time cycle, will turn off the vacuum of the mandrel 136, releasing the front mold from the vacuum chuck. The mandrel 136 is retracted and this condition is verified by sensor which signals the computer. If this condition does not prevail, the cycle is repeated.

Upon successful assembly of the front and back molds in the gasket 30, the shuttle 106 is moved by its drive motor being activated by the computer 32 to return it to the home position beneath the mandrel 134. Upon verification that the shuttle 106 has been returned to the home position, the mold and gasket assembly is moved into the fill pocket 139. If either the shuttle 106 fails to return to the home position or the assembly is improperly lodged in the fill pocket, these cycles will be repeated. With the assembly in the fill pocket, vacuum on the rear mold is released.

The computer verifies that the sweeper 208 is in the home position using a suitable sensor to detect this condition. If not, the sweeper retraction cylinder (not shown) is activated to set the sweeper in the correct position to enable it to sweep off said mold and gasket assembly into the accumulator station after the assembly is filled with resin. With the sweeper 208 in position, verification of the shuttle position is next confirmed to insure that the shuttle has been returned to the home position. The cycle is repeated if this condition does not prevail.

Assembly of molds and gaskets is now in the fill pocket 139, with the fill channel 118b and vacuum channel 118a of the gasket being respectively aligned with the nozzle 184a of the resin dispensing head 38 and the vacuum nozzle 198. In accordance with the prescription to be filled, the computer activates the drive motor 194 for indexing the dispensing head 38 to the home position. This condition is verified, and upon verification, the computer 32 will index the proper nozzle 184 to align it with the fill channel 118b. This nozzle 184 is then inserted into the fill channel 118b by the computer 32 activating the cylinder 204 which tilts the mold and gasket assembly upward at about a 10 degree angle. A vacuum senses this condition. If this condition is not sensed, the cycle is repeated. At this point the computer 32 activates a compressor (not shown) which applies pressure to the plunger 168 of the cannister 140, forcing resin through the tube 156 and nozzle 184 into the space 40 between the molds 28. When the resin fills the space 40 between the molds 28, this is sensed and the computer 32 terminates the flow of resin by removing the pressure being applied to the plunger 168. The computer 32 then automatically returns the assembly to a horizontal position, which condition is sensed and the exhaust device 196 is terminated. The computer 32 activates the drive for the sweeper 208 which pushes the filled assembly into the accumulator station 42. The sweeper 208 is then retracted. This condition is sensed by a switch that indicates that the sweeper 208 has been returned to the home position. If this condition is not verified, the sweep retraction cycle is repeated. The shuttle cylinder is activated to move it to the first position which is verified. The apparatus is now in condition for a second lens.

After all the gasket assemblies have been filled with resin, the operator places them in the oven or ovens 26 as the case may be. The ovens 26 subject the resin to a heat cycle which will cause solidifcation. The typical time cycle will be overnight, however, shorter time cycles may be utilized depending upon the resin formulation. When the heat cycle has been completed, the operator removes the molds and gasket assembly from the oven 26. Because the mold surfaces have been coated with a suitable release agent, the operator can easily disassemble the molds by twisting the gasket 30, allowing the molds 28 to pop out of the gasket. The gasket 30 is discarded. The operator uses the wand to read the bar code on the molds and places a tag on the lens with a bar code which is scanned by the wand to indicate that the job has been completed. The computer advances the conveyor of the mold storage unit 12 to bring the appropriate mold package 48 to the correct dock 56. The light 58 over the dock will be lit, indicating to the operator that the wanded mold should be placed in this particular container.

Preferably, the lenses are then placed in the oven for approximately one-half hour to subject them to a post curing operation and then they are returned to the mold coater to be subjected to a post UV curing. The lenses upon completion of this post UV curing are then placed in a job tray along with the ticket for trimming and assembly in the frames. Each lens is placed in a job tray along with the printout ticket 212 indicating the patient, prescription, and any other pertinent information associated with this particular job. In the course of a few hours at the end of the day the operator can manufacture ten to twenty lenses which would be the usual number of lenses prescribed during the course of an average day. If an exceptionally high volume occurs, the second oven would be employed to cure these lenses.

## DETAILED DESCRIPTION OF PREFERRED EMBODIMENTS OF THE INVENTION

In order to more fully appreciate the present, preferred, embodiment of the present invention, a spectacle lens forming workstation which uses components of the present embodiments, will first be described. This will be followed by a more detailed description of various aspects of the present embodiments, including a description of the method of the present invention for producing a lens coated with an abrasion resistant coating on front and back surfaces thereof, as well as the resulting lens.

### Spectacle Lens Forming Workstation

The lens forming workstation is shown in Figure 1B. This lens forming station is arranged for operation with minimal operator intervention. Mounted thereabove is a gasket dispenser 804 for dispensing gaskets of a type such as those gaskets described below. Likewise, a mold holder and dispenser 680 stores a plurality of different molds therein, any one of which can be dispensed at dispensing door 682. A counter 806 is provided as a working space, upon which the selected gasket and molds can be identified using scanner 802 connected to a computer 800. The molds can be spin coated with a monomeric coating, such as a coating which is abrasion resistant when polymerized, in spin coater 2a, which is described in more detail below. A rear compartment 20a contains an actinic light source which can polymerize the monomeric coating which is spin coated on the molds.

A spectacle lens form assembly apparatus 200a, which is described in detail below, receives both the chosen gasket and coated molds, in a manner which is described in detail in that application, and assembles them to produce form. form assembly apparatus 200a includes a form filling station which receives a form so assembled, and fills it with premixed resin pumped from storage in a refrigerator 400. The filling station is disposed in a cooled housing 402, cooled by means of a fan (not shown) which circulates cold air from refrigerator 400 into housing 402. The resin dispenser mechanism within refrigerator 400 is more fully described above. A form accumulator 338 of the form assembly apparatus 200a, receives filled forms from the resin injection station. Two ovens 500 are disposed above the form assembly apparatus.

Briefly, the operation of the overall lens forming system is as follows. The operator enters the lens prescription in the computer 800 and is directed to select for each lens, a gasket and two molds suitable for the prescription, from gasket dispenser 804 and mold dispenser 680, respectively. The molds can be seated on spin coater chucks 63a of spin coater 2a, and spin coated therein if desired, typically with a monomeric polymerizable coating. Spin coater chucks 63a, with the molds still retained thereon, are then moved to rear chamber 20a, where they are exposed to a suitable dose of actinic light, in order to partially polymerize the coating. When chucks 63a are again moved to the position shown in Figure 1B, the coated molds can be removed therefrom. The operator then positions the coated molds and gasket in a form assembly apparatus 200a, in a manner described in more detail below, which apparatus assembles the form from them, fills the form with resin, and deposits filled forms on accumulator 338.

The operator can then removed the filled forms from accumulator 338, and place them within either of two ovens 500. which are controlled for suitable curing cycles. A typical curing cycle would be for an initial 15 hours commencing at 105° F. and ramped to increase to 145°°. Following curing of the resin, the form can be disassembled, the gasket typically disposed of, and the molds returned to mold retaining and dispensing apparatus 680. If desired, the lenses may be returned to chucks 63a of spin coater 2a, which are then moved to rear chamber 20a in order to expose the partially polymerized coatings, to a further suitable dose of actinic light, and thereby completely polymerize them to a degree which provide suitable abrasion resistance.

Having thus described the overall lens forming station of the present embodiment, further aspects of this embodiment will now be described in detail.

## Gasket

The gasket of the present invention, as best seen in Figures 2A and 3A, has a hollow, resilient body 100a which is outwardly bowed when no molds are seated therein, as best seen in Figure 3A. Body 100a has opposed first and second open ends 102a, 104a, respectively, and an inside surface 105a of substantially circular radial cross-section throughout its axial length. Inside surface 105 though, tapers inwardly (i.e., has a decreasing diameter) from respective open ends 102a, 104a. Two annular slote 106a, 107a are disposed on inside surface 105a, and are separated by annular, inwardly extending lip 108a, which is made of the same resilient material as the remainder of Gasket 100a, and as a result is compressible. That is, lip 108a is compressible in an axial direction, at least at the curing temperature of the resin which will be used to form a lens. A conduit 112a acts as a resin inlet conduit, communicating between an inlet 114a and a resin injection port 116a disposed on axially extending shoulder 111a. Another conduit 118a acts as an outlet conduit communicating between outlet 119a (which is diametrically opposed to inlet 114a), and a vacuum injection port 120a disposed on an axially extending shoulder 117a. Inlet 114a and outlet 119a lie on a plane perpendicular to the axis of body 100a. Both conduits 112a, 118a have port portions 112b, 118b respectively, which are of greater diameter than interior portions 112c, 118c, and have respective tapered portions 112d, 118d extending between port portions and interior portions.

Slots, 106a, 107a are dimensioned to sealingly engage against·annular· flanges 122a, 128a of mating, first and second molds 120a, 126a, respectively, when such molds are in their respective seated positions, as best shown in Figure 4A. First and second molds 120a, 126a, each have a pair of diametrically opposed indents 123a and 129a, respectively, which extend partway into flanges 122a, 128a, for purposes of establishing relative rotational angles of molds 120a, 126a, in a manner described below. Molds 120a, 126a also have respective molding surfaces 124a, 130a, which correspond to the optical surfaces of the lens which is to be formed. In a typical case, molds 120a, 126a will define the front and back surfaces, respectively, of a lens formed thereby.

Gasket 100a is used to produce a form in conjunction with mating molds 120a, 126a, simply by inserting the molds through respective open ends 102a, 104a of gasket 100a, until they are in their seated positions as shown in Figure 4A, with Flanges 122a, 128a sealingly engaged within slots 106a, 107a respectively. Such insertion is facilitated by the inwardly tapering diameter of the inside surface 105a, as previously described. Further, due to the dimensioning of slots 106a, 107a with respect to the dimensions of flanges 122a, 138a, when the molds are in their seated positions, resilient body 101a is caused to bow inward in a manner best seen in Figure 4A. Such a configuration tends to urge molds 120a, 126a in a direction toward one another.

Thus, when gasket 100a is assembled with mating molds 120a, 126a, a spectacle lens form is produced as shown in Figure 4A, which includes a cavity 139a conforming to the shape of the lens to be formed, and includes a resin injection port 116a and diametrically opposed vacuum injection port 120a.

A particularly useful back mold of the present invention, for use in the foregoing manner in conjunction with a front mold, and a gasket such as gasket 100a, will now be described.

## Back Mold

A back mold 140a of the present invention is shown in Figures 5A-7A. Back mold 140a is particularly useful where it is desired to maintain a series of molds, each with an outer annular flange of the same diameter, so that all uncut lenses case thereby will also have the same diameter. Back mold 140a might be used for example, when the uncut, finished lens is to have a diameter of about 75 mm, the outer diameter of an annular flange is to be about 82 mm, and the lens prescription calls for a cylinder of 1.25 or higher. Annular flange 142a of back mold 140a, has diametrically opposed indents 144a therein, both the same as already described in connection with molds 120a, 126a in Figures 2A and 4A. However, molding surface 146a which corresponds to the back surface of the lens to be formed, is composed of both cylindrical and spherical elements, thus defining othogonal axes along the line 6-6 and 7-7, of least and greatest curvature, respectively. As seen in Figure 7A, molding surface 146a has end portions about the axis of least curvature which are coplanar with flange 142a. On the other hand, surface 146a also has end portions 154a about the axis of greatest curvature which extend past flange 142a.

The foregoing mold is used in the same manner as molds 126a previously described. The advantage of the configuration of this mold 140a, is that it can have a high cylinder even though flange diameter 142a is maintained constant with other spherical molds, while still maintaining the same useful area of molding surface 146a as such spherical molds, while at the same time does not present any vertical surfaces, as viewed in Figures 6A and 7A, disposed inward of flange 142a. Any such inwardly disposed vertical surfaces, could .allow resin to grip thereagainst during the shrinking which occurs in curing, thereby increasing the difficulty with which the mold can be separated from such cured resin. On the other hand, resin disposed between wall segments 156a and end portions 154a of molding surface 146a, will tend to shrink in the direction of the axis of mold 140a, and hence away from wall segments 156a. Since second surface portions 154a are convex, such shrinking resin will not firmly grip those surface portions.

When a back mold of the foregoing dimensions (approximately 75 mm molding surface diameter and 82 mm flange outside diameter) is required, and the cylinder is to be less than 1.25, a lenticular back mold 160a shown in Figures 7AA, 7AB, 7AC, may be used. Mold 160a is of the same construction as mold 140a, except that end portions 154a of mold 140a, are replaced with flat sections 162a which are coplanar with flange 164a. The disadvantage of mold 160a is that, when a cylinder of about 1.25 or higher is required, flat sections 162a increase in surface area thereby reducing the useful optical surface area of a lens formed from a mold of the type of mold 160a, to a low proportion of the overall surface area of the lens.

## Form Assembly Apparatus

The form assembly apparatus of the present invention, generally designated 200a in Figure 1A, will now be described in detail with reference to Figures 8A-14A in particular. It will be understood that in such description, the use of terms such as "lower", "upper", etc. are relative only, and are used in reference to the apparatus in the normal operating position.

Form assembly apparatus 200a then, has a frame 204a and two rails 265 extending in a lengthwise direction of frame 204a. A carriage 266 is slidably mounted on rails 265, and is shown in solid lines in a home position in Figure 11A, and in phantom lines in a forward position. Carriage 266 carries a first mold retainer 206a which is dimensioned to receive and releasably retain thereon, a first mold, which in this particular case is a front mold. To accomplish this, carriage 206a has a generally concave surface 209a with two diametrically opposed pins 208a in an outer, upper periphery thereof. Pins 208a serve as a portion of an indexer, the remaner and function of which is described below. A resilient conduit, in the form of an upwardly extending bellows 210a communicates at its lower end with an opening 214a in the lower end of surface 209a, and has an open upper end 212a. Opening 214a communicates with a conduit in carriage 266, which in operation of the apparatus is connected to a vacuum source (not shown).

A form table 240a is also carried by carriage 266. Form table 240a includes a form carrier 220a, in the form of an annular recess on table 240a. Form carrier 220a is capable of holding an assembled form of the type previously described, specifically by having the gasket thereof rest within the annular recess. Carrier 220a has an axis 221a. Form table 240a can be raised and lowered by a pneumatic cylinder 242a which acts as a reciprocating drive for table 240a, cylinder 242a being attached to a tilt plate 223a which in turn is pivotally mounted on arms 225a of carriage 266. Pin 226a, and pin and slot combination 228a, allow tilt plate and hence, form table 240a, to be tiltable in a forward direction (that is generally to the right as shown in Figure 8A). To accomplish this tilting, a tilt actuator in the form of a pneumatic cylinder 244a is mounted on carriage 266, with a connecting rod 246a of cylinder 266 being pivotally connected to a base 243a of cylinder 242a. When rod 246a is pulled inwardly by cylinder 244a, it pulls base 243a, thereby causing tilt plate 223a and form table 240a to tilt in the forward direction.

Form table 240a further carries two guides 248a, which are spring loaded to normally extend as shown in Figure 8A, but can be urged to the left as viewed in that Figure, to a retracted position. Each guide 248a has two sloping shoulders 249a, which intersect the annular recess of form carrier 220a, when guides 248a are in the retracted position. An actuator bar 339 can be pushed by a pneumatic cylinder (not shown) to abut and push guides 248a to their retracted position when carriage 266 is in the forward position shown in broken lines in Figure 8A.

A sweep arm 262 is slidably mounted on a guide 255, extending from a limiter block 258 in turn mounted on carriage 266, guide 255 having a spring 257 thereon adjacent block 258. Sweep arm 262 is also pivotally mounted upon guide 255 at pivot point 261, and can be pivoted in a forward direction from the home position shown in Figure 8A, to a position forward thereof and over at least one portion of form carrier 220a. The foregoing arrangement is such that when arm 262 is pushed by a pneumatic cylinder 264, arm 262 will first slide on guide 255 over table 240a until it reaches limiter block 258. At that point arm 262, under further urging of cylinder 264, will pivot in a forward direction about pivot point 261.

A gasket holder 272, having an axis 278, is mounted on frame 204a by way of a head plate 280 and two reciprocal guides 282 (only one of which is shown in Figure 8A). A cylinder (not shown) is also connected to head plate 280 in a manner similar to guides 282 in order to act as a reciprocating drive which can reciprocate gasket holder 272 with respect to first mold retainer 206a, when axes 207a and 278 are aligned as shown in the solid line positions in Figure 8A. As best shown in Figures 9A and 10A, gasket holder 272 is dimensioned with a torodial annular space 274 and diametrically opposed slots 276, such that a gasket of the type previously described, can be snugly friction fitted within gasket holder 272. An air inlet 281 communicates through a conduit (not shown) which extends to a position adjacent the uppermost part of torodial space 274, so that air may enter space 274 form inlet 281 for purposes which will later become apparent.

A second mold retainer 286 is disposed on frame 204a in a forward direction of gasket holder 272, and is attached to frame 204a through plate 302 and two reciprocal guides 315 (only one of which can be seen in Figure 8A). Further, a pneumatic cylinder (not shown) has its housing end attached to frame 204a, and its piston end attached to plate 302, so as to act as a reciprocating drive which can reciprocate second mold retainer with respect to first mold retainer 206a, when an axis 288 of second mold retainer 286 is aligned with axis 212a of first mold retainer 206a, and can reciprocate second mold retainer 286 with respect to form carrier 220a when axes 288 and 221a are aligned. Second mold retainer 286 is similar in construction to first mold retainer 206a except that second mold retainer 286 is positioned with a downwardly facing flat surface 290, and has a rubber bellows 294 which is longer than bellow 210a of first mold retainer 206a, and extends to a position downwardly beyond surface 290. Bellows 294 has an open lower end at 296, and an upper end 298 communicating with an opening (not shown) in an uppermost portion of surface 290. That opening, in a similar manner as opening 214a, communicates with a suitable conduit to which a vacuum can be applied to bellows 292. Second mold retainer 286, also has tow diametrically opposed pins 292, similar to pins 308.

A collar 303 is slidably mounted on second mold retainer 286, for limited travel thereon, between an upper position in which an upper end 303a abuts plate 302, and a lower position in which a lower end 303b extends below surface 290. A spring (not shown) urges collar 303 to the lower position.

A rotatable shaft 304 is rotatable in fixed increments by stepper motor 312 acting through plastic chain 314 and sprocket 305 to rotate the second mold retainer 286 in fixed increments. Immediately disposed below sprocket 305 to rotate therewith, is a circular positioning plate 306 having a hole 208a therein. A sensor 310, typically consisting of a light emitting diode and photocell, has a slot through which plate 306 can pass such that sensor 310 can determine the position of hole 308, so that the relative rotational angle of second mold retainer 286 with respect to first mold retainer 206a can be determined using sensor 301 and stepper motor 312, both controlled by appropriate means such as a computer. Thus, pins 208a and 292 of first and second mold retainer 206a, 286, respectively, in conjunction with stepper motor 312 and associated chain and sprocket drive, and plate 306 and sensor 310, can act as an indexer which can establish an initial relative rotational angle molds retained by respective mold retainers, and adjust the relative rotational angle to any preselected value required by a prescription.

The apparatus also includes a form filler with a vacuum injector 320, having a vacuum injector nipple 324 and a solenoid valve therein (not shown) which is activated electrically to turn a vacuum to nipple 324, or off. The form filler has a resin injection table 326, which in turn has a carousel 328 rotatably mounted upon frame 204a to be rotated in fixed increments by a stepper motor 335. An optical sensor 329 is used to ascertain the rotational position of carousel 328 in a similar manner as plate 306 and sensor 310 is used to ascertain the relative rotational angle of second mold retainer 286. Six resin dispensers 330 are mounted in carousel 328 (only one of which is shown in Figure 8A for simplicity), each of which has a resin injection nipple 332 and an electrical solenoid valve disposed within it to turn a flow of resin through resin dispenser, and hence nipple 332, on or off. Vacuum injector 320 and carousel 320 (and hence all of the resin dispensers 330) are tilted in the forward direction of the form assembly apparatus, at an angle to the horizontal of about ten degrees. Resin dispensers 330 and vacuum injector 320 are spaced such that the respective nipples of an injector at a position 331 of the carousel 328, and the vacuum injector 324, are diametrically opposed about an axis of form table 240a when tilted. As a result, nipples 322 and 324 can mate with resin injection and vacuum injection ports in an assembled form of a type already described, when such form is seated on form table 240a and raised by solenoid 242a while simultaneously being tilted by rod 246a.

Operation of the foregoing form assembly apparatus, will now be described. Such operation is illustrated sequentially in Figures 9A to 15A. First, carriage 266 if not already in the home position as shown in solid lines in Figure 8A, is slid thereto by means of its piston drive (not shown). Then the operator places a selected gasket, such as gasket 100a, into gasket holder 272, such that the gasket is frictionally retained in torodial space 274 and recesses 276 by friction, with its resin and vacuum injection ports 116a, 120a facing upwardly. A front mold such as mold 120a, is then seated on first mold retainer 206a such that its concave, casting surface 124a is facing upward, with pins 208a of first mold retainer 206a extending through indents 123a of the first mold 120a. Since pins 208a are fixed with respect to axis 207a and indents 123a have been previously established on mold 120a at a preselected location (for example, a non axially symmetric mold such as one with a bifocal element, may have indents 123a along a line parallel with such bifocal element), pins 208a thereby establish a reference position of front mold 120a with respect to which the rotational angle of a back mold, such as mold 140a may be established. When the front mold 120a is seated upon first mold retainer 206a, upper end 212a of bellows 210a will abut its convex surface, such that when a vacuum is applied to the interior of bellows 212a through opening 214a, mold 120a will be urged downwardly. Thus mold 120a will be firmly, and releasably retained upon first mold retainer 206a in a manner shown in Figure 9A.

At this time also, an operator would normally seat a back mold, such as back mold 140a of Figures 5A-7A, on second mold retainer 286, with its convex casting surface 146a being oriented downward and with indents 129a being engaged upon pins 292. In such operation a vacuum would be supplied to bellows 294 through opening 298, to retain back mold 140a in a seated position against second mold retainer 286, in a similar manner as front mold 120a is retained seated on first mold retainer 206a. Bellows 296 may initially offer resistance to seating back mold 140a on second mold retainer 286. However, as the vacuum increases therethrough (typically within about one second) it will draw mold 140a onto mold retainer 286, from the position shown in broken lines in Figure 11A, to the position shown in solid lines therein.

Pins 208a and 292 of the indexer, by virtue of the prepositioned indents 123a and 129a in each mold, automatically establish an initial relative rotational angle of the molds with respect to one another when the molds are seated upon their respective mold retainers. Other components of the indexer, namely stepper motor 312, chain 314, sprocket 305, shaft 304 and position plate 306 and sensor 310, can rotate back mold 126a with respect to front mold 120a to adjust the relative rotational angle of the molds to a preselected value, which value is in turn determined by the particular lens prescription. Preferably, the foregoing operation is under control of a computer, such as computer 2a shown in Figure 1A, which known both the particular molds selected to prepare a lens of the desired prescription, and the initial relative rotational angle of back mold 126a with respect to front mold 120a (since it knows the rotational positioning of second mold retainer 286 by virtue sensor 310 having previously determined the position of hold 308 on position plate 306). Of course, if either one of the front or back molds called for by the prescription is symmetric about its axis, then no rotation of back mold 140a by second mold retainer 286 will be required.

Prior to actual operation of assembly apparatus 200a, part of the lens prescription will call for either a clear lens, or perhaps a lens tinted with a particular color. To accomodate this resin type requirement of the prescription, carousel 328 will be rotated by stepper motor 335 if required, in order to position the resin dispenser 330 connected to the appropriate resin supply, in position of the one resin dispenser 330 shown in Figure 8A. At this point, form assembly apparatus 200a is now ready to assemble the form.

First cylinder 284 is activated to move gasket holder 272 downward toward first mold retainer 206a, such that front mold 120a retained on the latter, will be inserted through open end 102a of gasket 100a and into its seated position, as shown in Figures 9A and 10. The resulting subassembly is retained upon first mold retainer 206a, with front mold 120a simply remaining seated upon first mold retainer 206a, and a lower portion of gasket 100a being accommodated within an annular recess 216a. At this point, the vacuum remains applied through bellows 210a. Cylinder 284 then moves gasket holder 272 upward. Air may enter through inlet 281, to insure that gasket 100a does not remain seated within holder 272 at such time. Carriage 266 is then moved by its driving piston in a forward direction to a forward position as shown in phantom lines in Figure 8A. In such position, axes 207a and 288 will be aligned. Second mold retainer 286 is then moved in a downward direction by its associated cylinders, to insert a back mold 126a through open end 104a of gasket 100a and into its seated position therein in a manner shown in Figures 11A and 12A. While this is occurring, lower end 303b of collar 303 will abut the gasket, causing slide 303 to be moved toward its retracted position in relation to second mold retainer 286 (since slide 303 is stopped in its travel by the gasket, while retainer 286 continues to move downward). At this point, vacuum through bellows 210a is turned off such that when cylinder 316 lifts mold retainer 286 upward, it will retain the entire assembled form thereon by means of the vacuum through open end 296 of bellows 294 against back mold 140a, as shown in Figure 13A.

Carriage 266 is then driven by its associated pneumatic drive cylinder back to its home position such that axis 221a of form carrier 220a is again aligned with axis 288. Cylinder 316 is again activated to move second mold retainer 286 downward to its lower mold position as shown in Figure 12A. At this point, also the vacuum in rubber bellows 294 is turned off and the form is thereby deposited upon form carrier 220a. Slide 303, by virtue of its associated spring urging it downward from the retracted position, and by it abutting gasket 100a, ensures that the subassembly is separated from second mold retainer 286. Carriage 266 is once again moved by its drive cylinder to its forward position shown in broken lines in Figure 8A. At this point, a signal generated by a sensor 336 determining the presence of carriage 266 in its forward position, is used to activate tilt actuator cylinder 244a such that rod 246a pulls base 246a of solenoid 242a. Referring in particular to Figure 14A, this causes plate 223a to pivot about pin 226a and thereby tilt in the forward direction at an angle of about 10 degrees to horizontal, as already described. Then, pneumatic solenoid 242a is activated to raise from table 240a into an upper position such that resin injection port 116a of gasket 100a becomes sealingly engaged upon nipple 332 (i.e., "mates" therewith), while a vacuum injection nipple 324 is also engaged within vacuum injection port 120a but not sealingly engaged therein. The foregoing engagement is best shown in Figure 15A. The presence of wide port portions 112b and 118b of conduits 112a and 118a respectively, help to allow their respective injector to become engaged therein, with tapered portions 112d, 118d further acting to guide respective needles into position. A microswitch sensor (not shown) indicates gasket 100a of the form is in place and properly positioned for filling.

Electrically controlled solenoids within resin dispenser 330 and vacuum injector 320 are then activated such that resin is injected into the lens forming cavity 139a of the form, while air is simultaneously withdrawn therefrom. Vacuum injector 130a will also draw air from outside gasket 100a. The fact that at this point outlet 119a will be disposed at a position higher than inlet 114a aids in removal of air from cavity 139a, and hence along with the application of vacuum to port 120a, reduces the possibility of air bubbles in the cast lens, which could make such lens useless.

When cavity 139a is completely filled with resin and resin begins to enter vacuum injection nipple 324, as shown in Figure 16A, a vacuum sensor disposed within injector 320 will produce an increase of vacuum signal, which is used to shut off the solenoids within injectors 320 and 330. Following this, pneumatic solenoid 242a is again activated to lower table 240a, and rod 246a extended by cylinder 244a to bring tilt plate 223a to its horizontal position.

Referring in particular now to Figure 16A-18A, bar 339 is then moved by a pneumatic cylinder (not shown) to push guides 248a to their retracted positions such that bevelled shoulders 249a will partially lift gasket 100a of the assembled form from annular form carrier 220a, and completely guide gasket 100a out of carrier 220a when the form is pushed in the forward direction. The filled form is then swept from form carrier 220a across guides 248a and onto an accumulator 338, by means of sweeper arm 262 moving forwardly and then pivoting under the application of force from cylinder 264 in a manner already described, and shown in broken lines in Figure 18A. Cylinder 264 then returns sweeper arm 262 to its home position as shown in solid lines in Figure 8A. At this point, the filled, assembled form can then be removed from accumulator 338 for placement in one of ovens 500, as previously described in connection with the operation of the lens forming workstation of Figure 1A.

It will be seen that the entire operation of form assembly apparatus is readily automated, and in this regard is preferably controlled by a computer which senses the position of various elements of the apparatus by means of limit switches or sensors such as sensor 336, sensor 310, and other sensors and limit switches (not shown) which insure that the reciprocating drives for gasket holder 262, second mold retainer 286 and carriage 266 do not attempt to move those elements beyond their required positions, and inform the computer when those elements are in their various position.

Thus, as described above a gasked is provided by the present invention, which when assembled with a pair of molds produces a spectacle lens form which automatically compensates for shrinkage of resin therein during curing, without the need for any external means such as spring clips, to urge the molds toward one another. Further, as shown, such gasket readily lends itself to automated assembly with the molds as well as convenient and complete filling of the resulting form, with a relatively effective removal of air therefrom during filling. A particular type of back mold has also been disclosed for use in a situation where a spectacle lens prescription calls for a high cylinder, and it is desired not to unduly reduce the useful optical surface area of the cast, uncut lens, while at the same time maintaining a relatively low possibility that shrinking resin in the assembled form, will grip such a mold and make it impossible to properly detach it from the cast cured lens. An apparatus has also been disclosed for assembling such a gasket with a pair of molds, while allowing for automatic adjustment of the relative rotational angle of the molds with respect to one another, and providing automated filling of the form in a clean, efficient, and accurate manner with minimal operator intervention except to seat the gasket and molds thereon, and remove the filled form therefrom.

Spin Coater

Referring particularly to FIGS. 2B-5B, spin coater 2a consists of a housing 4a having front and rear chambers 6a, 20a, respectively, separated by wall 9a. Front chambers 6a has two opposed sides 7a and two hingely mounted doors 8a (one of which is shown in an open position in broken lines in FIG. 2B), each of which is made of a transparent plastic which has been darkened to reduce light transmission therethrough, such that chamber 6a is only visible therethrough when it is strongly illuminated. A plate 12a, having four circular openings 14a therein, defines another wall of front chamber 6a. Two infrared light fixtures 9a are capable of receiving respective infrared bulbs 10a therein, such that bulbs 10a face in a direction toward plate 12a. Fixtures 9a are adapted to receive bulbs 10a which are of a well known threaded base infrared floodlight variety.

Housing 6a further has a rear chamber 20a in which is disposed a metallic reflector 21a with a lower position 24a and a plurality of openings 23a disposed at an upper end thereof. An actinic light fixture, comprised of mounting sockets 26a, is disposd in rear chamber 20a, and more specifically within an upper end of reflector 21a. Sockets 26a are dimensioned to receive an actinic light 28a which is preferably a medium pressure mercury vapor light. Opposed ends of reflector 21a each carry three slots, 30a, 32a and 34a which act as guides for a shutter 36.

Specifically, shutter 36a consists of two rectangular sheets 38a, 40a which are hingedly mounted about a hinge 42a extending in a sideways direction of housing 4a. Shutter 36a is movable between a closed position, best seen in FIG. 4B, and an open position, best seen in FIG. 5B, by virtue of guides 44a extending from hinge 42a, guides 46a extending from an end of sheet 38a, and guides 48a extending from sheet 40a, sliding within respective slots 34a, 30a, and 32a. Shutter 36a is moved between the open and closed positions by means of a shutter trigger, consiting of an arm 52a which is an extension of guide 48a, and resilient spring 4 = 54 connected therefrom to a rear position 61a of a sliding drawer 60a. It will be seen from FIGS. 4B and 5B that when shutter 36a is in the open position, sheets 38a, 40a are spaced apart at an "interior angle" (that is the smallest angle between the two sheets 38a, 40a) which is less than the interior angle when they are in the open position shown in FIG. 4B. Thus, in the open position of shutter 36a sheets 38a, 40a are spaced apart at an interior angle greater than when shutter 36a (and hence each of sheets 38a, 40a) is in its closed position.

An alternative arrangement for the trigger, would be such that each of sheets 38a, 40a could be individually controlled thereby for movement to their open and closed positions.

Drawer 60a is slidably mounted on two rails 58a, which are in turn mounted within a lower end of housing 4a. This permits drawer 60a to slide between a front position best shown in FIGS. 2B and 4B, and a rear position best shown in FIGS. 3B and 5B. This movement is accomplished by a pneumatic cylinder (not shown), controlled by an external control switch.

Drawer 60a carries four spin coater elements 62a each having a spin coater chuck 63a (described in more detail below), rotatably mounted on drawer 60a by means of a hollow shaft 80a. Chucks 63a are positioned on drawer 60a such that they are in alignment with respective openings 14a in plate 12a and thus can be illuminated by infrared lights 10a when drawer 60a is in the front position, and can be illuminated by actinic light 28a mounted in sockets 26a, when drawer 60a is in the rear position and shutter 36a is open. Under the alternative arrangement for the trigger of shutter 36a, mentioned above, individual control of sheets 38a, 40a would allow timed exposure of the rearwardmost two of chucks 63a to actinic light 28a, to be different from that for the two forwardmost of chucks 63a. This could be particularly advantageous where, as described in the Example below, the exposure time of back molds is greater than that required for the front molds.

It will be seen particularly from FIGS. 4B and 5B, that the movement of drawer 60a on rails 58a, opens and closes shutter 36a. In particular, arm 52a and spring 54a are selected such that drawer 60a will open shutter 36a relatively rapidly (i.e., will tend to "snap" it open) as drawer 60a passes through a position adjacent to its rear position while being slid rearwardly. Such an adjacent or "trigger" position would be located at a point approximately when drawer 60a is two-thirds within rear housing 20a. Likewise, drawer 60a will tend to snap shutter 36a closed as it slides forwardly through such trigger position. It should be noted that drawer 60a is preferably slid on rails 58a between the front and rear positions, by means of a pneumatic motor (not shown) disposed within housing 4.

Returning to the construction of each of chucks 63a, it will be seen that each has a generally cylindrical body 64a with an open first end 66a, a second end 68a, and a generally cylindirical inside surface 67a extending between the ends. Finger grip recesses 65a are provided at upper end 66a, while lower end 68a of body 63a is provided with a vacuum opening 69a aligned with the axis of body 63a, and which is threaded to receive a matingly threaded, hollow shaft 80a. A mold seat is disposed adjacent open upper end 70a, the mold seat being defined by an annular ledge 70a, and an outwardly adjacent annular lip 72a, both of which extend about a mold seat axis which is coaxial with the axis of cylindrical body 64a and is coaxial with the rotational axis of the chuck 63a when rotated by shaft 80a. It will be noted that lip 72a projects in a first axial direction, or upward as viewed in the drawings. Likewise, a bellows 74a, which is resilient in its lengthwise direction, extends in the first axial direction toward an open first end 76a of bellows 74a. A second end 75a of bellows 74a is sealingly engaged with second end 68a of chuck body 64a. Bellows 74a will act as a vacuum conduit which is resilient in its lengthwise direction. In addition, the interior of bellows 74a communicates with the interior of hollow shaft 80a through vacuum opening 69.

Again, as previously mentioned, each chuck 63a is mounted for rotation by shaft 80a which, in operation of the spin coater, would communicate by means of an appropriate conduit with an external vacuum pump (not shown). Shafts 80a are rotatable by respective pneumatic motors 84a, interconnected by means of a drive belt 86a which also rotates a shaft of sensor 88a to measure the speed of rotation of motors 84a, and provide a speed indicating signal to a control apparatus which can control the amount of air delivered to motors 84a.

A fan 110a is mounted in housing 4a to draw air into housing 4a in the direction of arrow 111a, and circulate it therethrough in the direction of arrows, 111a, 112a, 113a, 114a, 116a and 117a (as best seen in Figures 3B, 6B and 7B), and hence through a filter (not shown) in the rearwardmost wall of housing 4.

## Operation of Spin Coater

First, drawer 60a is slid by its associated pneumatic cylinder (not shown) on rails 58a to its front position, if not already in such position. Fan 110a is turned on to circulate air in the manner already described. The four molds which have been selected for the particular spectacle prescription (two front molds and two back molds) are seated on respective chucks 63a. Preferably two of chucks 63a closest to rear chamber 20a are used for the back molds, and the other two chucks 63a are used for the front molds, in order to minimize subsequent incorrect matching of the molds. Likewise, the left two chucks 63a as viewed from doors 8a of front chamber 6a, would be used for the front and back molds of the left lens, and the right two chucks 63a used for the front and back molds of the right lens of the spectacle prescription.

Each mold is seated on its corresponding chuck 63a in a manner similar to that disclosed in FIGS. 6B-8B, which particularly shows seating of a back mold 100a. Back mold 100a is simply placed onto ledge 70a of the mold seat with lip 72a thereof accomplishing automatic centering of back mold 100a on the mold seat. Thus, in the spin coater of the drawing, back mold 100a is automatically centered on the axis about which chuck 63a will be rotated by shaft 80a. Due to the resilient nature of bellows 74a, the operator may find some resistance in pushing mold 100a all the way down onto ledge 70a. However, this will be unnecessary since simultaneously with the operator positioning mold 100a above the mold seat and in contact with first open end 76a of bellow 74a, an external valve (not shown) is also activated by the operator, preferably by means of foot switch activated by the operator, and the signal therefrom being directed by an appropriately programmed computer; to cause a vacuum through hollow shaft 80a and bellows 74a. As open end 76a of bellow 74a will sealingly engage against mold 100a, the vacuum within bellows 74a will increase tending to clamp bellows 74a against mold 100a, and at the same time pull mold 100a down to a position where it is urged firmly against ledge 70a and retained there. It will be noted that in the case of the front molds, the molding surface will be on the concave side thereof, so that the front molds will be placed with their convex side facing downward. The axial resiliency of bellows 74a can accommodate the then downwardly extending (as viewed in the drawings) convex face of the front mold.

A small amount of a polymerizable coating composition (typically an abrasion resistant coating composition), which is to form a coating on a finished lens, is sprayed on a central area of the molding surface of each mold. Examples of abrasion resistent polymerizable coating compositions are provided below, however use of the spin coater of the present invention is not restricted to such compositions. Further, U.S. Patents No. 3,978,178 to Oshima, No. 4,287,227 to Kamada et al., and No. 3,265,763 to Deichert, and U.S. Patent No. 4,306,954 Wendling, summarize many well known abrasion resistant compounds of a type which might be used in the practice of the present novel method.

At this point, chuck 63a will then be spun at a high rotational rate, typically about 750 revolutions per minute ("rpm"), while infrared light fixtures 8a, and hence infrared bulbs 10a, are energized typically for about one minute. When infrared lights are each 250 watts, this will be sufficient time to remove most of the coating composition solvent by evaporation.

Drawer 60a is then slid to its rear position by means of the pneumatic piston (not shown), again preferably automatically by means of a control such as a computer control, which insures that the proper time for spin coating has elapsed. As drawer 60a moves rearwardly past the trigger position, shutter 36a is snapped relatively quickly from its closed position in FIG. 4B to its open postion in FIG. 5B. This arrangement allows medium pressure mercury vapor light 28a disposed in actinic light fixture sockets 26a, to remain on constantly and thereby avoid a warm-up period each time drawer 60a is moved into the rear position, while allowing for a relatively precise timing of the exposure of the coated molds to actinic light from light 28a. When sufficient time as elapsed, usually about 4-10 seconds, drawer 60a is then slid in a forward direction to its front position, and while passing through the trigger position will snap shutter 36a relatively quickly into its closed position.

When drawer 60a is again in its front position, the molds with their partially polymerized coating thereon, can be removed from their respective spin coater chucks 63a and inserted into a gasket 112a in a manner shown in FIG. 9B, to produce an assembled form as shown in FIG. 10B. Assembly of the form is more fully described in copending U.S. Patent application entitled "Lens Forming Apparatus" supra. A cavity 120a is then filled with resin which is then cured, again as described in the foregoing application, and a resulting lens 130a shown in FIG. 12B, separated from the remainder of the form. Since the coatings on molding surfaces 102a, 116a of respective molds 100a, 114a, were only partially polymerized by actinic light 28a, they tend to become partially absorbed on the curing resin in cavity 120a, and cross-linked with the resin. This fact additionally insures that the partially polymerized coatings on molding surfaces 102a, 116a, will tend to adhere better to the cured lens than to their respective molding surfaces, and thus facilitate ready separation of the cured lens and its coatings thereon, from molds 100a, 114a. However, it will be understood that the coatings on molding surfaces 102a, 116a should only be cured to an extent which will allow the foregoing partial absorption into the lens forming resin, and thus permit such ready separation from the molding surfaces 102a, 116a.

Each resulting lens 130a then, as shown in FIG. 11B has a lens body 132a of the cured lens resin, and a front coating 134a and back coating 136a. Where desired, the two lenses 130a can be placed upon respective spin coaters 63a in a manner shown in FIG. 9B, with only a vacuum through bellows 74a holding each in place. Thus, as shown in FIG. 9B, lens 130a will be urged in the direction of arrows 132a. Since the lens produced by the molds will have a diameter less than the outer diameter of the molds themselves, it will not seat on the mold seat defined by ledge and lip 70a, 72a, respectively. However, the purpose of seating the coated lenses on spin coater 63a at this stage does not require spinning of the coater, which instead simply act as holders for lenses 130a while drawer 60a is slid to its rear position, to further expose lenses 130a to actinic light from light 28a and thereby further polymerize and harden coatings 134a, 136a.

A method which can use such spin coater (but which need not necessarily do so) to produce a spectacle lens with front and back coatings with desireable properties, and the resulting spectacle lens, will now be described.

Method of Making Coated Spectacle Lenses

As described in the "Summary of the Invention" above, the concept here is to provide a first surface of a spectacle lens, preferably the front surface, with a highly abrasion resistent non-tintable coating, while providing a second surface, preferably the rear surface, also with a coating which is abrasion resistent but not to the same degree as the first surface coating, and which is tintable. Preferably the front surface has an abrasion resistance of at least 80 psi as measured by the method described below, and more preferably at least 200 psi, while the back surface preferably has an abrasion resistance of at least about 10 psi. It should be noted that typically coatings with an abrasion resistance of less than about 75 psi, as determined by the method described below, are typically tintable, whereas those with a higher abrasion resistance typically are not.

In the following example, the front and back surfaces of the resultant coated lens have the following characteristics:

Front surface: - abrasion resistance of 275 psi (pounds per square inch), measured by the test method and associated apparatus described below, and non-tintable.

Back surface: - abrasion resistance of approximately 10 psi, measured as above (standard Allyl Diglycol carbonate lenses show approximately 5 psi abrasion resistance).

Tintability: - 70-80% transmission within 5 minutes at 200 F, and 63-67% transmission within 20 minutes at 200 F, using BPI GRAY (available from Brain Power Incorporated, Miami, Florida, U.S.A. - which is an aquaeous solution of a mixture of azo anthraquinone dyes of approximately 5% (by weight) + 0.2% of a non-ionic surfactant.

Example 1

Front coating is prepared by adding the following materials in order:
(sealed and stored at -5 F until used).

| | |
|---|---|
| 63.10 | gram methy ethyl ketone (reagent grade). |
| 1.40 | gram 2,2 - dimethoxyl -1,2 -diphenylethanone (MWT 256.3). |
| 30.80 | gram dipentaerythritol pentaacrylate (MWT 525). |
| 4.20 | gram ethoxylated trimethylolpropane (MWT 428) |
| 0.50 | gram FC-430 (a trademark of 3M Company, St. Paul, Minnesota, U.S.A.) surfactant (non-ionic fluorinated alkyl esters) |
| 100.00 | grams total |

Back coating is prepared by adding the following materials in order:
(sealed and stored at -5 F until used.)

| | |
|---|---|
| 93.81 | gram methy ethyl ketone (reagent grade) |
| 0.40 | gram 2,2 - dimethoxy -1,2 - diphenylethanone (MWT 256.3) |
| 2.00 | gram dipentaerythritol pentaacrylate (MWT 525) |
| 0.50 | gram polyethylene glycol dimethacrylate (MWT 300) |
| 2.50 | gram hydroxypropyl methacrylate (MWT 144) |
| 0.79 | gram FC-430 surfactant |
| 100.00 | grams total |

## PROCEDURE

1.1 Clean front molds are spin coated with the above front coating mix (mix allowed to warm to room temperature before application), at 750 RPM.

1.2 Solvent is evaporated with a 250 watt infrared bulb at a distance of 12 inches for 1 minute, while being spun at 750 RPM.

1.3 The coated front mold is rotated at approximately 38 RPM while exposing to ultraviolet U.V. light ("U.V.") using a medium pressure mercury vapor light for 4 seconds at 19.6 milliwatts per square centimeter measured at 360 nanometer wave length.

1.4 The back mold is coated with the back coating (allowed to warm to room temperature) and solvent evaporated as per 3.1.2 above, and exposed to U.V. as per 1.3 for 10 seconds.

1.5 The mold halves are assembled into a clear polyvinyl chloride gasket having a shore "A" hardness of 75.

1.6 The mold assembly is then filled through fill ports in the gasket with the coating resin, a mixture of allyl diglycol carbonate, 3% isoperoxy percarbonate (IPP) with shrink reduction additives.

1.7 The filled assembly is cured in a horizontal flow forced air oven for 15 hours. Temperature starts at 105 F and ramps to 145 F.

1.8 After 15 hours the mold assemblies are cooled to 125 F, then demolded.

1.9 The resultant lens are wiped clean with acetone and soft tissue, then placed back in oven for post cure for 30 minutes at 200 F.

1.10 The post cured lenses are then exposed to the U.V.; 60 seconds for front surface adn 20 seconds for back surface.

1.11 Abrasion tests are performed on the front surface by the method described below.

1.12 Abrasion resistance of the back coating was estimated by coating a front surface with back coating and performing the abrasion test, RESULTS: 10 PSI

1.13 Tinting test

Standard water soluble

BPI gray dye at 200 F,

5 minutes - 70-80% transmission to visible light; and

20 minutes - 63-67% transmission to visible light

1.14 Adhesion Test

A razor blade was used to cross cut 1/16" squares on a 1/2" x 1/2" total area, then the cross hatched area was pressed with adhesive tape and was then peeled off. The lens sample is then placed in a tint bath for 5 minutes. Adhesion loss is observed on front or back lens as tinted areas. This test is equivalent to ASTM Adhesion Tape Test No. D 3359-83, Method B. The coatings met standard 4B of the foregoing test, that is with virtually no loss of adhesion.

Abrasion Resistance Test Method

The apparatus for measuring abrasion resistance is shown schematically in FIG. 13B, and does not constitute a part of the present invention. This apparatus includes a cam 2a which is driven by a motor (not shown) so as to reciprocate a sample support 6a about a pivot point 8a in the direction of arrows 12a. A sample 10a, in the form of a coated lens, would be placed upon sample support 6a in the manner shown in FIG. 12B. A steel wool pad 14a is arranged to contact the reciprocating sample 10a on sample support 6a, and be pressed thereagainst by means of a load (i.e., weight) 20a acting through load transfer rod 18a, and maintained in positioned by load transfer guide 16a. Load transfer rod 18a has a lower end with approximately 0.5 inch diameter, such that the area of applied pressure to a sample is approximately 0.196 square inch.

The foregoing apparatus is set up for measuring abrasion resistance as follows:

2.1 The sample support is adjusted to move the sample on the convex plane by proper radius selection at the pivot point for the sample support. For example, a 6.00 Diopter ("D") surface d in FIG. 13B will be:

$$d = \frac{530 \text{ radius}}{(6.00) \text{ x } (25.4/\text{inch})} = 3.47 \text{ inch radius}$$

Preferably a 4 to 6 D lens is used for the test, and this should remain constant to reduce error in making comparisons between tests.

The stroke is set for 1.00 inch by the eccentric cam position. The stroke speed of about one stroke per second is controlled by selection of motor speed. One stroke is 2 passes across the surface.

2.3 The steel wool abrading pad is fine grade (#000) 3 x 4 inch, with a compressed thickness of 0.25 inches. The steel wool is wrapped around the end of the load transfer rod, the steel wool strands perpendicular to the direction of sample motion, and held tight with tape around the rod.

2.4 The lens sample is positioned on the sample support with two sided tape, the front sample surface is wiped clean with an acetone and a soft tissue wipe.

2.5 The load transfer rod, with weights are allowed to rest freely on the lens sample surface.

2.6 The motor is turned on and 25 strokes are counted by a cycle counter device attached to a motor cam. The motor stops automatically at the end of 25 strokes.

2.7 The load is lifted away, the lens sample removed, wiped clean with acetone/soft tissue, then visually inspected.

2.8 The visual inspection of the lens sample is performed with the unaided eye, viewing through the back surface, held 8-12 inches from the eye, viewing toward a ceiling mounted fluorescent light. The number of visible continuous 1/4 inch, or longer scratches, within the center most 1/2 inch of the stroke path are counted.

2.9 A sample having 6 or more scratches constitutes failure to exhibit abrasion resistance at a psi value which it corresponds to the weight of load 20a. Less than 5 scratches is said to exhibit abrasion resistance at such psi value.

It will be seen then, that the present invention provides both a spin coater which can conveniently spin coat spectacle lens molds to provide a means for coating a formed spectacle lens, and further provides a novel vacuum chuck for automatically centering the mold in a chuck seat and retaining it in position thereon by means of an axially resilient vacuum conduit. In addition, as has also been disclosed, the present invention provides a method for producing a coated spectacle lens with one surface which is highly abrasion resistent, and another surface which is not so abrasion resistant but has fairly significant abrasion resistance, and which other surface remains tintable whereas the more abrasion resistant surface is not. Further, both coatings are partially absorbed onto the lens forming material itself, and therefore adhere firmly thereto, by virtue of the fact that the coatings were only partially polymerized when positioned in a form and contacted with the uncured lens forming resin. In addition, the present invention also provides a lens which can be produced by the foregoing method.

It will be appreciated that various modifications and alterations can be made to the substance of the above described inventions, without departing from the spirit or scope thereof. Accordingly, the present invnetion is not limited to the above described embodiments, but should be determined with reference to the following claims.

## Claims

1. An apparatus for casting a finished spectacle lens of a specified ophthalmic lens prescription, including

means for storing a plurality of mold elements to enable said apparatus to fill a variety of different ophthalmic lens prescriptions, including means for advancing identified mold elements to a mold delivery station,

means for storing a plurality of gaskets to enable said apparatus to fill different lens prescriptions, each gasket being adapted to hold in a predetermined spaced apart relationship a pair of mold elements inserted into a selected gasket,

means for inserting an identified pair of mold elements into a selected gasket to form an assembly of gasket and mold elements,

alignment means for holding said selected gasket in a reference position and for orienting the selected mold elements with respect to each other in said selected gasket, and

means for filling the assembly of said selected gasket and said identified mold elements with a liquid polymeric material that fills the space between said mold elements and hardens on curing to form the finished spectacle lens having said specified ophthalmic lens prescription.

2. The apparatus of claim 1 wherein the gasket or mold has thereon a machine readable identification number.

3. The apparatus of claim 1 including oven means into which said assembly with the polymeric material therein is placed for a predetermined time period, said oven means including heat control means for varying the temperature within said oven in accordance with a predetermined program.

4. The apparatus of claim 1 including a station where the identified mold elements are coated with a release agent prior to said identified mold elements being inserted into the selected gasket.

5. An apparatus for casting a finished spectacle lens of a specified ophthalmic prescription, including

means for storing a plurality of mold elements, each mold element bearing a machine readable marking thereon identifying and distinguishing it from other mold elements,

said mold storing means having individual, movable mold containers for each mold element, which are advanced to or withdrawn from a mold delivery station,

means for assembling a pair of mold elements delivered to said mold delivery station in a gasket in a spaced apart relationship to enable the space between said mold gaskets to be filled with a liquid polymeric material that on curing hardens to form a lens,

means for reading the marking on a mold element and providing an electronic control signal identifying the individual mold container which holds said mold element, and

control means responsive to said control signal for advancing said individual mold container to the mold delivery station.

6. A apparatus for casting a finished spectacle lens having a specified ophthalmic prescription including

means for storing a plurality of mold elements and advancing individual mold elements to a mold delivery station,

gasket storage means for holding a plurality of different size gaskets, each gasket bearing a machine readable marking thereon providing an identification symbol thereon,

input means for identifying a pair of mold elements and gasket of a selected size to fill said specified ophthalmic prescription, said input means including control means for advancing the identified pair of molds to the mold delivery station,

means for assembling said identified pair of mold elements delivered to said mold delivery station and said identified gasket into an assemblage with the mold elements oriented relative to each other and spaced apart to make a lens which fills said prescription,

means for filling the space between said mold elements with a liquid polymeric material that hardens on curing, and

means for reading the marking on the gasket to confirm that the correct gasket has been selected.

7. The apparatus of claim 6 including printout means that provide a tag to be placed on the lens made by said apparatus identifying said lens with the same marking as appears on the selected gasket or mold used to make said lens.

8. The apparatus of claim 6 where a tag having a machine readable marking is placed on the finished lens for identification.

9. An apparatus for casting a finished spectacle lens having a specified ophthalmic prescription, including

means for storing a plurality of mold elements and advancing individual mold elements to a mold delivery station,

gasket storage means for holding a plurality of different size gaskets

input means for identifying a pair of mold elements and gasket of a selected size to fill said specified ophthalmic prescription, said input means including control means for advancing the identified pair of molds to the mold delivery station,

means for assembling said identified pair of mold elements delivered to said mold delivery station and said identified gasket in an assembly with the mold elements oriented relative to each other and spaced apart to make a lens which fills said prescription,

means for storing in a relatively cool chamber a plurality of different types of polymeric materials used in casting lenses, and

means for filling the space between said molds with a selcted one of said different types of polymeric materials.

10. In an apparatus for making spectacle lenses wherein resin is introduced into a space between a pair of mold elements through a passageway in a gasket holding said elements in a spaced apart relationship, including:

means for storing resin in a container, said container having an outlet through which resin will flow when pressure is applied to said resin,

a dispensing head including a nozzle element adapted to fit into the passageway in the gasket, said nozzle element being in communication with the outlet in the container, and

means for inserting said nozzle into the passageway and applying pressure to the resin to force resin through the outlet and nozzle into said space between said mold elements.

11. In an apparatus for making spectacle lenses wherein resin is introduced into a space between a pair of mold elements held in a spaced apart relationship in a gasket, said gasket having two separate ports each including a passageway leading to the space between said mold elements, including:

means for storing the resin in a plurality of individual containers, each container holding a different color of resin and container having an outlet through which the resin will flow when a pressure is applied to said resin,

a dispensing head including a plurality of nozzle elements, each nozzle element being adapted to fit into one of the fill ports and each nozzle element being in communication with an outlet of one of the containers,

means for inserting one of the nozzle elements into one of the fill ports to correspond with the prescribed color of the lens being made,

means for applying pressure to the selected resin to force this resin through the outlet of its container through the nozzle inserted into the selected fill port, and

means for applying a vacuum to the other fill port so that gas in the space between the mold elements is removed from said space as resin flows into this space.

12. The apparatus of claim 16 wherein the resin is maintained in storage means which are at a substantially lower temperature than ambient.

13. A cannister for holding a resin material used in apparatus for manufacturing spectacle lenses, comprising:

a tubular body member having a port adjacent one end of the body member and a plunger element

29

movable within the body member under applied pressure to push resin from the body member out said port, said plunger element carrying a member which activates a sensor near said end to indicate that the resin is essentially depleted.

14. The cannister of claim 13 carrying tag means bearing a machine readable code which indicates that the resin in the cannister is compatible with the apparatus for manufacturing spectacle lenses.

15. A gasket suitable for receiving and retaining two molds to form a spectable lens form, said gasket comprising a hollow resilient body having:

a) opposed open ends;

b) an inside surface extending between the open ends;

c) Two spaced apart slots extending about an inside surface thereof.

d) a resin inlet conduit and an outlet conduit, which communicate between respective positions on the inside surface between the annular slots, and positions on the outside of said body.

16. A gasket suitable for receiving and retaining two generally circular molds to form a spectacle lens form, said gasket comprising a hollow resilient body having:

a) opposed open ends;

b) an inside surface extending between the open ends, of substantially circular radial cross-section throughout the axial length thereof;

c) two spaced apart annular slots extending about the inside surface thereof;

d) a resin inlet conduit and an outlet conduit, which communicate between respective positions on the inside surface between the annular slots, and positions on the outside of said body.

17. A gasket as defined in claim 16, wherein said body has an annular lip disposed between the slots, and which lip extends inward beyond the inside surface.

18. A gasket as defined in claim 17, wherein the conduits communicate with respective opposed positions on the inside surface.

19. A gasket suitable for receiving and retaining two molds to form a spectacle lens form, the gasket comprising a resilient hollow body having:

a) opposed open ends;

b) an inside surface extending between the open ends, of substantially circular radial cross-section throughout the axial length thereof;

c) two spaced apart annular slots on the inside surface thereof;

d) an annular lip disposed adjacent and between the slots and which extends inward beyond the inside surface;

e) a resin inlet and an outlet which communicate between respective opposed inside positions on the inside surface between the annular slots, and respective inlet and outlet ports spaced apart therefrom in an axial direction of said body and which face in the same axial direction.

20. A gasket as defined in claim 19 wherein said body had two radially opposed and axially extending shoulders, and wherein the inlet and outlet ports are disposed in respective axially facing ends of the shoulders.

21. A gasket as defined in any of claims 16 to 20, wherein the body and slots are dimensioned such that said body will tend to press molds with annular flanges matingly retained in respective annular slots, toward one another.

22. A gasket ad defined in claim 20 wherein said body is normally outwardly bowed, and inwardly bowed when the mold annular flanges are matingly retained in respective annular slots, so as to urge the molds toward one another.

23. A mold suitable for molding a surface of a spectacle lens, comprising:

a) an annular flange having two diametrically opposed notches therein; and

b) a curved molding surface extending within said annular flange.

24. A mold suitable for molding a surface of a spectacle lens, comprising:

a) an annular flange;

b) a generally convex molding surface defined by combined spherical and cylindrical elements such that two opposed first surface portions disposed about the axis of least curvature are coplaner with said flange, while two opposed second surface portions disposed about the axis of greatest curvature, extend past said annular flange;

c) wall segments extending between the second surface portions and said flange.

25. A mold as defined in claim 24 wherein said wall segments extend perpendicularly to the plane on which said annular ring lies.

26. A form assembly apparatus capable of assembling a spectacle lens form from two molds and a hollow gasket with opposed first and second ends, which gasket is dimensioned to receive the molds therein in respective, spaced apart, seated positions, the apparatus comprising:

a) a first mold retainer and a gasket holder which can releasably retain a first mold and a gasket thereon, respectively;

b) a reciprocating drive connected to reciprocate one of said first mold retainers and gasket holder with respect to the other when the two are axially aligned, such that said first mold retainer can insert a first mold retained thereon through the first open end of the gasket and into its seated position to produce a sub-assembly;

c) a second mold retainer which can releasably retain a second mold thereon;

d) a reciprocating drive connected to reciprocate one of said second retainer and the sub-assembly when axially aligned therewith, with respect to the other, such that said second mold retainer can insert a second mold retained thereon into its corresponding seated position in the gasket of the sub-assembly to produce the assembled form;

e) a carriage connected to align the first mold retainer with said gasket holder, and align the sub-assembly with said second mold retainer.

27. A for assembly apparatus capable of assembling a spectacle lens form from two generally circular molds and a hollow gasket with a generally circular cross-section therethrough and opposed first and second ends, which gasket is dimensioned to receive the molds therein in respective, spaced apart, seated positions, the apparatus comprising:

a) a first mold retainer and a gasket holder which can releasably retain a first mold and a gasket thereon, respectively;

b) a reciprocating drive connected to reciprocate one of said first mold retainers and gasket holder with respect to the other when the two are axially aligned, such that said first mold retainer can insert a first mold retained thereon through the first open end of the gasket and into its seated position to produce a sub-assembly;

c) a second mold retainer which can releasably retain a second mold thereon;

d) a reciprocating drive connected to reciprocate one of said second retainer and the sub-assembly when axially aligned therewith, with respect to the other, such that said second mold retainer can insert a second mold retained thereon into its corresponding seated position in the gasket of the sub-assembly to produce the assembled form;

e) a carriage connected to align the first mold retainer with said gasket holder, and align the sub-assembly with said second mold retainer.

28. An apparatus as defined in claim 27, additionally comprising an indexer which can establish the initial relative rotational angle of said molds prior to insertion of said second mold into the sub-assembly, and rotate one with respect to the other to adjust the relative rotational angle to a preselected value.

29. An apparatus as defined in claim 28 wherein said indexer comprises:

a) an index indicator on each of said mold retainers which can be aligned with a corresponding indicator on the outer periphery of a mold;

b) motor means for rotating at least one of said mold retainers with respect to the other.

30. An apparatus as defined in claim 29 wherein the index indicator on each mold retainer, is a plurality of tabs thereon which can project into mating receptacles on the outer periphery of a mold.

31. An apparatus as defined in claim 30 wherein the index indicator on each mold, comprises two tables angularly spaced apart 180 degrees about the axis of the mold retainer, which can project into matching receptacles on the outer periphery of a mold.

32. An apparatus capable of assembling a spectacle lens form from two generally circular molds and a hollow gasket with a substantially circular cross-section therethrough and with opposed first and second open ends, which gasket is dimensioned to receive the molds therein in respective, spaced apart, seated positions, the apparatus comprising:

EP 0 318 164 A2

a) a first mold retainer and an oppositely facing gasket holder one of which is reciprocally mounted with respect to the other such that when the two are axially aligned, said first mold retianer can insert a first mold retained thereon, through the first open end of the gasket and into its seated position to produce a sub-assembly which can be retained on the first mold retainer;

b) a second mold retainer facing in a direction opposite the first, one of which is reciprocably mounted with respect to the other, such that when the two are axially aligned, said second mold retainer can insert a second mold retained thereon into its seated position in the gasket of the sub-assembly retained on the aligned first mold retainer, to produce the assembled form;

c) a carriage upon which said first mold retainer is disposed, which can carry said first mold retainer between respective positions in which it is axially aligned with the gasket holder and said second mold retainer;

d) at least one reciprocating drive connected to reciprocate one of the first mold retainer and gasket holder with respect to the other, and one of the first and second mold retainers with respect to the other.

33. An apparatus as defined in claim 32 wherein said carriage is slideably mounted on a guide, and wherein at least one reciprocating drive reciprocates said gasket holder and said second mold retainer with respect to said first mold holder.

34. An apparatus as defined in claim 33, additionally comprising:

a) a form filling station having:

(i) a table which can hold a form in position thereon, and a form filler with a resin injection nipple;

(ii) a reciprocating drive connected to at least one of the table and the filler so as to reciprocate at least one with respect to the other;

the table and form filler being disposed such that the resin injection nipple can mate with an injection port of a form disposed on the table when said reciprocating drive moves one of the table and filler toward the other;

d) a form carrier alignable with said second mold retainer and the table, so as to receive a form from a position aligned with said second mold retainer and hold it in alignment with the table.

35. An apparatus as defined in claim 34, additionally comprising:

a) a form filling station having:

(i) a form table which can hold a form in position thereon, and a form filler with a resin injection nipple and a vacuum injection nipple;

(ii) a reciprocating drive connected to at least one of the table and the filler so as to reciprocate at least one with respect to the other;

said table and form filler being disposed such that the resin vacuum injection nipples can mate with respective resin and vacuum injection ports of a form disposed on the table, when the reciprocating drive moves and one of the table and filler toward the other;

d) a form carrier alignable with said second mold retainer and the table, so as to receive a form from a position aligned with said second mold retainer and hold it in alignment with the table.

36. An apparatus capable of assembling a spectacle lens form from two generally circular molds and a hollow gasket with a substantially circular cross-section therethrough and with opposed first and second open ends, which gasket is dimensioned to receive the molds therein in respective, spaced apart, seated positions, the apparatus comprising:

a) an upwardly facing first mold retainer and a downwardly facing gasket holder one of which is reciprocally mounted with respect to the other such that when the two are axially aligned, said first mold retainer can insert a first mold retained thereon, through the first open end of the gasket and into its seated position to produce a sub-assembly which can be retained on the first mold retainer;

b) a downwardly facing second mold retainer disposed transversely from said first mold retainer in a forward direction, one of which is reciprocably mounted with respect to the other such that when the two are axially aligned, said second mold retainer can insert a second mold retained thereon into its seated position in the gasket of the sub-assembly retained on the aligned first mold retainer, to produce the assembled form;

c) at least one reciprocating drive connected to can reciprocate the first mold retianer and gasket holder, and first and second mold retainers, with respect to one another.

d) a form filling station spaced in the forward direction from said second mold retainer, said form filling station having:

(i) an upwardly facing form table which can hold a form in position thereon, and a form filler with a

32

downwardly facing, resin injection nipple and a vacuum injection nipple;

(ii) a reciprocating drive connected to the table so as to reciprocate the form table with respect to the form filler;

said table and form filler being disposed such that the resin and vaccum injection nipples can mate with respective injection and vacuum ports of a form disposed on the table, when the reciprocating drive moves the table and filler toward the form filler;

e) a form carrier alignable with said second mold retainer and the table, so as to receive a form from the former and hold it in alignment with the latter;

f) a slideable carriage upon which said first mold retainer and said form carrier are disposed, said form carrier being spaced in the forward direction from said first mold retainer, such that said carriage can align said first mold retainer with each of said gasket holder and said second mold retainer, and can align said form carrier with said second mld retainer and the table.

37. Apparatus as defined in the claim 36 wherein said form carrier comprises a rim which is open both from below and in a forward direction, and wherein the form table when in a retracted position, is disposed beneath the rim, and is dimensioned such that when the table and said form carrier are axially aligned, the table can be extended from the retracted position through said form carrier, to lift a form disposed thereon to a position in which the injection and vacuum ports mate with the resin and vacuum injection nipples, respectively.

38. A method of preparing a spectacle lens using a lens form having resin and vacuum injection ports and respective conduits communicating therefrom to substantially opposed outlet and inlet openings in the mold cavity, the method comprising injection resin into the resin injection port while applying a vacuum at the vacuum injection port.

39. A method as defiend in claim 38 additionally comprising tilting the mold prior to resin injection such that the mold cavity is disposed at an elevated angle to the horizontal, with the outlet opening being higher than the inlet opening, and maintaining such an elevated angle during resin injection.

40. A method as defiend in claim 39 wherein the elevated angle is between substantially 6 degrees to 15 degrees.

41. A method of assembling a spectacle lens form from first and second molds having respective flanges extending thereabout, and from a gasket comprising a hollow resilient body having:

(i) opposed first and second open ends

(ii) first and second slots extending about an inside surface of the body, which can snugly seat therein, the flanges of the first and second molds, respectively;

(iii) a resin inlet conduit and an outlet conduit which communicate between respective positions on the inside surface between the annular slots, and positions on the outside of said body;

the method comprising pressing the first and second molds through at least one open end of the gasket until the flange of each is snugly seated in a corresponding slot.

42. A method of assembling a spectacle lens form from first and second generally circular molds having respective annular flanges extending thereabout, and from a gasket comprising a hollow resilient body having:

(i) opposed first and second open ends

(ii) an inside surface extending between the ends, with a substantially circular radial cross-sections throughout its length;

(iii) first and second annular slots extending about the inside surface of the body, which can snugly seat therein the flanges of the first and second molds, respectively;

(iv) an annular lip disposd adjacent end between the slots and which extends inward beyond the inside surface;

(v) a resin inlet and an outlet which communicate between respective opposed inside positions on the inside surface between the annular slots, and respective inlet and outlet ports spaced apart therefrom in an axial direction of said body and which face in the same axial direction;

the method comprising pressing the first and second molds through at least one open end of the gasket until the flange of each is snugly seated in a corresponding slot.

43. A chuck suitable for spin coating a spectacle lens mold, the chuck comprising:

a) a mold seat defined by a ledge, and an adjacent lip, both extending about a seat axis;

b) a lengthwise resiliant vacuum conduit extending to an open first end thereof, said conduit being disposed such that when a vacuum is applied therethrough, the open first end can sealingly engage against the mold when seated in the mold seat, to urge the mold against the ledge.

44. A chuck as defined in claim 43 wherein the lip projects from the ledge in a first axial direction of the mold seat axis, and the vacuum extends in the first axial direction toward the open end thereof.

45. A chuck suitable for spin coating a spectacle lens mold, the chuck comprising a hollow body having:

a) an open first and an opposed second end;

b) a wall extending between the ends;

c) a mold seat defined by a ledge extending adjacent an inside surface of the wall, and an outwardly adjacent lip, both the ledge and lip extending about a seat axis, and the lip projecting in a first axial direction of the seat axis away from the second end;

d) a lengthwise resilient vacuum conduit extending in the first axial direction to an open first end thereof, said conduit being disposed such that when a vacuum is applied therethrough, the open first end can sealingly engage against the mold when seated in the mold seat, to urge the mold against the ledge.

46. A chuck suitable for spin coating a spectacle lens mold, the chuck comprising:

a) a hollow body having a generally circular open first end, an opposed second end, and a wall with a substantially cylindirical inside surface extending between the ends;

b) a mold seat defined by a ledge extending adjacent the inside surface of the wall, and an outwardly adjacent lip, both the lip ledge and lip extending about a seat axis with the lip projecting in a first axial direction of the seat axis away from the second end;

c) a lengthwise resilient vacuum conduit extending in the first axial direction to an open first end thereof, said conduit being disposed such that when a vacuum is applied therethrough, the open first end can sealingly engage against the mold when seated in the mold seat, to urge the mold against the ledge.

47. A chuck as defined in claim 46 wherein the second end of said body has a lower vacuum opening aligned with the axis of the substantially cylindrical wall, and a second end of said vacuum conduit communicates therewith.

48. A chuck as defined in claim 46 wherein the seat axis is aligned with the axis of the substantially cylindrical wall.

49. A chuck as defined in any of claims 43 to 48 wherein said vacuum conduit comprises a bellows.

50. A chuck as defined in claim 46 wherein said body is substantially cylindrical.

51. A spin coater element suitable for spin coating a spectacle lens mold which has a flange extending around the outer periphery thereof, the spin coater comprising:

a) a frame;

b) a chuck rotatably mounted on said frame, said chuck comprising:

i) a mold seat defined by a ledge, and an adjacent lip, both extending about a seat axis;

ii) a lenthwise resilient vacuum conduit extending to an open first end thereof, said conduit being disposed such that when a vacuum is applied therethrough, the open first end can sealingly engage against the mold when seated in the mold seat, to urge the mold against the ledge.

52. A spin coater element suitable for spin coating a spectacle lens mold which has an annular outer flange, the spin coater comprising:

a) a frame;

b) a chuck rotatably mounted on said frame, said chuck comprising:

i) a hollow body having a generally circular open first end, an opposed second end, and a wall with a substantially cylindrical inside surface extending between the ends;

(ii) a mold seat defined by a ledge extending adjacent the inside surface of the wall, and an outwardly adjacent lip, both the ledge and lip extending about a seat axis with the lip projecting in a first axial direction of the seat axis away from the second end;

iii) a lenthwise resilient vacuum conduit extending in the first axial direction to an open first end thereof, said conduit being disposed such that when a vacuum is applied therethrough, the open first end can sealingly engage against the mold when seated in the mold seat, to urge the mold against the ledge.

53. A chuck as defined in claim 52 wherein the second end of said body has a lower vacuum opening aligned with the axis of the substantially cylindrical wall, and a second end of said vacuum conduit communicates therewith.

54. A chuck as defined in any of claims 51 to 53 wherein the vacuum conduit comprises a bellows.

55. A spin coater comprising:

a) a housing having separate front and rear chambers separated such that light in the rear chamber is substantially blocked from the front chamber;

b) a drawer carrying at least one spin coater element each of which is suitable for spin coating a spectacle lens mold, said drawer being slideably mounted within said housing to move between front and rear positions in which the spin coater is disposed in the front and rear chambers, respectively.

56. A spin coater as defined in claim 55, additionally comprising an actinic light fixture disposed in the rear chamber, so that an actinic light disposed therein can illuminate each spin coater element when said drawer is in the rear position.

57. A spin coater as defined in claim 56 additionally comprising:

a) a shutter disposed in the rear housing between said light fixture and the rear position of said drawer, said shutter being moveable between a closed position in which the rear position of the drawer is shielded from the light fixture, and an open position;

b) a shutter trigger connected between said shutter and said drawer, so as to open and close said shutter, in response to said drawer moving rearwardly into, and forwardly out of, the rear position, respectively.

58. A spin coater as defined in claim 55, additionally comprising an actinic light fixture disposed in the rear chamber, so that an actinic light mounted in said fixture can illuminate each spin coater element when said drawer is in the rear position.

59. A spin coater as defined in claim 57 wherein said shutter comprises two sheets hinged together in a sideways direction of said housing and mounted to be forwardly and rearwardly pivotable about the hinge, between open and closed positions, corresponding to open and closed positions of the shutter, respectively, in which open position the sheets are spaced apart at an interior angle greater than when in their closed position.

60. A spin coater as defined in claim 58 wherein said shutter trigger comprises a resilient member connected between said drawer and said shutter, so as to open and close said shutter when said drawer moves rearwardly and forwardly, respectively, of a position adjacent the rear position.

61. A spin coater as defined in claim 60 additionally comprising a reflector disposed in the rear chamber, and within which reflector said actinic light fixture is disposed such that said reflector directs light from said fixture to the spin coater elements when said drawer is in the rear position.

62. A spin coater as defined in claim 60 wherein said shutter is mounted in said reflector by means of guides on the sheets which ride in corresponding slots in the reflector.

63. A method of producing a spectacle lens with abrasion resistant front and back coated surfaces, the method comprising:

a) providing a partially polymerized coating composition on front and back surfaces of a spectacle lens form, the composition on one of the surfaces having lower solids content than the composition on the other;

b) filling the form with a lens resin, and curing the lens resin.

64. A method as defined in claim 63 wherein the composition on the back surface of the method has a lower solids content that the composition on the front surface.

65. A method as defined in claim 63 or 64 comprising further polymerizing the front and back surface coatings, following curing of the resin.

66. A method of producing a spectacle lens with abrasion resistant front and back coated surfaces, one of which is tintable while the other is not, the method comprising:

a) coating front and back surface molds with a polymerizable coating composition, the composition on the mold corresponding to the tintable one of the lens surfaces having a lower solids content than the composition on the other one of the molds;

b) partially polymerizing the coating composition;

c) assembling the molds within a gasket to produce a spectacle lens form;

d) filling the form with a lens resin, and curing the resin such that the partially polymerized coatings will become only partially absorbed in the cured lens resin;

e) separating the coated lens from the form.

67. A method as defined in claim 66 wherein the composition on the back has a lower solids content than the composition on the front mold.

68. A method as defined in claim 66 or 67 additionally comprising further polymerizing the front and back surface coatings, following curing of the resin.

69. A spectacle lens with abrasion resistant front and back coated surfaces, produced by the method comprising:

a) providing a partially polymerised coating composition on front and back surfaces of a spectacle lens form, the composition on one of the surfaces having lower solids content than the composition on the other;

b) filling the form with a lens resin, and curing the resin.

70. A method of producing a spectacle lens with abrasion resistant front and back coated surfaces, the method comprising:

a) coating front and back surface molds with a polymerizable coating composition, the composition on the mold corresponding to the tintable one of the lens surface having a lower solids content than the composition on the other one of the molds;

b) partially polymerizing the coating composition;

c) assembling the molds within a gasket to produce a spectacle lens form;

d) filling the form with a lens resin, and curing the resin such that the partially polymerized coatings will become only partially absorbed in the cured lens resin;

e) separating the coated lens from the form.

71. A spectacle lens having abrasion resistant front and back coatings, one of which is tintable while the other is not, the tintable surface coating being less abrasion resistant than the other surface coating and being partially absorbed on the back surface of the lens.

72. A spectacle lens as defined in claim 71 wherein the tintable coating is on the back surface of the lens.

f IG.1.

NON CONFORME POUR REPRODUCTION NON SUITABLE FOR REPRODUCTION

EP 0 318 164 A2

FIG.2.

FIG.3.

FIG.4.

FIG.5.

EP 0 318 164 A2

FIG.6.

FIG.7.

FIG.8.

FIG.9.

# FIG.10.

SECTION VIEW OF GASKET UNLOADED

RESIN MATERIAL TO AFFECT A SEAL AT THESE POINTS

SECTION VIEW OF GASKET WITH MOLDS IN PLACE

# FIG.11.

FIG.12.

fIG.13.

fIG.14.

fIG.15.

FIG.16.

FIG. 17.

FIG 17 A

# FIG 17 B

**B**

OBTAIN COMPONENT NUMBERS FROM
"COMPONENT SELECTION FILE"    (CSF)

OBTAIN AVAILABLE MOLD LOCATIONS FROM
MOLD MASTER FILE (MMF) AND RIGHT LENS

YES

BACK MOLD AVAILABLE — NO → PERFORM ALT MOLD → IF RIGHT BACK OUT LENS THEN MMF → SPOOL NEXT RUN → DO NEXT Rx

YES

FRONT MOLD AVAILABLE — NO → PERFORM ALT MOLD → SPOOL NEXT RUN → DO NEXT R. X

YES

A ← NO — LEFT LENS

YES

UPDATE MMF WITH MOLDS ALLOCATED
TO THIS RX

WRITE JOB BATCH RECORD
(JBF)

→ IF PRINTING JOB TICKET THIS IS THE SPOT

A ← YES — MORE Rx TODAY

NO

**C**

EP 0 318 164 A2

# FIG 17 C

**C**

START BATCH

OPERATOR SIGNAL TO START SPIN COATER

·TURN ON FAIL LAMP

SEND STAGE POSITION 1

VERIFY STAGE POSITION 1

STAGE ON· —NO→ TIME EXPIRED —YES→ DISPLAY OR BEEP

NO

YES

SEND STAGE POSITION 2 FOR UV TURN ON

TURN ON UV HIGH VOLTAGE 5 SECONDS

UV 5 TIMES —NO→

YES

TURN ON UV HIGH VOLTAGE

SIGNAL ON

CHECK UV

UV ON —No→ DISPLAY OR BEEP → REPLACE UV 1 PROCEDURE

Yes

TURN OFF HIGH VOLTAGE

**D**

EP 0 318 164 A2

(D)

↓

VERIFY PRESSURE ←──────────────────────────────────┐

↓                                                    │

PRESSURE ON ──NO──→ DISPLAY OR BEEP ──→ CORRECT PROBLEM ──→ SIGNAL ON ─┘

↓ YES

CHECK VACUUM SWITCH ←──────────────────────────────┐

↓                                                   │

VACUUM ON ──NO──→ DISPLAY OR BEEP ──→ CORRECT PROBLEM ──→ SIGNAL ON ─┘

↓ YES

TURN OFF FAIL LAMP

↓

BEEP ALL IS WELL

↓

READ JOB RECORD FILE

↓

GET LEFT & RIGHT
(FM, BM, TINT, GASKET)
ID AND LOCATION

↓

(E)

# FIG 17 D

**E**

INDEX MHS TO DELIVERY POINT LBM

OPERATOR WITHDRAW A SCAN

VERIFY MOLD TO JOB RECORD

MOLD O K —NO→ DISPLAY BEEP → PERFORM REORDER PROCEDURE

YES

TURN ON LB LED

OPERATOR PLACE MOLD ON LB

OPERATOR DEPRESS FOOT PETAL

TURN ON LB VACUUM

VERIFY LB VACUUM

LB VACUUM ON —NO→ DISPLAY BEEP → OPERATOR CORRECT → OPERATOR SIGNAL

YES

TURN OFF LB LED

INDEX MHS TO DELIVER POINT LFM

OPERATOR WITHDRAW A SCAN

VERIFY MOLD TO JOB RECORD

MOLD ON —NO→ DISPLAY BEEP → PREFORM REORDER PROCEDURE

YES

**F**

# FIG 17 E

# FIG 17 F

(F)

↓

TURN ON LF LED

↓

OPERATOR PLACE MOLD ON LF

↓

OPERATOR DEPRESS FOOT PETAL

↓

TURN ON LF VACUUM

↓

VERIFY LF VACUUM ←──────────────────────────┐

↓                                             │

⟨ LF VACUUM ON ⟩ ──→ DISPLAY BEEP ──→ OPERATOR CORRECT ──→ OPERATOR SIGNAL

↓

TURN OFF LF LED

↓

INDEX MHS TO DELIVER POINT RBM ←──────────────┐

↓                                             │

OPERATOR WITHDRAW A SCAN                       │

↓                                             │

VERIFY MOLD TO JOB RECORD                      │

↓                                             │

⟨ MOLD ON ⟩ ──→ DISPLAY BEEP ──→ PERFORM REORG PROCEDURE

↓

TURN ON RB LED

↓

OPERATOR PLACE MOLD ON RB

↓

OPERATOR DEPRESS FOOT PETAL

↓

TURN ON RB VACUUM

↓

VERIFY RB VACUUM ←────────────────────────────┐

↓                                             │

⟨ RB VACUUM ON ⟩ ──NO──→ DISPLAY BEEP ──→ OPERATOR CORRECT ──→ OPERATOR SIGNAL

↓ YES

TURN OFF RB LED

↓

(G)

(G)

INDEX MHS TO DELIVERY POINT RFM

OPERATOR WITHDRAW A SCAN

VERIFY MOLD TO JOB RECORD

MOLD ON → DISPLAY BEEP → PERFORM REORG PROCEDURE

TURN ON RF LED

OPERATOR PLACE MOLD ON RF

OPERATOR DEPRESS FOOT PETAL

TURN ON RF VACUUM

OPERATOR PLACE MOLD ON CHUCK

VERIFY RF VACUUM

RF VACUUM ON → DISPLAY BEEP → OPERATOR CORRECT → OPERATOR SIGNAL

TURN OFF RF LED

SPIN COATER

OPERATOR SIGNAL BEGIN OF SPIN

START SPIN (HS) OPEN

CHEMICAL APPLICATION

OPERATOR APPLY CHEMICALS

(H)

# FIG 17 G

(H)

**INFRA
RED**

OPERATOR SIGNAL STOP/
BEGIN INFRA RED CYCLE

CYCLE IN PROGRESS - LAMP ON

START SPIN (MS)

START TIMER

TURN ON INFRA RED LAMPS

MONITOR TIME

TIME EXPIRED — NO

TURN OFF INFRA RED LAMPS

MOVE STAGE TO POSITION 2

STAGE
AT POS 2 — NO → DISPLAY
CRT → BEEP → EMERGENCY
STOP →

YES

START SPIN SS

**ULTRA
VIOLET**

START TIMER

TURN ON HIGH VOLTAGE

CHECK VP

(I)

**FIG 17 H**

(I)

UV ON → DISPLAY CRT → BEEP → EMERGENCY STOP →

TIMER EXPIRED

TURN OFF UV

STOP SPIN

MOVE STAGE POS 1

CHECK STAGE

ON — NO → DISPLAY BEEP → BEEP → EMERGENCY STOP →

YES

TURN OFF CYCLE IN PROCESS LAMPS

VERIFY PROPER AMOUNT OF RESIN AVAILABLE SC 1 THRU 6

RESIN ON — NO → DISPLAY BEEP → PERFORM RESIN RESTOCK PROCEDURE

YES

BEEP DONE

(J)

FIG 17 I

J

TURN ON GASKET INDICATOR LAMP

OPERATOR REMOVE A SCAN GASKET

VERIFY GASKET TO JOB RECORD

GASKET ON → NO → DISPLAY CRT → BEEP → OPERATOR REPLACE GASKET

YES

TURN OFF GASKET INDICATOR LIGHT

OPERATOR FIT GASKET INTO STATION #1 GASKET ALIGNMENT FIXTURE HEAD

VERIFY GASKET IN PLACE

GASKET ON → NO → DISPLAY CRT → BEEP → OPERATOR REPLACE GASKET

YES

K

FIG 17 J

**FIG 17 K**

```
        ( K )
          │
          ▼
┌──────────────────────────┐
│ TURN ON S/C RFM LED      │
└──────────────────────────┘
          │
          ▼
┌──────────────────────────┐
│ TURN OFF RF VACUUM ON S/C│
└──────────────────────────┘
          │
          ▼
┌──────────────────────────────┐
│ OPERATOR MOVE RFM            │
│ TO STATION #1 VACUUM CHUCK   │
└──────────────────────────────┘
          │
          ▼
┌──────────────────────────┐
│ OPERATOR DEPRESS FOOT PETAL │
└──────────────────────────┘
          │
          ▼
┌──────────────────────────┐
│ TURN OFF RF LED S/C      │
└──────────────────────────┘
          │
          ▼
┌──────────────────────────────┐
│ VERIFY VACUUM STATION #1 P/C │◄──────────┐
└──────────────────────────────┘           │
          │                                 │
          ▼                                 │
      ╱VACUUM ON╲    NO   ┌─────────┐   ┌──────────┐
     ╱           ╲──────► │ DISPLAY │──►│ OPERATOR │
     ╲           ╱        │ BEEP    │   │ CORRECT  │
      ╲_____╱         └─────────┘   └──────────┘
          │ YES
          ▼
        ( L )
```

# FIG 17 L

L

TURN OFF VACUUM ON RB S/C

TURN ON P/C STATION #2 VACUUM CHUCK

TURN ON S/C RB LED

OPERATOR MOVE RBM TO STATION #2 VACUUM CHUCK

OPERATOR DEPRESS FOOT PETAL

TURN OFF RB S/C LED

VERIFY VACUUM STATION #2 P/C

VACUUM ON — NO → DISPLAY BEEP → OPERATOR CORRECT

YES

M

M

VERIFY, ASSEMBLE
MECHANICS IN HOME
POSITION IN P/C

HOME
POSITION → NO → RETRACT
HOME

YES

VERIFY INTERLOCK

INTERLOCK
ON → NO → DISPLAY
& BEEP → STOP
ASSEMBLY → CORRECT
PROBLEM

NOTIFY

YES

INSERT GASKET OVER
FRONT MOLD

TIMER

RETRACT STATION #1 GASKET
ASSEMBLY FIXTURE CYL 2

VERIFY FIXTURE IN HOME POSITION

FIXTURE
HOME → NO

YES

N

FIG 17 M

N

SHUTTLE STAGE
POSITION 2  CYL 1

VERIFY SHUTTLE
POSITION 2  O52

SHUTTLE
POSITION
2

SET AXIS ALIGN MOTOR
POSITION 0

VERIFY AXIS ALIGN MOTOR
POSITION  O55

POSITION
0

ALIGN AXIS

INSERT REAR MOLD  CYL 3

START TIMER

TURN OFF FRONT MOLD
VACUUM  VCV 1

O

FIG 17 N

○

**O**

RETRACT ASSEMBLY CYLS

VERIFY REAR MOLD CYL HOME O58

REAR CYL HOME — NO

YES

SHUTTLE STAGE TO POS 1 CYL 1

VERIFY STAGE POS 1 052

STAGE POS 1 — NO

YES

LOWER ASSEMBLY CYL 3

STOP VACUUM REAR MOLD VCV 2

**P**

**FIG 17 O**

P

RETRACT REAR MOLD CYL 2 HOME

VERIFY REAR MOLD CYL 2 HOME O56

REAR MOLD CYL HOME — No

Yes

VERIFY SWEEP ARM HOME OS 1.1

SWEEP ON — No → RETRACT SWEEP CYL 5

SHUTTLE STAGE POSITION 2

VERIFY STAGE POSITION 2  O59

STAGE ON — No

Yes

Q

**FIG 17 P**

**Q**

INDEX NOZZLE TO
STATION HOME

VERIFY NOZZLE HOME
STATION 0 051

NOZZLE ON — NO

YES

INDEX PROPER NOZZLE
TO FILL POINT

TURN ON TILT

INSERT NOZZLE INTO
FILL PORTS CYL 4

VERIFY NOZZLES 0 56

NOZZLE ON — NO

YES

START FILL EXAUST BOSS VCV 3

START RESIN FLOW
NOZZLES 1 - 6

VERIFY FILL COMPLETE SC 12

FILL DONE — NO

YES

**R**

## FIG 17 Q

**FIG 17 R**

R

↓

STOP RESIN FLOW

↓

RETRACT RESIN FILL NOZZLE

↓

VERIFY RETRACT OF NOZZLES SW6

↓

NOZZLE OUT

↓

STOP FILL EXAUST BOSS VCV 13

↓

LOWER LIFT

↓

LOWER TILT

↓

SWEEP ASSEMBLY INTO ACCUMULATOR

↓

RETRACT SWEEP ARM

↓

VERIFY SWEEP HOME

↓

SWEEP ON

↓

SHUTTLE STAGE POSITION 1 CYL 1

↓

VERIFY STAGE POSITION 1 052

↓

STAGE ON

↓

YES ← ANOTHER LENS SAME JOB → NO

H                              C

↓

S

FIG.1B.

129a
126a
128a
121a
129a
117a
130
105a
104a
116a
100a
123a
111a
102a
123a
122a
120a
124a

*f IG.2A.*

*f IG.3A.*

105a   112b   112a   108a
106a   112d
112c
100a
107a   114a

*f IG.4A.*

104a
130a   126a   100a
139a   120a
124a   102a

*f IG.4AA.*

121a
118a   118b
118d
118c
117a   119a

FIG. 2B.

FIG. 3B.

FIG.4B.

FIG.5B.

FIG.5A.

FIG.6A.

FIG.7A.

**FIG. 7AA.**

7AC

7AB

7AB

~ 160a

162a

162a

164a

7AC

**FIG. 7AB.**

162a

162a

164a

**FIG. 7AC.**

~ 160a

164a

FIG. 8B.

FIG. 9B.

FIG. 7B.

FIG. 6B.

FIG.8A.

FIG.10A.

FIG.9A.

100a

110a

102a

112a

116a

114a

ƒIG.10B.

ƒIG.11B.

120a 100a 102a 112a

103a

110

116a 114a 117a

136a

132a 130a

134a ƒIG.12B.

FIG.11A.

FIG.12A.

EP 0 318 164 A2

FIG.13A.

FIG. 13B.

# FIG.14A.

320

330

140a

120a

100a

248a

240a

262

255

257

258a

225a

240a

223a

228

226a

248a

244

266

242a

243a

# FIG.15A.

118a

324

118d

139a

112a

112d

332

100a

FIG.16A.

FIG.16AB.

FIG.16AC.